(19) Europäisches Patentamt
European Patent Office
Office européen des brevets

(11) EP 4 213 628 B1

(12) EUROPEAN PATENT SPECIFICATION

(45) Date of publication and mention of the grant of the patent:
**16.07.2025 Bulletin 2025/29**

(21) Application number: **21778109.5**

(22) Date of filing: **17.09.2021**

(51) International Patent Classification (IPC):
***A01N 53/00*** *(2006.01)* ***A01N 57/12*** *(2006.01)*
***A01P 7/00*** *(2006.01)*

(52) Cooperative Patent Classification (CPC):
(C-Sets available)
**A01P 7/00; A01N 53/00; A01N 57/12** (Cont.)

(86) International application number:
**PCT/EP2021/075630**

(87) International publication number:
**WO 2022/058506 (24.03.2022 Gazette 2022/12)**

# (54) PYRETHROID IN-CAN ADJUVANTED SUSPENSION CONCENTRATES

PYRETHOID-SUSPENSIONSKONCENTRATE MIT ADJUVANTEN

SUSPENSIONS CONCENTRÉES DE PYRÉTHROÏDES AVEC ADJUVANT EN RÉCIPIENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.09.2020 EP 20197058**

(43) Date of publication of application:
**26.07.2023 Bulletin 2023/30**

(73) Proprietor: **Bayer Aktiengesellschaft**
**51373 Leverkusen (DE)**

(72) Inventors:
- **PERIS URQUIJO, Gorka**
**50737 Köln (DE)**
- **KARLE, Manuel**
**42781 Haan (DE)**
- **MALSAM, Olga**
**51503 Rösrath (DE)**
- **COMPANYS GARCIA, Veronica**
**40764 Langenfeld (DE)**
- **MARMUGI, Alice**
**06810 AURIBEAU SUR SIAGNE (FR)**

(74) Representative: **BIP Patents**
**c/o Bayer Intellectual Property GmbH**
**Alfred-Nobel-Straße 50**
**40789 Monheim am Rhein (DE)**

(56) References cited:
**US-A1- 2005 221 991**
**US-A1- 2013 295 152**
**US-B2- 8 129 313**
**US-B2- 9 005 641**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 213 628 B1

(52) Cooperative Patent Classification (CPC): (Cont.)

C-Sets
**A01N 53/00, A01N 25/04, A01N 57/12;**
**A01N 57/12, A01N 25/28**

## Description

The bioavailability of pyrethroids can be finely tuned by choosing the appropriate formulation. For instance, pyrethroid suspension concentrate (SC) formulations where the active ingredients are suspended as colloids in water tend to be less bioavailable when it comes to controlling a relevant pest, than a formulation where the pyrethroid is dissolved in a non-water soluble organic solvent: e.g. emulsifiable concentrate (EC) formulation.

The mammalian toxicological properties of pyrethroids (as well as their insecticidal properties) can also be modulated by the formulation type, so that formulations where the pyrethroid is dissolved (e.g. emulsion concentrate, EC) have a higher acute oral toxicity than those where the active ingredient is present as a finely milled colloidal dispersion (e.g. suspension concentrate, SC) (e.g. suspension concentrate, SC) (Toxicology and Mode of Action of Pyrethroid Insecticides-Chapter 77; Hayes' Handbook of Pesticide Toxicology; 2010 Elsevier).

The corollary of the previous statements is that the improved safety profile of a pyrethroid SC formulation comes at the cost of a more restricted biological efficacy, when compared to a pyrethroid EC formulation, which shows higher oral acute toxicity, but also broader and higher biological efficacy.

Thus, it would be desirable to combine the high insecticidal efficacy properties of pyrethroid EC formulations, with the lower mammalian toxicological profile of pyrethroid SC formulations.

One such approach would be to mix SC pyrethroid formulations with adjuvants capable of increasing the insecticidal efficacy of the milled pyrethroid. SC formulations of pyrethroids can be made more biologically active through the addition of selected chemical adjuvants, for instance by the addition of polymers (WO2012/055810), carboxylate esters (WO 97/12515), oils (Progress in Plant Protection, Vol. 36, Issue 2, pgs 105-107 (1996)) )) In an ideal situation, these adjuvants would be directly co-formulated with the pyrethroid, so that no extra steps must be taken before the formulation is used. That is, it is more desirable to offer the user a ready-to-use (RTU) formulation, also called an in-can adjuvanted formulation, which necessitates no extra addition of adjuvants on the part of the user in order to exploit the full biological potential of the pyrethroid. However, because these adjuvants tend to show a potential for solubilization of the active, a suspension concentrate stored in the presence of polymers, or carboxylate esters, or phosphates is unstable towards crystal growth, as a result of Ostwald ripening (Colloidal Dispersions. Suspensions, Emulsions and Foams; Ian-D. Morrison, Sydney Ross; Wiley-Interscience, 2002. The Colloidal Domain: Where Physics, Chemistry, Biology, and Technology Meet; D. Fennell Evans, Håkan Wennerström; Wiley-VCH; 1999. "Über die vermeintliche Isomerie des roten und gelben Quecksilberoxyds und die Oberflächenspannung fester Körper", W. Ostwald; Zeitschrift fir Physikalische Chemie-Leipzig, 1900, 34, pgs. 495-503 ).

It is known that the instability of fine milled dispersions towards crystal growth in the presence of adjuvants capable of dissolving the milled active can be addressed by encapsulating the adjuvant. It is known that certain oils, which are known to function as pyrethroid adjuvants, can be encapsulated inside polyurea membranes (WO 03/099005, EP1531667). It is also known that mixtures of encapsulated oils and suspension concentrates are resistant towards crystal growth, so that it is possible to use such encapsulated oils in in-can adjuvanted suspension concentrates without affecting the long-term stability of the suspension concentrate, or its biological efficacy. This is indeed the case although the polyurea membrane physically separates the dispersed active ingredient from the adjuvant (WO 03/099005). Therefore, since mixtures of SC formulations with encapsulated adjuvants (so called ZC formulations) behave in their insecticidal properties rather as formulations where the pyrethroid is dissolved, one would expect that the mammalian toxicological properties of such ZC formulations would be similar to those of EC formulations.

We have now surprisingly found that ZC formulations made up of finely milled pyrethroids and encapsulated adjuvants are surprisingly capable of selectively enhancing the insecticidal efficacy of pyrethroid suspension concentrates against insects, without increasing the mammalian toxicity of the formulation. That is, according to the invention, pyrethroid ZC formulations behave like a pyrethroid EC formulation against agricultural relevant pests, while showing significantly improved toxicity against mammals than the corresponding EC formulation.

## Detailed Description

### Definitions

#### a. Pyrethroid

As used herein, the term **"pyrethroid"** refers to substances belonging to the IRAC Mode of Action Group 3A (sodium channel modulator).

Examples of **"pyrethroid"** are Acrinathrin, Allethrin, d-cis-trans Allethrin, d-trans Allethrin, Bifenthrin, Bioallethrin, Bioallethrin S-cyclopentenyl, Bioresmethrin, Cycloprothrin, Cyfluthrin, beta-Cyfluthrin, Cyhalothrin, lambda-Cyhalothrin, gamma-Cyhalothrin, Cypermethrin, alpha-Cypermethrin, beta-Cypermethrin, theta-Cypermethrin, zeta-Cypermethrin, Cyphenothrin [(1R)-trans- isomers], Deltamethrin, Empenthrin [(EZ)- (1R)- isomers], Esfenvalerate, Etofenprox,

Fenpropathrin, Fenvalerate, Flucythrinate, Flumethrin, tau-Fluvalinate, Kadathrin, Pyrethrins (pyrethrum), Halfenprox, Phenothrin [(1R)-trans- isomer], Prallethrin, Resmethrin, Silafluofen, Tefluthrin, Tetramethrin, Tetramethrin [(1R)-isomers], Tralomethrin, Transfluthrin, Permethrin. In a preferred embodiment the pyrethroid is Deltamethrin.

**b. Adjuvant/Adjuvant Mixture**

As used herein, the term **"adjuvant/adjuvant mixture"** refers to

a) **"trialkyl phosphate"** substances exemplified in Figure 1, where R1, R2 and R3 can be equal or different and are any C1-C10 alkyl fragment, preferably a C5-C10 alkyl fragment, highly preferably a C6-C8 alkyl fragment, most highly preferably a C8 alkyl fragment.

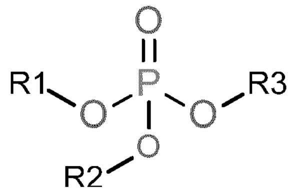

**Figure 1**

Or

b) to a mixture of "trialkyl phosphate" substances mixed with "vegetable oil alkyl esters" in a % w/w ratio ranging from 0.1:99.9 to 99.9:0.1, preferably 0.5:99.5 to 99.5:0.5, most preferably 1:99 to 99:1. As used herein, the term "vegetable oil alkyl esters" refers to substances which can customarily be employed in agrochemical formulations as penetration enhancers.

In an alternative embodiment b) to a mixture of "trialkyl phosphate" substances mixed with "vegetable oil alkyl esters" in a % w/w ratio ranging from 0.1:99.9 to 99.9:0.1, 1:99 to 90:10, more preferably 5:95 to 80:20, even more preferably 7.5:92.5 to 70:30, most preferably 10:90 to 50:50. As used herein, the term "vegetable oil alkyl esters" refers to substances which can customarily be employed in agrochemical formulations as penetration enhancers.

Examples of **"trialkyl phosphate"** are trimethyl phosphate, triethyl phosphate, tripropyl phosphate, tributyl phosphate, tripentyl phosphate, trihexyl phosphate, triheptyl phosphate, trioctyl phosphate, tris(2-ethyl hexyl) phosphate, trinonyl phosphate, tridecyl phosphate, wherein tris(2-ethylhexyl) phosphate is most preferred..

Examples of **"vegetable oil alkyl esters"** are

a. linear and/or branched alkyl esters of C 10-C24 saturated fatty acids of vegetable or mineral origin: e.g. methyl, ethyl, propyl, butyl, pentyl, hexyl, isopropyl, isobutyl, isopentyl, 2-ethyl hexyl esters of capric acid, undecylic acid, lauric acid, tridecylic acid, myristic acid, pentadecylic acid, palmitic acid, margaric acid, stearic acid, nonadecylic acid, arachidic acid, heneicosylic acid, behenic acid, tricosylic acid, lignoceric acid.

b. linear and/or branched alkyl esters of C 10-C24 usaturated fatty acids of vegetable or mineral origin: e.g. methyl, ethyl, propyl, butyl, pentyl, hexyl, isopropyl, isobutyl, isopentyl, 2-ethyl hexyl esters of $\alpha$-Linolenic acid, linoleic acid, linolelaidic acid, palmitoleic acid, oleic acid, erucic acid.

c. alkyl esters of vegetable oils such as sunflower oil, rapeseed oil, corn oil, soybean oil, rice bran oil, olive oil. Examples of these are

i. Rapeseed Oil Methyl Ester, soybean oil methyl ester, sunflower oil methyl ester, castor oil methyl ester, corn oil methyl ester or substances classified under the CAS Number 67762-38-3 (Fatty acids, C16-18 and C18-unsatd., Me esters)

ii. rapeseed oil ethyl ester, soybean oil ethyl ester, sunflower oil ethyl ester, castor oil ethyl ester, corn oil ethyl ester.

d. mixtures of two or more of the above

Most preferred the vegetable oil alkyl ester is rape seed oil methyl ester, while the most preferred mixture of trialkylphosphat and vegetable oil alkyl ester is tris(2-ethylhexyl) phosphate and rape seed oil methyl ester.

### c. Dispersant

As used herein, the term **"dispersant"** refers to substances known in the state of the art to stabilize solid colloids of active ingredient. In the context of the present invention, "dispersant" refers to surfactants used in the manufacturing of pyrethroid suspension concentrate formulations. Some of the below described dispersantsor chemically similar compounds may also serve as emulsifiers when being used in the context of this invention as emulsifiers for liquid organic compounds for the preparation of capsule suspension formulations. That surfactants of the same chemical class may serve to prepare dispersions or emulsions, depending on the solvent and/or compound to be stabilized, is known in the state of the art (Chemistry and Technology of Surfactants, Ed. Richard J. Farn; 2006, Blackwell). Suitable dispersants in the context of the present invention are selected from the group comprising:

c1) dispersants of the polycarboxylate type, for example those such as hydrophobically modified comb-like polymers, for example polyacrylic acid, polymethacrylic acid, polymaleic acid, polymaleic anhydride, a copolymer of maleic acid or maleic anhydride with an olefin (such as isobutylene or diisobutylene), a copolymer of acrylic acid and itaconic acid, a copolymer of methacrylic acid and itaconic acid, a copolymer of maleic acid or maleic anhydride and styrene, , a copolymer of maleic acid or maleic anhydride and sulfonylated styrene, a copolymer of acrylic acid and methacrylic acid, a copolymer of acrylic acid and methacrylate, a copolymer of acrylic acid and vinyl acetate, a copolymer of styrene and methacrylic acid, a copolymer of sulfonylated styrene and methacrylic acid, modified copolymers of styrene and methacrylic acid, modified copolymers of sulfonylated styrene and methacrylic acid, a copolymer of maleic acid or maleic anhydride and acrylic acid, an N-methyl fatty acid (e.g. $C_8$-$C_{18}$)-sarcosinate, a carboxylic acid such as a resin acid or a fatty acid (e.g. $C_8$-$C_{18}$) or a salt of such a carboxylic acid. The abovementioned copolymers may also be in the form of their salts, e.g. alkali metal salts (preferably Li, Na, K), alkaline earth metal salts (preferably Ca, Mg), ammonium or various amines. Examples of those described above include Geropon T/36, Geropon TA/72, Tersperse 2700, Atlox Metasperse 550 S, Geropon Ultrasperse, Narlex D-72, Versa TL3, Agrilan 789 Dry, Alcoguard 7100/Agrilan 777, Alcosperse 747. Additionally, the abovementioned copolymers may also be ethoxylated. Examples of these materials are Atlox 4913, Geropon DA, Step Flow 4000, Tersperse 2500.

c2) dispersants selected from the group consisting of salts of sulfated formaldehyde condensation products with alkylaromatics, e.g. MORWET D-425 (from Akzo Nobel); OPARYL DT 120, OPARYL DT 201, OPARYL DT 530 (from Bozzetto); TERSPERSE 2020 (from Huntsman) and salts of sulfated formaldehyde condensation products with ditolyl ether (e.g. BAYKANOL SL, from Levaco) and salts of sulfated formaldehyde condensation products with cyclohexanone (e.g. LUCRAMUL DAC 210, from Levaco), and

c3) dispersants selected from the group of the lignosulfonates and salts thereof consisting of Borresperse NA, Borresperse 3A, Ultrazine NA, Ufoxane 3A, Vanisperse CB, Marasperse AG, MARASPERSE N 22, MARASPERSE C 21, MARASPERSE CBOS-4, WAFEX CA122 and Borresperse CA from Borregaard; KRAFTSPERSE EDF-350, KRAFTSPERSE 25M, KRAFTSPERSE EDF-450, REAX 100M, REAX 83A, REAX 85A, REAX 88A, REAX 88B, REAX 907, REAX 910, POLYFON H, POLYFON O and POLYFON T from Ingevity; AGRINOL DN 19 and Agrinol C12 from Tembec, and

c4) dispersants selected from the group consisting of alkylaryl sulfonates and salts thereof, for example, AEROSOL OS (from Solvay); AGNIQUE ANS 3DNP-U, AGNIQUE ANS 4DNP, AGNIQUE NSC 2NP-U, NEKAL BX DRY (from BASF); MORWET B, MORWET DB, MORWET EFW, MORWET IP (from Akzo Nobel); OPARYL MT 704, OPARYL MT 800, OPARYL MT 804 (from Bozzetto); RHODACAL BX 78, SUPRAGIL WP, RHODACAL 60 BE, RHODACAL 70/B (from Solvay); SURFOM HRB (from Oxiteno), NANSA EVM 40/2NDL, ANSA EVM 50/DBC, NANSA EVM 50/BB (from Innospec); NINATE 100L, NINATE 50 H (from Stepan); ATLOX 3467 (from Croda) and

c7) dispersants from the group of sulphated products of the reaction of alkyl¬phenols with ethylene oxide, or with propylene oxide, or with a mixture of ethylene oxide/propylene oxide, products of the reaction of arylalkylphenols with ethylene oxide, or with propylene oxide, or with a mixture of ethylene oxide/propylene oxide and salts thereof, for example, SOPROPHOR 4D384, STEOL TSP 16, LUCRAMUL SPS 16, SURFOM SC 8384, TERSPERSE 2218; and alkyl alcohol ethoxylate sulfates and salts thereof, for example, GENAPOL LRO, AGNIQUE SLES grades, ALKOPON CN, ENVIOMET WT 4062, RHODAPEX ESB 70, and

c8) dispersants from the group of the alkyl sulfonated esters and salts thereof, for example Aerosol OT (pure or in different concentrations in different solvents), Enviomet EM5665, Geropon DOS (pure or in different concentrations in different solvents), Synergen W10, Triton GR 7ME, or Agnique SLS (pure or in different concentrations in different solvents), Genapol LSS, Stepanol WA-100, or Witconate NAS-8/AOS-10, WITCONATE AO5-12 (alpha-olefin

sulfonate), and

c9) dispersants from the group of phosphorylated products of the reaction of alkyl¬phenols with ethylene oxide, or with propylene oxide, or with a mixture of ethylene oxide/propylene oxide, or phosphorylated products of the reaction of arylalkylphenols with ethylene oxide, or with propylene oxide, or with a mixture of ethylene oxide/propylene oxideand salts thereof, for example, DISPERSOGEN LFH, DISPERSOGEN TP 160 (from Clariant); LUCRAMUL PPS 16, LUCRAMUL PPS K 16 (from Levaco); PHOSPHOLAN PHB 14 (from Akzo Nobel); SOPROPHOR 3 D 33, SOPROPHOR TS 20-F, SOPROPHOR FL, SOPROPHOR FLK (from Solvay); STEPFAC TSP-PE, STEPFAC TSP PE-K (from Stepan); SURFOM 1323 SC, SURFOM 1325 SC (from Oxiteno); TERSPERSE 2222 (from Huntsman); and alkyl alcohol ethoxylate phosphates, for example, EMPIPHOS 03 D (from Akzo Nobel); MULTITROPE 1214, Crodafos series, Atphos 3226 (from Croda); PHOSPHOLAN PE 169 (from Akzo Nobel); RHODAFAC RS-410, RHODAFAC RS-710, RHODAFAC TD 20 F (from Solvay); SERVOXYL VPDZ 20/100 (from Elementis); STEPFAC 8180, STEPFAC 8181 (from Stepan); CRAFOL AP261 (from BASF); GERONOL CF/AR (from Clariant).

c10) dispersants from the group of the products of the reaction of alkylphenols with ethylene oxide, or with propylene oxide, or with a mixture of ethylene oxide/propylene oxide, products of the reaction of arylalkylphenols with ethylene oxide, or with propylene oxide, or with a mixture of ethylene oxide/propylene oxide, for example, LUCRAMUL EP 12-015, LUCRAMUL PS series (from Levaco); EMULSOGEN TS series (from Clariant), Soprophor CY/8, SOPROPHOR TS series, SOPROPHOR 796/P (from Solvay), MAKON TSP series (from Stepan), and

c11) dispersants from the group of the the products of the reaction of alkyl alcohols with ethylene oxide, or with propylene oxide, or with a mixture of ethylene oxide/propylene oxide, for example, LUTENSOL XP series, LUTENSOL XL series, LUTENSOL ON series, LUTENSOL AO series, LUTENSOL TO series, AGNIQUE TDA series, AGNIQUE KE 3551, AGNIQUE KE 3552, (from BASF); GENAPOL EP series, GENAPOL ID series, GENAPOL XS series, GENAPOL UD series, GENAPOL LA series, GENAPOL C series, GENAPOL OX series, GENAPOL X series, EMULSOGEN EPN series, EMULSOGEN 3510, EMULSOGEN EP 4901, Synergen 848 (from Clariant); ATLAS G 5000, ATLAS G 5002L, ATLOX 4912, ATLOX AL3382, ATLOX 4894, ATLOX 4991, SYNPERONIC 13/6, SYNPERONIC 13/10, SYNPERONIC A series (from Croda), ECOSURF EH series (from Dow), Rhodasurf 840, Rhodasurf 870, Rhodasurf BC-610, Rhodasurf BC-720, Rhodasurf CC-10, Rhodasurf DA-630, Antarox B/848 (from Solvay), BIO-SOFT® series, MAKON DA series, MAKON TD series, TOXIMUL 8315, TOXIMUL 8320, TOXIMUL 8325, TOXIMUL 8350 (from Stepan), BREAK-THRU VIBRANT, SURFYNOL 420, SURFYNOL 440, SURFYNOL 465 (from Evonik), Lucraum HOT, Lucramul L 06, Lucramul AG 412 (from Levaco), Tween® series, and

c12) dispersants from the group of the fatty acid ethoxylate/propoxylate derivatives, for example, Agnique CSO series, Agnique RSO 60 (from BASF), Alkamuls A, Alkamuls 696, Alkamuls BR, ALKAMULS EL-620, Alkamuls EL-719, ALKAMULS OR/36, ALKAMULS OR/40, ALKAMULS R-81, ALKAMULS RG-20 (from Solvay), EMULSOGEN EL 300, EMULSOGEN EL 360, EMULSOGEN EL 400, EMULSOGEN VO 13 (from Clariant), Etocas 10, Crovol CR70 (from Croda), LUCRAMUL CO 11, LUCRAMUL CO 30, LUCRAMUL CO 40, LUCRAMUL SO 21 (from Levaco), TOXIMUL 8240, TOXIMUL 8242 (from Stepan), and

c13) dispersants from the group of the alkylene oxides di-tri block copolymers, whose molecular weight lies between 200-10000 Dalton, for example the Synperonic® PE series (from Croda), the Pluronic PE, the Pluronic RPE series (from BASF), the Genapol PF series (from Clariant), and

c14) dispersants from the group of the betaines, for example, Adinol CT95SD, Hostapon TPHC; Geropon T-77; Hostapur OSB; Witconate AOS; Agrho FKC 1000; Mackam CAB 818, and

c15) dispersants from the group of the alkyl polyglucosides for example, TRITON CG-50/110, TRITON CG-600, TRITON 425-650 (from Dow), AGNIQUE PG 8105, AGNIQUE PG 8107 (from BASF), and

c16) dispersants from the group of the partially hydrolyzed polymers of vinyl alcohol/pyrrolidone, for example the Sokalan® K series, Sokalan VA 64 (from BASF), the Agrimer series (from Ashland)

Preferably, suitable dispersantare selected from the group comprising dispersants c1), c2), c3), c7), c8), c9), c13) and c16).

Further preferably, suitable dispersantare selected from the group comprising dispersants c1), c2), c3), c7), c8), and c13).

Most preferably, suitable dispersantdispersants are selected from the group comprising dispersants c1), c2), c3),

c7), and c8).

The above-described dispersantcan be used either individually or in combination, preference being given to combinations of the dispersants selected from the group of dispersants c1), c2), c7), c8), c9), c13) and c16).

The above-described dispersants can be used either individually or in combination, further preference being given to combinations of the dispersants selected from the group of dispersants c1), c2), c3), c7), c8), and c13).

The above-described dispersants can be used either individually or in combination, even further preference being given to combinations of the dispersants selected from the group of dispersants c1), c2), c3), c7), and c8).

The above-described dispersants can be used either individually or in combination, most preference being given to combinations of the dispersants selected from the group of dispersants c1) and c2),

**d) Wetting Agent**

As used herein, the term **"wetting agent"** refers to substances known in the state of the art to enhance the wetting of leaf surfaces of plants. These materials are particularly able to dynamically reduce the surface tension of water, so that after 100 ms the surface tension has been reduced to <50 mN/m.

Suitable wetting agents are all substances which are customarily used for this purpose in agrochemical compositions. Preference is given to alkylated siloxanes, particularly to alkoxylated alkylated siloxane derivatives, further preferably to ethoxylated/propoxylated alkylated siloxane derivatives. Examples of the above-mentioned compounds are the Silwet line products of Momentive, and the Break-Thru® line products of Evonik. Particularly preferred are Silwet HS 312, Silwet HS 604, Break-Thru® S200, Break-Thru® S240, Break-Thru® S279, Break-Thru® S301, Break-Thru® SD 260.

**e) Rheological Modifier**

As used herein, the term **"rheological modifier"** refers to substances known in the state of the art to stabilize dispersions of active ingredient by affecting the rheological properties of the dispersion.

Rheology modifier e1) is preferably selected from the group of modified cellulose ethers, more preferably from the group of methyl celluloses and most preferred is hydroxypropyl methylcellulose HPMC, for example Vivapur® K 15M from JRS Pharma.

Rheology modifier e2) is preferably selected from the group of hydrophilic synthetic amorphous silica, hydrophobic synthetic amorphous silica, as well as fumed and precipitated silica, for example any product from the Aerosil® or Sipernat product line from Evonik.

Preferred rheology modifiers e2) are Aerosil®200, or Sipernat 22 from Evonik.

Rheology modifier e3) is preferably selected from the group of modified polysaccharides and polysaccharide gums (all other than e1)) (e.g. gellan gum, jelutong gum, xanthan gum, guar gum, gum arabic, gum tragacanth, gum karya, tara gum, locust gum, agar agar, carrageenan, alginic acid, alginates (e.g. sodium, potassium, ammonium, or calcium alginates)), starch and its derivatives.

Preferred rheology modifiers e3) are polysaccharide gums. The rheology modifier is in particular xanthan gum, e.g. Rhodopol® G, Rhodopol® 23 from Solvay or Satiaxane® CX911 from Cargill.

Mixtures of any of the aforementioned rheology modifiers e1) - e3) are also suitable, further preferred are mixtures of rheology modifiers e2) and e3), most preferred are rheology modifiers e3).

Excluded as rheological modifiers according to the invention are clays including montmorillonite, bentonite, smectite, sepiolite, attapulgite, laponite, hectorite. Examples are VANATURAL®,Veegum® R, Van Gel® B, Bentone® CT, HC, EW, Pangel® M100, M200, M300, S, M, W, Attagel® 50, Laponite® RD, VEEGUM®, Attaclay®, VAN GEL®.

**f) Isocyanate**

As used herein, the term "**isocyanate**" refers to substances typically employed in the preparation of capsules by the interfacial polymerization method. Suitable isocyanates in the context of the present invention are selected from the groups comprising:

f1) alkyl phenyl isocyanates, particularly a methyl phenyl(toluyl) isocyanates. For example, 1,4-Phenylendiisocyanate; 1,5-Naphthylendiisocyanate; 2,4- and/or 2,6-Toluylendiisocyanate (TDI); 1,3- and/or 1,4-Bis-(2-isocyanatoprop-2-yl)-benzol (TMXDI); 1,3-Bis(isocyanatomethyl)benzol (XDI). Commercial products of this class are for example products from the Desmodur® E, Desmodur® T, Desmodur® L, Desmodur® IL series from Covestro.

f2) methylene diphenyl isocyanates. For example, 2,2'- and/or 2,4'- and/or 4,4'-Diphenylmethandiisocyanate (MDI). Commercial products of this class are for example Desmodur® 44M, Desmodur® 44MC, Desmodur® 44V40L, Desmodur® 44V70L, Desmodur® LS2424, Desmodur® 2460M, Desmodur® CD-S, Baymidur K 88, the Desmodur®

VK series, the Desmodur® VL series from Covestro.

f3) linear alkyl isocyanates, particularly hexamethylene isocyanates. For example, 1,4-Butylendiisocyanate; 1,6-Hexamethylendiisocyanate (HDI); 2,2,4 and/or 2,4,4-Trimethylhexamethylendiisocyanate; alkyl-2,6-diisocyanatohexanoate (Lysindiisocyanate) with linear/branched alkyl groups between 1 to 8 carbon atoms; 4-Isocyanatomethyl-1, 8-octandiisocyanate (Nonanetriisocyanate). Commercial products of this class are for example products from the Desmodur® N series, Desmodur® XP 2675, Desmodur® XP 2840, Desmodur® XP 2675 of Covestro.

f4) cyclic alkyl isocyanates, particularly isophorone isocyanates. For example Isophoronediisocyanate (IPDI); Bis-(4,4'-isocyanatocyclohexyl)methane (H12-MDI); 1,4-Cyclohexylendiisocyanat. Commercial products of this class are for example products from the Desmodur® Z series of Covestro, Desmodur® XP 2565, Desmodur® XP 2489, Desmodur® XP 2838, Desmodur® XP 2763.

The isocyanates f1-f4 comprise mono, di, and/or polyisocyanate mixtures, or the product of a reaction of mixtures of isocyanates.

Additionally, modifications like for example allophanates, uretdione, urethane, isocyanurate, biuret, iminooxadiazindion or oxadiazintrione containing structures, are suitable components for the building of the diiosocyanates from groups f1-f4. Multiply functionalized substances like polymeric MDI (pMDI like for instance PAPI-27 from Dow or Desmodur® 44V20 types from Covestro) are suitable components for the building of the diisocyanates in groups f1-f4.

Preferred are modifications with an isocyanate functionality (NCO) of 2.0 to 6.0.

More preferred are modifications with an isocyanate functionality (NCO) of 2.0 to 4.5.

Particularly preferred are modifications with an isocyanate functionality (NCO) of 2.3 to 4.2.

More particularly preferred are modifications with an isocyanate functionality (NCO) of 2.3 to 3.8.

Most particularly preferred are modifications with an isocyanate functionality (NCO) of 2.4 to 3.0.

Preferred isocyanate/polyisocyanate functional group content is between 3 und 50 %w/w, more preferred between 10 und 40 % w/w, particularly preferred between 15 % und 35 %w/w and most particularly preferred between 20 und 35 %w/w.

Mixtures of any of the aforementioned isocyanates f1) - f4) are also suitable.

Most preferred are mixtures of isocyanates from groups f1)-f2)

**g) Cross linker**

As used herein, the term "**cross linker**" refers to substances known in the art to serve as cross linkers during polyurea interfacial polymerization of isocyanates.

Examples of such substances are aliphatic diamines, aliphatic triamines, aryl diamines, aryl triamines. The amines can be primary, or secondary.

Examples are Ethylendiamine (EDA), Diethylentriamine (DETA), Monoisopropylamine, 4-Aminopyridine (4-AP), n-Propylamine, Ethylen- or Propylenimin-based Polyaziridine, Triethylenetetraamine (TETA), Tetraethylenpentamine, 2,4,4'-Triaminodiphenylether, Bis(hexamethylen)-triamine, Trimethylendipiperidine (TMDP), Guanidine carbonate (GUCA), Phenylendiamine, Toluendiamine, Pentamethylenhexamine, 2,4-Diamino-6-methyl-1,3,5-triazine, 1,2-Diaminocyclohexane, 4,4'-Diaminodiphenylmethane, 1,5-Diaminonaphthalenisophorondiamine, Diaminopropane, Diaminobutane, Piperazine, Aminoethylenepiperazine (AEP), Poly(propyleneglycol)-bis(2-aminopropylether) or o,o'-Bis(2-aminopropyl)polypropylenglycol-polyethylenglycol-polypropylenglycol, Hexamethylendiamine, Bis-(3-aminopropyl)amine, Bis-(2-methylaminoethyl)methylamine, 1,4-Diaminocyclohexanw, 3-Amino-1-methyl-aminopropane, N-Methyl-bis-(3-aminopropyl) amine, 1,4-Diamino-n-butane und 1,6 Diamino-n-hexane.

Preferred are primary aliphatic diamines, and primary aliphatic triamines.

Particularly preferred are ethylene diamine, trimethylene diamine, tetramethylene diamine, pentamethylene diamine, hexamethylene diamine, diethylene triamine, bis(2-aminoethyl)amine, bis(3-aminopropyl)amine, bis(4-aminobutyl)amine, bis(5-aminopentyl)amine, bis(6-aminohexyl)amine.

Further particularly preferred are hexamethylene diamine, diethylene triamine, bis(6-aminohexyl)amine.

Examples of cross linkers are also primary and secondary, as well as aromatic dialcohols and polyalcohols. Examples are ethanediol, propanediol (1,2), propanediol (1,3), butanediol (1,4), pentanediol (1,5), hexanediol (1,6), glycerin and 1,2-propanediol.

Examples of cross linkers are also aminoalcohols. Examples are triethanolamine, monoethanolamine, triisopropanolamine, diisopropylamine, N-methylethanolamine, N-methyl-diethanolamine.

Another example is the use of water as a reagent which releases the cross linker. This occurs upon the reaction of isocyanate with water, by means of which an amine is released.

The amount of cross-linker **g)** to isocyanate **f)** is kept in a certain ratio, generally between 0 to 0.4 times the weight

of cross linker **g)** to weight of isocyanate **f).**

Preferred is the ratio between 0 to 0.3 times the weight of cross linker **g)** to weight of isocyanate **f).**

Most preferred is the ratio between 0 to 0.2 times the weight of cross linker **g)** to weight of isocyanate **f).**

**h) Emulsifier**

As used herein, the term **"emulsifier"** refers to substances known in the state of the art to stabilize emulsions. In the context of the present invention, "emulsifier" refers to surfactants used in the manufacturing of adjuvant capsule suspension formulations. Some of the below described emulsifiers may also serve as dispersants when being used in the context of this invention as dispersants for the preparation of suspension concentrate formulations. That surfactants of the same chemical class may serve to prepare dispersions or emulsions depending on the system/formulation and compounds used in is known in the state of the art (Chemistry and Technology of Surfactants, Ed. Richard J. Farn; 2006, Blackwell). Suitable emulsifiers in the context of the present invention are selected from the groups comprising:

h1) emulsifiers from the group of the alkylene oxides di-tri block copolymers, whose molecular weight lies between 200-10000 Dalton, for example the Synperonic® PE series (from Croda), the Pluronic PE, the Pluronic RPE series (from BASF), the Genapol PF series (from Clariant), andh2) emulsifiers from the group of the hydrophilic synthetic amorphous silica, hydrophobic synthetic amorphous silica, as well as fumed and precipitated silica, for example any product from the Aerosil® or Sipernat product line from Evonik, and

h3)emulsifiers from the group of the partially hydrolyzed polymers of vinyl alcohol/pyrrolidone, for example the Sokalan® K series, Sokalan VA 64 (from BASF), the Agrimer series (from Ashland), the Poval series (from Kuraray) , and

h4) emulsifiers from the group of products of the reaction of alkylphenols with ethylene oxide, or with propylene oxide, or with a mixture of ethylene oxide/propylene oxide, products of the reaction of arylalkylphenols with ethylene oxide, or with propylene oxide, or with a mixture of ethylene oxide/propylene oxide, for example, LUCRAMUL EP 12-015, LUCRAMUL PS series (from Levaco); EMULSOGEN TS series (from Clariant), Soprophor CY/8, SOPROPHOR TS series, SOPROPHOR 796/P (from Solvay), MAKON TSP series (from Stepan), and

h5) emulsifiers from the group of sulphated products of the reaction of alkylphenols with ethylene oxide, or with propylene oxide, or with a mixture of ethylene oxide/propylene oxide, products of the reaction of arylalkylphenols with ethylene oxide, or with propylene oxide, or with a mixture of ethylene oxide/propylene oxide, for example, SOPROPHOR 4D384, STEOL TSP 16, LUCRAMUL SPS 16, SURFOM SC 8384, TERSPERSE 2218, and

h6) emulsifiers from the group of phosphorylated products of the reaction of alkylphenols with ethylene oxide, or with propylene oxide, or with a mixture of ethylene oxide/propylene oxide, products of the reaction of arylalkylphenols with ethylene oxide, or with propylene oxide, or with a mixture of ethylene oxide/propylene oxide, for example, DISPERSOGEN LFH, DISPERSOGEN TP 160 (from Clariant); LUCRAMUL PPS 16, LUCRAMUL PPS K 16 (from Levaco); PHOSPHOLAN PHB 14 (from Akzo Nobel); SOPROPHOR 3 D 33, SOPROPHOR TS 20-F, SOPROPHOR FL, SOPROPHOR FLK (from Solvay); STEPFAC TSP-PE, STEPFAC TSP PE-K (from Stepan); SURFOM 1323 SC, SURFOM 1325 SC (from Oxiteno); TERSPERSE 2222 (from Huntsman).

h7) emulsifiers from the group of lignosulfonates and salts thereof consisting of Borresperse NA, Borresperse 3A, Ultrazine NA, Ufoxane 3A, Vanisperse CB, Marasperse AG, MARASPERSE N 22, MARASPERSE C 21, MARASPERSE CBOS-4, WAFEX CA122 and Borresperse CA from Borregaard; KRAFTSPERSE EDF-350, KRAFTSPERSE 25M, KRAFTSPERSE EDF-450, REAX 100M, REAX 83A, REAX 85A, REAX 88A, REAX 88B, REAX 907, REAX 910, POLYFON H, POLYFON O and POLYFON T from Ingevity; AGRINOL DN 19 and Agrinol C12 from Tembec, and

Preferred are emulsifiers selected from the groups comprising h1), h2), h3), h7).

Particularly preferred are emulsifiers selected from the groups comprising h1), h3), h7).Most preferred are emulsifiers selected from the groups comprising h3), h7).

Most particularly preferred are emulsifiers selected from the group comprising of h3)
Mixtures of the aforementioned emulsifiers h1)-h7) are also suitable.

Most preferred are mixtures of emulsifiers from the groups comprising h3) and h7).

**i) pH Buffer**

As used herein, the term **"pH Buffer"**refers to substances known in the state of the art capable of maintaining a defined pH in an aqueous solution. Examples of such buffers are listed in the CRC Handbook of Chemistry and Physics (ISBN: 1-4987-5428-7).

Preferred are acetic acid, citric acid, formic acid, phosphoric acid, sulfuric acid.

Further preferred are acetic acid, citric acid.

Most preferred is citric acid.

**j) Antifoam**

As used herein, the term **"antifoam"** refers to substances known in the state of the art capable of prevent excess foaming in a formulation during manufacturing and/or application by the customer. Suitable defoaming performance is such that the FAO limits for foam persistence codified in the CIPAC Method 47.3 are maintained by agrochemical formulations at all times of its useful life.

Suitable antifoams are all substances which are customarily used for this purpose in agrochemical compositions.

Preference is given to silicone oils and magnesium stearate.

**k) Biocide**

As used herein, the term **"biocide"** refers to substances known in the state of the art capable of preventing microbial/fungal growth in water-based formulations.

Suitable preservatives are all substances which are customarily used for this purpose in agrochemical compositions of this type. Examples which may be mentioned are Preventol® (from Lanxess) and Proxel GXL®.

**l) Antifreeze**

As used herein, the term **"antifreeze"** refers to substances known in the state of the art capable of preventing freezing of agrochemical formulations. Suitable antifreeze substances which are customarily used for this purpose in agrochemical compositions are propylene glycol, glycerin and urea.

**m) Antioxidant**

As used herein, the term "antioxidant" refers to substances known in the state of the art capable of preventing oxidation of agrochemical formulations. Suitable antioxidant substances which are customarily used for this purpose in agrochemical compositions are butylhydroxytoluene (BHT), and suitable derivatives thereof.

**In-Can Adjuvanted ZC Pyrethroid Formulation Compositions of the Present Invention**

The In-Can Adjuvanted Pyrethroid ZC formulations are exemplified as shown below:

One embodiment of the present invention contains a **pyrethroid** formulated as suspension concentrate in the concentration range of **0.5-20 % w/w,**

preferably in the concentration range of **1-15%,**

most preferably in the concentration range **2-10 %w/w**

An alternative embodiment of the present invention contains a pyrethroid formulated as suspension concentrate in the concentration range of 0.5-20 % w/w,

preferably in the concentration range of 0.75-15%,

most preferably in the concentration range 1-10 %w/w

One embodiment of the present invention contains an encapsulated **adjuvant/adjuvant mixture** in the concentration range of **1-60 %w/w,**

preferably in the concentration range of **2-50 %w/w,**

more preferably in the concentration range **4-40 %w/w,**

most preferably in the concentration range **5-30 %w/w,**

even most preferably in the concentration range 6-30 %w/w,

Another embodiment of the present invention contains a **dispersant** in the concentration range of **1-30 % w/w,**

preferably in the concentration range of **1.5-25%,**

most preferably in the concentration range **2-20 %w/w**

An alternative embodiment of the present invention contains a dispersant in the concentration range of 0.5-10 % w/w,

preferably in the concentration range of 1-7.5%,

most preferably in the concentration range 1.3-6 %w/w

Another embodiment of the present invention optionally contains a **wetting agent** in the concentration range of **0-10** %w/w,

preferably in the concentration range of **0-7.5 % w/w,**

most preferably in the concentration range of **0-5% w/w.**

Another embodiment of the present invention must contain a **wetting agent** in the concentration range of **1-10** % w/w,

preferably in the concentration range of **1-7.5 % w/w,**

most preferably in the concentration range of **1-5% w/w.**

Another embodiment of the present invention contains an **isocyanate** in the concentration range of **0.1-2.0% w/w,**

preferably in the concentration range of **0.2-1.5% w/w,**

more preferably in the concentration range **0.2-1.25% w/w,**

most preferably in the concentration range **0.2-1.0% w/w.**

An alternative embodiment of the present invention contains an isocyanate in the concentration range of 0.01-2.0% w/w,

preferably in the concentration range of 0.01-1.5% w/w,

most preferably in the concentration range 0.02-1.25% w/w,

particularly most preferably in the concentration range 0.04-1.0% w/w.

Another embodiment of the present invention contains a cross-linker in the concentration range of **0.05-2.0% w/w,**

preferably in the concentration range of **0.1-1.5% w/w,**

more preferably in the concentration range **0.15-1.0% w/w,**

most preferably in the concentration range **0.2-0.8% w/w.**

An alternative embodiment of the present invention contains a cross-linker in the concentration range of 0.005-2.0% w/w,

preferably in the concentration range of 0.01-1.0% w/w,

more preferably in the concentration range 0.02-0.5% w/w,

most preferably in the concentration range 0.04-0.1% w/w.

An alternative embodiment of the present invention contains no **cross-linker.**

Another embodiment of the present invention contains an **emulsifier** in the concentration range of **0.001-0.5% w/w,**

preferably in the concentration range of **0.005-0.45% w/w,**

most preferably in the concentration range **0.01-0.30% w/w,**

particularly most preferably in the concentration range **0.02-0.3% w/w,**

even most particularly preferably in the concentration range **0,05-0,41% w/w.**

Another embodiment of the present invention contains a **rheology control agent** in the concentration range of **0.01%-0.8% w/w,** preferably 0.4-0.7 % w/w.

Another embodiment of the present invention optionally contains a **pH buffer agent** in the concentration range of **0-1% w/w.** Preferably the pH buffer agent is mandatory and present in **0.01-1 % w/w.**

Another embodiment of the present invention also contains an **antifoam** as in the concentration range of **0.01-0.1 % w/w.**

Another embodiment of the present invention also contains a **biocide** as in the concentration range of **0.01-0.2% w/w.**

Another embodiment of the present invention also contains an **antifreeze** as in the concentration range of **1-10% w/w.**

Another embodiment of the present invention also contains an **antioxidant** as in the concentration range of 0.01-0.1% w/w.

The compositions of the present invention contain **water** as filler to **100% w/w.**

**Preparation of In-Can Adjuvanted Pyrethroid ZC Formulations**

**Description**

An embodiment of the present invention is a process for the preparation of ZC agrochemical formulations. In-can adjuvanted pyrethroid formulations are prepared by mixing in the desired ratios the following formulations:

- Pyrethroid Suspension Concentrate (SC)
- Adjuvant Capsule Suspension (CS)

The resulting formulation is referred to as a ZC formulation.

The pyrethroid SC formulations may be isolated and stored for further use or prepared in situ shortly before mixing with the corresponding adjuvant CS formulations in order to produce ZC formulations according to the invention (Table 8). In situ preparation of the pyrethroid SC formulation means that the water content of the SC pyrethroid formulation was not filled to 100% as described in Table 2, but rather the water content was reduced to accommodate the concentration of the CS formulation with which the SC formulation is to be mixed to produce a ZC formulation according to the invention.

An embodiment of the present invention is a mixture of SC:CS in the range of a **99:1% w/w to a 1:99** % **w/w** ratio

Preferred is a mixture SC:CS in the range of a **98:2% w/w to a 2:98% w/w** ratio

Particularly preferred is a mixture SC:CS in the range of a **97:3% w/w to a 3:97% w/w** ratio

Further particularly preferred is a mixture SC:CS in the range of a **96:4% w/w to a 4:96% w/w** ratio

Even further particularly preferred is a mixture SC:CS in the range of a 95:5% w/w to a 30:70% w/w ratio

Most preferred is a mixture SC:CS in the range of a **90:10% w/w to a 30:70% w/w** ratio

**Materials used in the examples**

**Adjuvant/Adjuvant Mixture**

| Trade name | CAS No. | Manufacturer/ supplier | Chemical name |
|---|---|---|---|
| Disflamol TOF | 78-42-2 | Lanxess | Tris(2-ethylhexyl) phosphate |
| Phytorob 926.65 | 85586-25-0 | Oleon | Fatty acids, rape-oil, Me esters |
| Ethyl Oleate | 111-62-6 | Sigma-Aldrich | Ethyl oleate |

**Dispersant**

| Trade name | CAS No. | Manufacturer/ supplier | Chemical name |
|---|---|---|---|
| Morwet D-425 | 9008-63-3 | Nouryon | Naphthalenesulfonic acid, sodium salt, polymer with formaldehyde |
| Borresperse NA | 8061-51-6 | Borregard | Lignosulfonic acid, sodium salt |
| Geropon DOS | 577-11-7 | Solvay | Docusate sodium |
| Agnique SLES 370 | 68891-38-3 | BASF | Alcohols, C12-14, ethoxylated, sulfates, sodium salts |
| Soprophor FLK | 163436-84-8 | Solvay | Poly(oxy-1,2-ethanediyl), alpha.-2,4,6-tris(1-phenylethyl)phenyl-.omega.-hydroxy-, phosphate, potassium salt |
| Soprophor 4D384 | 119432-41-6 | Solvay | Poly(oxy-1,2-ethanediyl), a-sulfo-w-[2,4,6-tris(1-phenylethyl)phenoxy]-, ammonium salt |
| Empiphos 03 D | 39464-69-2 | Innospec | Poly(oxy-1,2-ethanediyl), .alpha.-(9Z)-9-octadecenyl-.omega.-hydroxy-, phosphate |
| Hostapon TPHC | 137-20-2 | Clariant | Sodium 2-[methyloleoylamino]ethane-1-sulphonate |
| Alcoguard 7100/Agrilan 777 | - | Nouryon | Styrene Acrylic Copolymer |
| Sokalan CP 7 | - | BASF | Maleic acid-acrylic acid copolymer, sodium salt |
| Narlex D72 | - | Nouryon | Styrene/Maleic Acid sulfonated polymer |
| Geropon T/36 | 37199-81-8 | Solvay | Maleic anhydride 2,4,4-trimethylpentene polymer sodium salt |
| Reax 105M | 68512-34-5 | Ingevity | Lignosulfonic acid, sodium salt |
| Reax 910 | 68512-35-6 | Ingevity | Lignosulfonic acid, sodium salt |
| Lucramul HOT 5902 | 64366-70-7 | Levaco | 2-ethylhexanol propylene ethyleneglycol ether |

(continued)

| Trade name | CAS No. | Manufacturer/ supplier | Chemical name |
|---|---|---|---|
| Lucramul PS54 | 104376-75-2 | Levaco | Poly(oxy-1,2-ethanediyl), .alpha.-phenyl-.omega.-hydroxy-, styrenated |
| Atlox 4913 | 119724-54-8 | Croda | 2-Propenoic acid, 2-methyl-, polymer with a-methyl-w-hydroxypoly(oxy-1,2-ethanediyl) and methyl 2-methyl-2-propenoate, graft |
| Atlas G5000 | 99821-01-9 | Croda | Oxirane, methyl-, polymer with oxirane. Mono(4-butoxyethyl) ether |
| Pluronic PE10500 | 106392-12-5 | BASF | Propylene oxide ethylene oxide block polymer |
| Synperonic PE/F127 | 9003-11-6 | Croda | Polyethylene-Polypropylene Glycol |
| Genapol X080 | 9043-30-5 | Clariant | Isotridecanol, ethoxylated |
| Sokalan K90 | 9003-39-8 | BASF | Povidone (polyvinylpyrrolidone) |

**Wetting Agent**

| Trade name | CAS No. | Manufacturer/ supplier | Chemical name |
|---|---|---|---|
| Silwet HS 312 | - | Momentive | Polyalkylene oxide Silane |
| Silwet 806 | 134180-76-0 | Momentive | Polyalkyleneoxide modified Heptamethyltrisiloxane |

**Rheological Agent**

| Trade name | CAS No. | Manufacturer/ supplier | Chemical name |
|---|---|---|---|
| Rhodopol 23 | 11138-66-2 | Solvay | Xanthan gum |
| Sipernat 22 | 112926-00-8 | Evonik | Hydrated silicon dioxide |
| Van Gel B | 12199-37-0 | Vanderbilt | Smectite-group minerals |

**Isocyanate/Cross Linker**

| Trade name | CAS No. | Manufacturer/ supplier | Chemical name |
|---|---|---|---|
| Desmodur T80 | 26471-62-5 | Covestro | M-tolylidene diisocyanate |
| Desmodur VL | 9016-87-9 | Covestro | Polymeric diphenylmethane diisocyanate |
| Desmodur N 3300 | 28182-81-2 | Covestro | Hexamethylene-1,6-diisocyanate Homopolymer |

**Emulsifier**

| Trade name | CAS No. | Manufacturer/ supplier | Chemical name |
|---|---|---|---|
| POVAL 26-88 | 25213-24-5 | Kuraray | Polyvinyl Alcohol,Partially and Intermediate Hydrolyzed |
| Kraftsperse 25M | 68512-34-5 | Ingevity | Lignosulfonic acid, sodium salt |
| Reax 910 | 68512-35-6 | Ingevity | Lignosulfonic acid, sodium salt |
| Synperonic PE/F127 | 9003-11-6 | Croda | Polyethylene-Polypropylene Glycol |
| Morwet D-425 | 9008-63-3 | Nouryon | Naphthalenesulfonic acid, sodium salt, polymer with formaldehyde |
| Reax 105M | 68512-34-5 | Ingevity | Lignosulfonic acid, sodium salt |
| Reax 88B<br>Aerosil R816 | 68512-34-5<br>68909-20-6 | Ingevity<br>Evonik | Lignosulfonic acid, sodium salt<br>Hydrophobic fumed Silica |

**pH Buffer/Antifoam/Biocide/Antifreeze/Antioxidant**

| Trade name | CAS No. | Manufacturer/ supplier | Chemical name |
|---|---|---|---|
| Citric Acid | 77-92-9 | Cargill | Citric acid |
| SAG 1572 | 63148-62-9 | Momentive | Dimethyl siloxanes and silicones |
| Silcolapse 426R | 63148-62-9 | Solvay | Polydimethylsiloxane |
| Silcolapse 416 | 112926-00-8 | Solvay | Silica gel, pptd., cryst.-free |
| Preventol D7 | 55965-84-9 | Lanxess | 5-Chloro-2-methyl-3(2H)-isothiazolone mixt. with 2-methyl-3(2H)-isothiazolone |
| Kathon CG/ICP | 55965-84-9 | ROHM AND HAAS | 5-Chloro-2-methyl-3(2H)-isothiazolone mixt. with 2-methyl-3(2H)-isothiazolone |
| Proxel GXL | 2634-33-5 | Lonza | 1,2-benzisothiazol-3(2H)-one |
| Preserval P | 94-13-3 | - | Propyl 4-hydroxybenzoate |
| Propylene Glycol<br>BHT/ Butylhydroxytoluene | 57-55-6<br>128-37-0 | Brenntag<br>- | Propane-1,2-diol<br>3.5-Di-tert-butyl-4-hydroxytoluol |

**Tests and Methods used in the examples**

Assessment of formulation characteristics takes place analogously to DIN 10964 "Sensory analysis - Simple descriptive test". For this purpose, the samples to be examined are examined visually and, if required, by means of shaking and tilting, for shape, state of matter and colour and further peculiarities (especially, for example, lumps, caking, sediment formation, subsequent thickening, marbling of the sediment etc.).

Particle size is determined either by laser diffraction according to CIPAC MT 187 Malvern Mastersizer, medium: propylene glycol) or by using an optical microscope (40x magnification). Stable and convenient formulations are expected to contain small particles in order to ensure both good storage stability in concentrate as well as good suspension stability in aqueous dilution.

Agglomeration is determined either by using an optical microscope (40x magnification). Stable and convenient formulations are expected to contain no agglomerates in order to ensure both good storage stability in concentrate as well as good suspension stability in aqueous dilution.

Suspension stability is evaluated following simplified method according to CIPAC MT 180 and is measured in 2% aqueous dilution in CIPAC C or CIPAC D water and determined after 1 hour standing time. Stable and convenient formulations are expected to exhibit no or only very little sediment formation at the bottom of the test vessel in order to ensure a homogeneous application of the spray solution.

Storage stability testing is performed for a given number of weeks (w) at different temperatures such as 0°C, 20°C, 30°C, 40°C, 54°C or thaw-freeze cycling (= TW; constant temperature change from -15°C to +30°C and back within

one week).

Phase separation directly after storage is reported as sediment fraction and calculated from the quotient H1 [level of the interface layer between sediment phase and supernatant] divided by H0 [total fill height of the sample]:

$$\text{Sediment fraction} = (H1/H0) * 100\ [\%]$$

Alternatively, phase separation directly after storage is reported as separation percentage and calculated from the quotient H0-H1 [total fill height of the sample minus level of the interface layer between sediment phase and supernatant] divided by H0 [total fill height of the sample]:

$$\text{Separation Percentage} = (H0\text{-}H1)/H0 * 100$$

Stable and convenient formulations are expected to exhibit no or only little phase separation upon storage at elevated temperatures for a prolonged period of time and are easily rehomogenized. Marked phase separation after a short storage time indicates limited storage stability and a significant tendency to formation of sediments that are dispersible only with difficulty, if at all, during storage.

**Example 1→ Dispersant Screen for pyrethroid SC Formulations**

All formulation constituents according to the experiments described in Table 1 are combined in a 25 ml Polyethylene screwtop bottle, and 10 g of glass beads (size 1-1.25 mm) are added. The bottle is closed, clamped in an agitator apparatus (Retsch MM301) and treated at 30 Hz for 45 minutes; in the course of this, the samples heat up. After the time has elapsed, the samples are cooled down to room temperature and the consistency of the formulation is assessed. Appearance is examined by means of a microscope (Zeiss transmitted light microscope, 40-fold magnification), and the particle size is determined by laser dispersion. A very small particle size indicates good grindability, while the presence of agglomerates is a sign of poor dispersion characteristics.

**Table 1 - Pyrethroid SC Dispersant Screen (Concentrations in %w/w)**

| Example No. | Deltamethrin | Morwet D-425 | Borresperse NA | Geropon DOS | Agnique SLES 370 | Soprophor FLK | Soprophor 4D384 | Empiphos 03 | Hostapon TPHC | Alcoguard 7100/Agrilan 777 | Sokalan CP 7 | Narlex D72 | Geropon T/36 | Reax 105M | Reax 910 | Lucramul HOT 5902 | Lucramul PS54 | Atlox 4913 | Atlas G5000 | Pluronic PE10500 | Synperonic PE/F127 | Genapol X080 | Sokalan K90 | SAG 1572 | Silcolapse 426R | Citric Acid | Biocides | Rhodopol 23 | Propylene Glycol | Water | Laser Diffraction Particle size [d10/50/90, µm] | Microscope Appearance |
|---|---|---|---|---|---|---|---|---|---|---|---|---|---|---|---|---|---|---|---|---|---|---|---|---|---|---|---|---|---|---|---|---|
| 1 | 10 | 3.0 | | | | | | | | | | | | | | | | | | | | | | 1 | | 0.1 | | | | To 100% | 0.4/2.6/8.7 | agglomerates |
| 2 | 10 | | 3.00 | | | | | | | | | | | | | | | | | | | | | 1 | | 0.1 | | | | To 100% | 0.3/7.9/16 | agglomerates |
| 3 | 10 | | | 3.00 | | | | | | | | | | | | | | | | | | | | 1 | | 0.1 | | | | To 100% | 0.3/0.8/3.9 | few agglomerates |
| 4 | 10 | | | | | 3.00 | | | | | | | | | | | | | | | | | | 1 | | 0.1 | | | | To 100% | 0.3/0.7/1.7 | no agglomerates |
| 5 | 10 | | | | | | 3.00 | | | | | | | | | | | | | | | | | 1 | | 0.1 | | | | To 100% | 0.3/1.0/4.4 | agglomerates |
| 6 | 10 | | | | | | | 3.00 | | | | | | | | | | | | | | | | 1 | | 0.1 | | | | To 100% | 0.3/3/8 | agglomerates |
| 7 | 10 | | | | | | | | 3.00 | | | | | | | | | | | | | | | 1 | | 0.1 | | | | To 100% | 0.3/1.0/4 | agglomerates |
| 8 | 10 | | | | | | | | | 4.00 | | | | | | | | | | | | | | 1 | | 0.1 | | | | To 100% | 0.2/7.9/15 | agglomerates |
| 9 | 10 | | | | | | | | | | | | | | | | | | | | | | | 1 | | 0.1 | | | | To 100% | 0.3/15/28 | agglomerates |
| 10 | 10 | | | | | | | | | | | | | | | 3.00 | | | | | | | | 1 | | 0.1 | | | | To 100% | 0.3/1.4/6.4 | no agglomerates |
| 11 | 10 | | | | | | | | | | | | | | | | 3.0 | | | | | | | 1 | | 0.1 | | | | To 100% | 0.5/1.6/5 | no agglomerates |
| 12 | 10 | | | | | | | | | | | | | | | | | 3.00 | | | | | | 1 | | 0.1 | | | | To 100% | 0.3/0.6/1.5 | no agglomerates |
| 13 | 10 | | | | | | | | | | | | | | | | | | 3.00 | | | | | 1 | | 0.1 | | | | To 100% | 0.3/9/19 | no agglomerates |
| 14 | 10 | | | | | | | | | | | | | | | | | | | 3.00 | | | | 1 | | 0.1 | | | | To 100% | 0.3/0.9/3.7 | no agglomerates |
| 15 | 10 | | | | | | | | | | | | | | | | | | | | | 3.00 | | 1 | | 0.1 | | | | To 100% | 0.3/0.6/1.2 | no agglomerates |
| 16 | 10 | | | | | | | | | | | | | | | | | | | | | | 3.00 | 1 | | 0.1 | | | | To 100% | 0.3/15/27 | agglomerates |
| 17 | 10 | | | | | | | | | 2.00 | | | | | | | | 1.00 | | | | | | 1 | | 0.1 | | | | To 100% | 0.3/6.7/13.6 | few agglomerates |
| 18 | 10 | 1.00 | | | | | | | | | | | | | | | | 1.00 | | | | | | 1 | | 0.1 | | | | To 100% | 0.3/0.9/4.4 | agglomerates |
| 19 | 10 | 1.00 | | | | | | | | 2.00 | | | | | | | | | | | | | | 1 | | 0.1 | | | | To 100% | 0.3/0.8/5.8 | agglomerates |
| 20 | 10 | | | | | | 1.00 | | | | | | | | | | | 1.00 | | | | | | 1 | | 0.1 | | | | To 100% | 0.3/0.6/2.3 | agglomerates |
| 21 | 10 | | | 1.00 | | | | | | | | | | | | | | 1.00 | | | | | | 1 | | 0.1 | | | | To 100% | 0.3/0.9/4.1 | agglomerates |
| 22 | 10 | | | 1.00 | | | | | | 2.00 | | | | | | | | | | | | | | 1 | | 0.1 | | | | To 100% | 0.4/0.9/4.3 | agglomerates |

| Example No. | Deltamethrin | Morwet D-425 | Borresperse NA | Geropon DOS | Agnique SLES 370 | Soprophor FLK | Soprophor 4D384 | Empiphos 03 | Hostapon TPHC | Alcoguard 7100/Agrilan 777 | Sokalan CP 7 | Narlex D72 | Geropon T/36 | Reax 105M | Reax 910 | Lucramul HOT 5902 | Lucramul PS54 | Atlox 4913 | Atlas G5000 | Pluronic PE10500 | Synperonic PE/F127 | Genapol X080 | Sokalan K90 | SAG 1572 | Silcolapse 426R | Citric Acid | Biocides | Rhodopol 23 | Propylene Glycol | Water | Laser Diffraction Particle size [d10/50/90, µm] | Microscope Appearance |
|---|---|---|---|---|---|---|---|---|---|---|---|---|---|---|---|---|---|---|---|---|---|---|---|---|---|---|---|---|---|---|---|---|
| 23 | 10 | | | | | | | | | 2.00 | | | | | | | | | | | 1.00 | | | 1 | | 0.1 | | | | To 100% | 0.3/5.7/10.7 | agglomerates |
| 24 | 10 | | | | | | | | | 2.00 | | | | | | | | | | | | | 1.00 | 1 | | 0.1 | | | | To 100% | 0.3/9.3/17 | agglomerates |
| 25 | 10 | | | | | | | | | | 4.00 | | | | | | | | | | | | | 1 | | 0.1 | | | | To 100% | 0.3/13/24 | agglomerates |
| 26 | 10 | | | | | | | | | | | | 4.00 | | | | | | | | | | | 1 | | 0.1 | | | | To 100% | 0.3/13/24 | agglomerates |
| 29 | 10 | 1.00 | | | | | | | | 4.00 | | | | | | | | | | | | | | 1 | | 0.1 | | | | To 100% | 0.2/0.5/1.4 | no agglomerates |
| 30 | 10 | 2.00 | | | | | | | | 4.00 | | | | | | | | | | | | | | 1 | | 0.1 | | | | To 100% | 0.3/0.6/3.5 | no agglomerates |
| 31 | 10 | 1.00 | | | | | | | | | | | | | | | | 2.00 | | | | | | 1 | | 0.1 | | | | To 100% | 0.3/0.6/2.7 | no agglomerates |
| 32 | 10 | | | | | 2.00 | | | | 4.00 | | | | | | | | | | | | | | 1 | | 0.1 | | | | To 100% | 0.3/0.5/1.1 | agglomerates |
| 33 | 10 | | | | | 2.00 | | | | | | | | | | | | | | 2.00 | | | | 1 | | 0.1 | | | | To 100% | 0.3/0.6/2.4 | few agglomerates |
| 34 | 10 | | | 2.00 | | | | | | 4.00 | | | | | | | | | | | | | | 1 | | 0.1 | | | | To 100% | 0.3/0.6/1.6 | no agglomerates |
| 35 | 10 | | | | | | | | | | | | | 4.00 | | | | | | | | | | 1 | | 0.1 | | | | To 100% | bimodal 0.3/4.5/10.9 | few agglomerates |
| 36 | 10 | | | 2.00 | | | | | | | | | | 4.00 | | | | | | | | | | 1 | | 0.1 | | | | To 100% | bimodal 0.3/0.8/2.9 | agglomerates |
| 37 | 10 | | | | | 2.00 | | | | | | | | 4.00 | | | | | | | | | | 1 | | 0.1 | | | | To 100% | 0.3/0.6/1.0 | few agglomerates |
| 38 | 10 | 1.00 | | | | | | | | | 4.00 | | | | | | | | | | | | | 1 | | 0.1 | | | | To 100% | 0.3/3.0/11.3 | agglomerates |
| 39 | 10 | 1.00 | | | | | | | | | | | 4.00 | | | | | | | | | | | 1 | | 0.1 | | | | To 100% | 0.3/5.7/11.6 | agglomerates |
| 40 | 10 | 1.00 | | | | | | | | | | | | 4.00 | | | | | | | | | | 1 | | 0.1 | | | | To 100% | 0.3/2.1/7.5 | agglomerates |
| 41 | 10 | 1.00 | | | | | | | | | | | | | 4.00 | | | | | | | | | 1 | | 0.1 | | | | To 100% | 0.35/1.7/6.6 | few agglomerates |
| 42 | 10 | | | | | | | | | 4.00 | | | | 1.00 | | | | | | | | | | 1 | | 0.1 | | | | To 100% | 0.25/4.7/10.9 | agglomerates/insoluble spherical particles seen |
| 43 | 10 | | | 1.00 | | | | | | | 4.00 | | | | | | | | | | | | | 1 | | 0.1 | | | | To 100% | 0.3/7.5/15.4 | agglomerates |
| 44 | 10 | | 1.00 | | | | | | | | 4.00 | | | | | | | | | | | | | 1 | | 0.1 | | | | To 100% | 0.3/5.1/10.5 | agglomerates/insoluble spherical particles seen |
| 45 | 10 | | | 1.00 | | | | | | | | 4.00 | | | | | | | | | | | | 1 | | 0.1 | | | | To 100% | 0.2/6.5/15.4 | agglomerates |
| 46 | 10 | | 1.00 | | | | | | | | | 4.00 | | | | | | | | | | | | 1 | | 0.1 | | | | To 100% | 0.3/5.6/10.9 | agglomerates/insoluble spherical particles seen |
| 47 | 10 | | 1.00 | | | | | | | | | | | 4.00 | | | | | | | | | | 1 | | 0.1 | | | | To 100% | 0.4/4.8/10.1 | no agglomerates |
| 48 | 10 | | | | | | | | | | | 2.00 | | 2.00 | | | | | | | | | | 1 | | 0.1 | | | | To 100% | 0.3/7.3/13.4 | agglomerates |

| Example No. | Deltamethrin | Morwet D-425 | Borresperse NA | Geropon DOS | Agnique SLES 370 | Soprophor FLK | Soprophor 4D384 | Empiphos 03 | Hostapon TPHC | Alcoguard 7100/Agrilan 777 | Sokalan CP 7 | Narlex D72 | Geropon T/36 | Reax 105M | Reax 910 | Lucramul HOT 5902 | Lucramul PS54 | Atlox 4913 | Atlas G5000 | Pluronic PE10500 | Synperonic PE/F127 | Gerapol X080 | Sokalan K90 | SAG 1572 | Silcolapse 426R | Citric Acid | Biocides | Rhodopol 23 | Propylene Glycol | Water | Laser Diffraction Particle size [d10/50/90, µm] | Microscope Appearance |
|---|---|---|---|---|---|---|---|---|---|---|---|---|---|---|---|---|---|---|---|---|---|---|---|---|---|---|---|---|---|---|---|---|
| 49 | 10 | 1.00 | | | | | | | | | | 4.00 | | | | | | | | | | | | 1 | | 0.1 | | | | To 100% | 0.3/3.9/9.1 | agglomerates/insoluble spherical particles seen |
| 50 | 10 | 0.50 | | | | | | | | 4.00 | | | | | | | | | | | | | | 1 | | 0.1 | | | | To 100% | bimodal (0.3/4.5/11.6) | agglomerates/insoluble spherical particles seen |
| 51 | 10 | 0.50 | | | | | | | | 3.00 | | | | | | | | | | | | | | 1 | | 0.1 | | | | To 100% | bimodal (0.3/3.1/9.8) | no agglomerates, but insoluble particles visible |
| 52 | 10 | | | 0.50 | | | | | | 4.00 | | | | | | | | | | | | | | 1 | | 0.1 | | | | To 100% | 0.35/0.9/5.3 | no agglomerates |
| 53 | 10 | | | 0.50 | | | | | | 3.00 | | | | | | | | | | | | | | 1 | | 0.1 | | | | To 100% | 0.35/1.4/7.1 | no agglomerates |
| 54 | 10 | 1.00 | | | 1.00 | | | | | | | | | | | | | | | | | | | 1 | | 0.1 | | | | To 100% | 0.4/1.6/7.4 | no agglomerates |
| 55 | 10 | 0.50 | | | 1.00 | | | | | | | | | | | | | | | | | | | 1 | | 0.1 | | | | To 100% | 0.4/2.7/9.0 | no agglomerates |
| 56 | 10 | 1.00 | | | 2.00 | | | | | | | | | | | | | | | | | | | 1 | | 0.1 | | | | To 100% | 0.4/1.1/5.1 | some agglomerates |
| 57 | 10 | 0.50 | | | 2.00 | | | | | | | | | | | | | | | | | | | 1 | | 0.1 | | | | To 100% | 0.4/2.3/8.1 | some agglomerates |
| 58 | 10 | | | | | | | | | | | 1.00 | | | | | | | | | | | | 1 | | 0.1 | | | | To 100% | 0.3/7.6/15.3 | agglomerates |
| 59 | 10 | | | | | | | | | | | 2.00 | | | | | | | | | | | | 1 | | 0.1 | | | | To 100% | 0.3/16/32 | agglomerates |
| 60 | 10 | | | | | | | | | | | 2.00 | | 0.50 | | | | | | | | | | 1 | | 0.1 | | | | To 100% | 0.3/7.6/14.1 | agglomerates |
| 61 | 10 | | | | | | | | | | | 1.00 | | 1.00 | | | | | | | | | | 1 | | 0.1 | | | | To 100% | 0.3/4.1/10.4 | agglomerates |
| 62 | 10 | | | | | | | | | | | 1.00 | | 0.50 | | | | | | | | | | 1 | | 0.1 | | | | To 100% | 0.3/6.2/12.4 | agglomerates |
| 63 | 10 | | | 0.50 | | | | | | | | 2.00 | | | | | | | | | | | | 1 | | 0.1 | | | | To 100% | 0.4/1.0/5.7 | agglomerates |
| 64 | 10 | | | 1.00 | | | | | | | | 1.00 | | | | | | | | | | | | 1 | | 0.1 | | | | To 100% | 0.3/0.7/2.5 | very dense sample, not clear if agglomerates or not |
| 65 | 10 | | | 0.50 | | | | | | | | 1.00 | | | | | | | | | | | | 1 | | 0.1 | | | | To 100% | 0.4/0.9/5 | no agglomerates |
| 66 | 10 | 0.50 | | | | | | | | | | 2.00 | | | | | | | | | | | | 1 | | 0.1 | | | | To 100% | bimodal (0.4/3.7/9.5) | no agglomerates |
| 67 | 10 | 1.00 | | | | | | | | | | 1.00 | | | | | | | | | | | | 1 | | 0.1 | | | | To 100% | bimodal (0.4/2.0/7.4) | some agglomerates |
| 68 | 10 | 0.50 | | | | | | | | | | 1.00 | | | | | | | | | | | | 1 | | 0.1 | | | | To 100% | bimodal (0.4/3.0/9.1) | some agglomerates |
| 69 | 10 | | 1.00 | | | | | | | | | | | 2.00 | | | | | | | | | | 1 | | 0.1 | | | | To 100% | 0.3/7.2/13.7 | agglomerates/insoluble spherical particles seen |
| 70 | 10 | | 1.00 | | | | | | | | | | | 3.00 | | | | | | | | | | 1 | | 0.1 | | | | To 100% | 0.3/7.0/13.5 | |
| 71 | 10 | | 0.50 | | | | | | | | | | | 4.00 | | | | | | | | | | 1 | | 0.1 | | | | To 100% | 0.3/2.4/8.1 | agglomerates/insoluble spherical particles seen |

| Example No. | Deltamethrin | Morwet D-425 | Borresperse NA | Geropon DOS | Agnique SLES 370 | Soprophor FLK | Soprophor 4D384 | Empiphos 03 | Hostapon TPHC | Alcoguard 7100/Agrilan 777 | Sokalan CP 7 | Narlex D72 | Geropon T/36 | Reax 105M | Reax 910 | Lucramul HOT 5902 | Lucramul PS54 | Atlox 4913 | Atlas G5000 | Pluronic PE10500 | Synperonic PE/F127 | Genapol X080 | Sokalan K90 | SAG 1572 | Silcolapse 426R | Citric Acid | Biocides | Rhodopol 23 | Propylene Glycol | Water | Laser Difraction Particle size [d10/50/90, µm] | Microscope Appearance |
|---|---|---|---|---|---|---|---|---|---|---|---|---|---|---|---|---|---|---|---|---|---|---|---|---|---|---|---|---|---|---|---|---|
| 72 | 10 | | 0.50 | | | | | | | | | | | 3.00 | | | | | | | | | | 1 | | 0.1 | | | | To 100% | bimodal (0.3/2.2/9.0) | no agglomerates |
| 73 | 10 | | | 0.25 | | | | | | 3.00 | | | | | | | | | | | | | | 1 | | 0.1 | | | | To 100% | bimodal (0.3/0.9/6.3) | no agglomerates |
| 74 | 10 | | | 0.25 | | | | | | 2.50 | | | | | | | | | | | | | | 1 | | 0.1 | | | | To 100% | bimodal (0.3/0.8/5.1) | no agglomerates |
| 75 | 10 | | | 0.50 | | | | | | 2.50 | | | | | | | | | | | | | | 1 | | 0.1 | | | | To 100% | bimodal (0.3/1.0/5.5) | no agglomerates |
| 76 | 10 | 0.50 | | | 0.50 | | | | | | | | | | | | | | | | | | | 1 | | 0.1 | | | | To 100% | bimodal (0.3/2.0/7.2) | some agglomerates |
| 77 | 10 | | | 0.25 | | | | | | | | 1.00 | | | | | | | | | | | | 1 | | 0.1 | | | | To 100% | 0.3/0.7/3 | agglomerates |
| 78 | 10 | | | 0.50 | | | | | | | | 0.50 | | | | | | | | | | | | 1 | | 0.1 | | | | To 100% | 0.4/1.1/5.7 | some agglomerates |
| 79 | 10 | | | 0.25 | | | | | | | | 0.25 | | | | | | | | | | | | 1 | | 0.1 | | | | To 100% | 0.4/0.8/4.4 | no agglomerates |
| 80 | 7.2 | 1.0 | | | | | | | | 2.0 | | | | | | | | | | | | | | | 0.1 | 0.2 | Preventol D7 → 0.08 Proxel GXL 20% → 0.12 | 0.4 | 10.0 | To 100% | 0.3/0.8/3.7 | no agglomerates |
| 81 | 7.1 | 2.0 | | | | | | | | 4.0 | | | | | | | | | | | | | | | 0.1 | 0.2 | Preventol D7 → 0.08 Proxel GXL 20% → 0.12 | 0.4 | 10.0 | To 100% | 0.3/0.8/3.8 | some agglomerates |
| 82 | 7.2 | 2.0 | | | | | | | | 6.0 | | | | | | | | | | | | | | | 0.1 | 0.2 | Preventol D7 → 0.08 | 0.4 | 10.0 | To 100% | 0.3/0.7/3.4 | No agglomerates |

| Example No. | Deltamethrin | Morwet D-425 | Borresperse NA | Geropon DOS | Agnique SLES 370 | Soprophor FLK | Soprophor 4D384 | Empiphos 03 | Hostapon TPHC | Alcoguard 7100/Agrilan 777 | Sokalan CP 7 | Narlex D72 | Geropon T/36 | Reax 105M | Reax 910 | Lucramul HOT 5902 | Lucramul PS54 | Atlox 4913 | Atlas G5000 | Pluronic PE10500 | Synperonic PE/F127 | Genapol X080 | Sokalan K90 | SAG 1572 | Silcolapse 426R | Citric Acid | Biocides | Rhodopol 23 | Propylene Glycol | Water | Laser Diffraction Particle size [d10/50/90, µm] | Microscope Appearance |
|---|---|---|---|---|---|---|---|---|---|---|---|---|---|---|---|---|---|---|---|---|---|---|---|---|---|---|---|---|---|---|---|---|
| | | | | | | | | | | | | | | | | | | | | | | | | | | | Proxel GXL 20% → 0.12 | | | | | |
| 83 | 7.1 | 1.0 | | | | | | | | 6.0 | | | | | | | | | | | | | | | 0.1 | 0.2 | Preventol D7 → 0.08 Proxel GXL 20% → 0.12 | 0.4 | 10.0 | To 100% | 0.3/0.7/3.7 | No agglomerates |
| 84 | 7.2 | 0.5 | | | | | | | | 2.0 | | | | | | | | | | | | | | | 0.1 | 0.2 | Preventol D7 → 0.08 Proxel GXL 20% → 0.12 | 0.4 | 10.0 | To 100% | 0.3/0.8/3.9 | No agglomerates |

**Evaluation of Experiments in Table 1**

Out of the experiments in Table 1 we can select the most suitable dispersants for the preparation of the Pyrethroid SC formulations. Suitable are all combinations where no agglomerates can be seen in the microscopic pictures of the formulations, e.g. examples 4, 10, 11, 12, 13, 14, 15, 29, 30, 31, 34, 47, 52, 53, 54, 55, 65, 66, 72, 73, 74, 75, 79 - 84.

**Example 2 → Preparation of Pyrethroid SC Formulations**

An embodiment of the present invention is also the process directed to the preparation of Suspension Concentrate agrochemical formulations as mentioned below. For the purposes of testing the formulability of pyrethroids as SC formulations with the dispersants identified in Example 1, pyrethroid SC formulations can be prepared by one of the below mentioned methods:

1) Pyrethroid a), dispersant c), if appropriate antifoam j) and water are homogenized with a colloidal mill, and subsequently, milled in a bead mill (Eiger mill, 80% 1-1.25 mm beads, 3500 rpm, circulation grinding). After the required time has elapsed for reaching the desired particle size of the pyrethroid colloid, the samples are cooled down to room temperature. After milling, the remaining components of the formulation are mixed under stirring (rheological modifier, pH Buffer, antifoam, biocide, antifreeze, final water concentration, and optionally a wetting agent).

2) Pyrethroid a), dispersant c), if appropriate antifoam j) and water are mixed in a bottle, which is then closed, clamped in an agitator apparatus (Retsch MM301) and treated at 30 Hz for 45 minutes; in the course of this, the samples heat up. After the time has elapsed, the samples are cooled down to room temperature. After milling, the remaining components of the formulation are mixed under stirring (rheological modifier, pH Buffer, antifoam, biocide, antifreeze, final water concentration, and optionally a wetting agent)

**Table 2- Pyrethroid SC Formulation Examples**

| FL Number | Water | Pyrethroid | Dispersant | Wetting Agent | Rheology Control Agent | pH Buffer | Antifoam | Biocide | Antifreeze |
|---|---|---|---|---|---|---|---|---|---|
| | %w/w | %w/w | %w/w | %w/w | %w/w | %w/w | %w/w | %w/w | %w/w |
| 1-1 | Rest | Deltamethrin | Soprophor FLK | - | Van Gel B + Rhodopol 23 | Citric acid | Silcolapse 416 + Silcolapse 426 R | Preserval P | - |
| | | 18.3 | 3.7 | - | 0.5+0.2 | 0.02 | 0.27+0.03 | 0.09 | - |
| 1-2 | Rest | Deltamethrin | Atlox 4913 + Morwet D-425 | - | Rhodopol 23 | - | - | Kathon CG/ICP Proxel GXL | Propylene Glycol |
| | | 1.0 | 2.0 + 1.0 | - | 0.4 | - | - | 0.08+0.12 | 10 |
| 1-3 | Rest | Deltamethrin | Atlox 4913 + Morwet D-425 | - | Rhodopol 23 | Citric acid | - | Kathon CG/ICP Proxel GXL | Propylene Glycol |
| | | 1.0 | 2.0 + 1.0 | - | 0.4 | 0.02 | - | 0.08+0.12 | 10 |
| 1-4 | Rest | Deltamethrin | Atlox 4913 + Morwet D-425 | - | Rhodopol 23 | Citric acid | SAG1572 | Kathon CG/ICP Proxel GXL | Propylene Glycol |
| | | 2.0 | 2.0 + 1.0 | - | 0.2 | 0.02 | 0.1 | 0.08+0.12 | 10 |
| 1-5 | Rest | Deltamethrin | Atlox 4913 + Morwet D-425 | - | Rhodopol 23 | Citric acid | Silcolapse 426R | Kathon CG/ICP Proxel GXL | Propylene Glycol |
| | | 5.0 | 2.0 + 1.0 | - | 0.4 | 0.2 | 0.1 | 0.08+0.12 | 10 |
| 1-6 | Rest | Deltamethrin | Atlox 4913 + Morwet D-425 | - | Rhodopol 23 | Citric acid | Silcolapse 426R | Kathon CG/ICP Proxel GXL | Propylene Glycol |
| | | 7.5 | 2.0 + 1.0 | - | 0.4 | 0.2 | 0.1 | 0.08+0.12 | 10 |
| 1-7 | Rest | Deltamethrin | Atlox 4913 + Morwet D-425 | - | Rhodopol 23 | Citric acid | Silcolapse 426R | Kathon CG/ICP Proxel GXL | Propylene Glycol |
| | | 10.0 | 2.0 + 1.0 | - | 0.4 | 0.2 | 0.1 | 0.08+0.12 | 10 |
| 1-8 | Rest | Deltamethrin | Atlox 4913 + Morwet D-425 + Pluronic PE 6400 | - | Rhodopol 23 | Citric acid | - | Kathon CG/ICP Proxel GXL | Propylene Glycol |
| | | 1.0 | 2.0 + 1.0+10.0 | - | 0.4 | - | - | 0.08+0.12 | 10 |

(continued)

| FL Number | Water | Pyrethroid | Dispersant | Wetting Agent | Rheology Control Agent | pH Buffer | Antifoam | Biocide | Antifreeze |
|---|---|---|---|---|---|---|---|---|---|
| | %w/w | %w/w | %w/w | %w/w | %w/w | %w/w | %w/w | %w/w | %w/w |
| 1-9 | Rest | Deltamethrin | Atlox 4913 + Morwet D-425 | Silwet HS312 | Rhodopol 23 | Citric acid | - | Kathon CG/ICP Proxel GXL | Propylene Glycol |
| | | 1.0 | 2.0 + 1.0 | 10.0 | 0.4 | - | - | 0.08+0.12 | 10 |
| 1-10 | Rest | Deltamethrin | Atlox 4913 + Morwet D-425 + Pluronic PE 6400 | Silwet HS312 | Rhodopol 23 | Citric acid | SAG 1572 | Kathon CG/ICP + Preventol D7 + Proxel GXL | Propylene Glycol |
| | | 2.3 | 2.0 + 1.0+10.0 | 6.0 | 0.5 | 0.1 | 0.1 | 0.02+0.08+0.15 | 10 |
| 1-11 | Rest | Deltamethrin | Atlox 4913 + Morwet D-425 + Pluronic PE 6400 | Silwet HS312 | Rhodopol 23 | Citric acid | SAG 1572 | Kathon CG/ICP + Preventol D7 + Proxel GXL | Propylene Glycol |
| | | 2.3 | 2.0 + 1.0+10.0 | 12.0 | 0.5 | 0.1 | 0.1 | 0.02+0.08+0.15 | 5 |
| 1-12 | Rest | Deltamethrin | Atlox 4913 + Morwet D-425 + Pluronic PE 6400 | Silwet HS312 | Rhodopol 23 | Citric acid | SAG 1572 | Kathon CG/ICP + Proxel GXL | Propylene Glycol |
| | | 2.4 | 2.0 + 1.0+10.0 | 10.0 | 0.4 | 0.1 | 0.1 | 0.08+0.12 | 5 |
| 1-13 | Rest | Deltamethrin | Atlox 4913 + Morwet D-425 + Pluronic PE 10500 | Silwet HS312 | Rhodopol 23 | Citric acid | SAG 1572 | Preventol D7 + Proxel GXL | Propylene Glycol |
| | | 2.3 | 2.0 + 1.0+10.0 | 6.0 | 0.5 | 0.1 | 0.1 | 0.08+0.12 | 5 |
| 1-14 | Rest | Deltamethrin | Atlox 4913 + Morwet D-425 + Pluronic PE 10500 | Silwet HS312 | Rhodopol 23 | Citric acid | SAG 1572 | Preventol D7 + Proxel GXL | Propylene Glycol |
| | | 2.3 | 2.0 + 1.0+10.0 | 12.0 | 0.5 | 0.1 | 0.1 | 0.08+0.12 | 5 |
| 1-15 | Rest | Deltamethrin | Atlox 4913 + Morwet D-425 | Silwet 806 | Rhodopol 23 | Citric acid | SAG 1572 | Kathon CG/ICP + Proxel GXL | Propylene Glycol |
| | | 2.3 | 2.0 + 1.0 | 10.0 | 0.4 | 0.1 | 0.1 | 0.08+0.12 | 10 |

(continued)

| FL Number | Water | Pyrethroid | Dispersant | Wetting Agent | Rheology Control Agent | pH Buffer | Antifoam | Biocide | Antifreeze |
|---|---|---|---|---|---|---|---|---|---|
| | %w/w | %w/w | %w/w | %w/w | %w/w | %w/w | %w/w | %w/w | %w/w |
| 1-16 | Rest | Deltamethrin | Dispersogen SI + Sodium Lauryl Sulfate/ AGNIQUE SLS 90 P | - | Rhodopol 23 + Sipernat 22 | Citric acid | Silcolapse 416 + Silcolapse 426R | Preventol D7 + Proxel GXL | Propylene Glycol |
| | | 2.4 | 1.53 + 0.01 | - | 0.4 + 1.46 | 0.02 | 0.1 + 0.03 | 0.08+0.20 | 15.5 |
| 1-17 | Rest | Deltamethrin | Alcoguard 7100/Agrilan 777 + Morwet D-425 | - | Rhodopol 23 | Citric acid | Silcolapse 426R | Kathon CG/ICP + Proxel GXL | Propylene Glycol |
| | | 7.3 | 4.0 + 1.0 | | 0.4 | 0.1 | 0.1 | 0.08+0.12 | 10.0 |
| 1-18 | Rest | Deltamethrin | Alcoguard 7100/Agrilan 777 + Morwet D-425 | - | Rhodopol 23 | Citric acid | Silcolapse 426R | Kathon CG/ICP Proxel GXL | Propylene Glycol |
| | | 8.5 | 4.0 + 1.0 | | 0.4 | 0.1 | 0.1 | 0.1 0.08+0.12 10.0 0.08+0.12 | 100 |
| 1-19 | Rest | Deltamethrin | Alcoguard 7100/Agrilan 777 + Morwet D-425 | - | Rhodopol 23 | Citric acid | Silcolapse 426R | Kathon CG/ICP + Proxel GXL | Propylene Glycol |
| | | 9.7 | 4.0 + 1.0 | | 0.4 | 0.1 | 0.1 | 0.08+0.12 | 10.0 |
| 1-20 | Rest | Deltamethrin | Alcoguard 7100/Agrilan 777 + Geropon DOS | - | Rhodopol 23 | Citric acid | Silcolapse 426R | Kathon CG/ICP + Proxel GXL | Propylene Glycol |
| | | 7.3 | 4.0 + 1.0 | - | 0.4 | 0.1 | 0.1 | 0.08+0.12 | 10.0 |
| 1-21 | Rest | Deltamethrin | Alcoguard 7100/Agrilan 777 + REAX 105M | - | Rhodopol 23 | Citric acid | Silcolapse 426R | Kathon CG/ICP + Proxel GXL | Propylene Glycol |
| | | 7.3 | 4.0 + 1.0 | - | 0.4 | 0.1 | 0.1 | 0.08+0.12 | 10.0 |
| 1-22 | Rest | Deltamethrin | Geropon DOS + REAX 105M | - | Rhodopol 23 | Citric acid | Silcolapse 426R | Kathon CG/ICP + Proxel GXL | Propylene Glycol |
| | | 8.5 | 2.0 + 1.0 | - | 0.4 | 0.02 | 0.1 | 0.08+0.12 | 10.0 |
| 1-23 | Rest | Deltamethrin | Geropon DOS + REAX 105M | - | Rhodopol 23 | Citric acid | Silcolapse 426R | Kathon CG/ICP + Proxel GXL | Propylene Glycol |
| | | 7.3 | 2.0 + 1.0 | | 0.4 | 0.02 | 0.1 | 0.08+0.12 | 10.0 |

(continued)

| FL Number | Water | Pyrethroid | Dispersant | Wetting Agent | Rheology Control Agent | pH Buffer | Antifoam | Biocide | Antifreeze |
|---|---|---|---|---|---|---|---|---|---|
| | %w/w | %w/w | %w/w | %w/w | %w/w | %w/w | %w/w | %w/w | %w/w |
| 1-24 | Rest | Deltamethrin | Geropon DOS + Narlex D72 | - | Rhodopol 23 | Citric acid | Silcolapse 426R | Kathon CG/ICP + Proxel GXL | Propylene Glycol |
| | | 7.3 | 1.0 + 4.0 | - | 0.4 | 0.02 | 0.1 | 0.08+0.12 | 10.0 |
| 1-25 | Rest | Deltamethrin | Reax 105M + Narlex D72 | - | Rhodopol 23 | Citric acid | Silcolapse 426R | Kathon CG/ICP + Proxel GXL | Propylene Glycol |
| | | 7.3 | 1.0 + 2.0 | - | 0.3 | 0.02 | 0.1 | 0.08+0.12 | 10.0 |
| 1-26 | Rest | Deltamethrin | Morwet D-425 + Narlex D72 | - | Rhodopol 23 | Citric acid | Silcolapse 426R | Kathon CG/ICP + Proxel GXL | Propylene Glycol |
| | | 7.3 | 0.5 + 2.0 | - | 0.3 | 0.1 | 0.1 | 0.08+0.12 | 10.0 |
| 1-27 | Rest | Deltamethrin | Alcoguard 7100/Agrilan 777 + Geropon DOS | - | Rhodopol 23 | Citric acid | Silcolapse 426R | Kathon CG/ICP + Proxel GXL | Propylene Glycol |
| | | 7.3 | 2.5+0.3 | - | | 0.1 | 0.1 | 0.08+0.12 | 10.0 |
| 1-28 | Rest | Deltamethrin | Borresperse NA + Reax 105M | - | Rhodopol 23 | Citric acid | Silcolapse 426R | Kathon CG/ICP + Proxel GXL | Propylene Glycol |
| | | 7.3 | 0.5 + 3.0 | - | 0.3 | 0.1 | 0.1 | 0.08+0.12 | 10.0 |
| 1-29 | Rest | Deltamethrin | Morwet D-425 + Agnique SLES 370 | - | Rhodopol 23 | Citric acid | Silcolapse 426R | Kathon CG/ICP + Proxel GXL | Propylene Glycol |
| | | 7.3 | 0.5 + 1.0 | - | 0.3 | 0.1 | 0.1 | 0.08+0.12 | 10.0 |
| 1-30 | Rest | Deltamethrin | Geropon DOS + Narlex D72 | - | Rhodopol 23 | Citric acid | Silcolapse 426R | Kathon CG/ICP + Proxel GXL | Propylene Glycol |
| | | 7.3 | 0.25 + 1.0 | - | 0.3 | 0.1 | 0.1 | 0.08+0.12 | 10.0 |
| 1-31 | Rest | Deltamethrin | Alcoguard 7100/Agrilan 777 + Morwet D425 | - | Rhodopol 23 | Citric acid | Silcolapse 426R | Kathon CG/ICP + Proxel GXL | Propylene Glycol |
| | | 7.2 | 4.0 + 1.0 | - | 0.4 | 0.1 | 0.1 | 0.07+0.1 | 8.8 |
| 1-32 | Rest | Deltamethrin | Alcoguard 7100/Agrilan 777 + Morwet D-425 | - | Rhodopol 23 | Citric acid | Silcolapse 426R | Kathon CG/ICP + Proxel GXL | Propylene Glycol |
| | | 7.2 | 4.0 + 1.0 | | 0.4 | 0.1 | 0.1 | 0.08+0.12 | 10.0 |

(continued)

| FL Number | Water | Pyrethroid | Dispersant | Wetting Agent | Rheology Control Agent | pH Buffer | Antifoam | Biocide | Antifreeze |
|---|---|---|---|---|---|---|---|---|---|
| | %w/w | %w/w | %w/w | %w/w | %w/w | %w/w | %w/w | %w/w | %w/w |
| 1-33 | Rest | Deltamethrin | Alcoguard 7100/Agrilan 777 + Morwet D-425 | - | Rhodopol 23 | Citric acid | Silcolapse 426R | Kathon CG/ICP + Proxel GXL | Propylene Glycol |
| | | 7.2 | 2.0+0.5 | - | 0.4 | 0.1 | 0.1 | 0.08+0.12 | 8.8 |
| 1-34 | Rest | Deltamethrin | Alcoguard 7100/Agrilan 777 + Morwet D-425 | - | Rhodopol 23 | Citric acid | Silcolapse 426R | Kathon CG/ICP + Proxel GXL | Propylene Glycol |
| | | 7.2 | 3.0 + 0.5 | - | 0.4 | 0.1 | 0.1 | 0.08+0.12 | 8.8 |
| 1-35 | Rest | Deltamethrin | Alcoguard 7100/Agrilan 777 + Morwet D-425 | - | Rhodopol 23 | Citric acid | Silcolapse 426R | Kathon CG/ICP + Proxel GXL | Propylene Glycol |
| | | 7.2 | 4.0 + 0.5 | - | 0.4 | 0.1 | 0.1 | 0.08+0.12 | 8.8 |
| 1-36 | Rest | Deltamethrin | Alcoguard 7100/Agrilan 777 + Morwet D-425 | - | Rhodopol 23 | Citric acid | Silcolapse 426R | Kathon CG/ICP + Proxel GXL | Propylene Glycol |
| | | 7.2 | 2.0 + 1.0 | - | 0.4 | 0.1 | 0.1 | 0.08+0.12 | 8.8 |
| 1-37 | Rest | Deltamethrin | Alcoguard 7100/Agrilan 777 Morwet D-425 | - | Rhodopol 23 | Citric acid | Silcolapse 426R | Kathon CG/ICP + Proxel GXL | Propylene Glycol |
| | | 7.2 | 3.0 + 1.0 | - | 0.4 | 0.1 | 0.1 | 0.08+0.12 | 8.8 |
| 1-38 | Rest | Deltamethrin | Alcoguard 7100/Agrilan 777 + Morwet D-425 | - | Rhodopol 23 | Citric acid | Silcolapse 426R | Kathon CG/ICP + Proxel GXL | Propylene Glycol |
| | | 7.3 | 4.0 + 1.0 | - | 0.4 | 0.1 | 0.1 | 0.07+0.1 | 8.8 |

**Example 3 → Preparation of Pyrethroid EC Formulations**

For the purposes of testing the formulability of pyrethroid as EC formulations all the ingredients specified in Table 3 were mixed together in a suitable container (e.g. glass beaker, steel reactor), and stirred with a magnetic stirrer or an overhead stirrer at room temperature until a homogeneous solution is obtained

**Table 3 - Comparative Examples Pyrethroid EC Formulations**

| FL Number | Pyrethroid | Emulsifiers | Stabilizer | Solvent |
|---|---|---|---|---|
| | %w/w | | | |
| 1-39 (EC 025) | Deltamethrin | Phenylsulfonate CA + Castor Oil /36 moles ethylene oxide (~Emulsogen EL 360) | Butylhydroxytoluene + Acetic Acid | Aromatic Solvent 100 |
| | 2.81 | 3.93 + 3.93 | 0.10 + 0.01 | To 100% |
| 1-40 (EC 100) | Deltamethrin | Phenylsulfonate CA + Castor Oil /36 moles ethylene oxide (~Emulsogen EL 360) | Butylhydroxytoluene + Acetic Acid | Cyclohexanone + Aromatic Solvent 100 |
| | 10.50 | 4.20 + 4.20 | 0.10 + 0.01 | 36.76 + To 100% |

**Example 4 → Preparation and Characterization of Adjuvant CS Formulations**

An embodiment of the present invention is a process for the preparation of Capsule Suspension agrochemical concentrates. For the purposes of testing the formulability of adjuvants as CS formulations, the CS formulations were prepared by following the steps mentioned below:

I. Preparation of the organic phase A)
II. Preparation of the aqueous phase B)
III. Preparation of an emulsion of A) in B)
IV. If needed, addition of a cross-linker g)
V. Heating
VI. Work up

In step (I) adjuvant/adjuvant mixtures b) and isocyanate f) , and, if appropriate an antioxidant m) are mixed together under stirring. Step (I) of the process according to the invention takes place generally at temperature between 10°C and 80°C, preferably between 0°C and 50°C, particularly preferably between 2°C and 40°C, most particularly preferably between 2°C and 30°C.

In step (II) an emulgator or a mixture of emulgators h), and, if appropriate, a pH buffer i), an antifoam j), biocides k), an antifreeze 1) are dissolved in water under stirring. Step (II) of the process according to the invention takes place generally at temperature between 10°C and 80°C, preferably between 0°C and 50°C, particularly preferably between 2°C and 40°C, most particularly preferably between 2°C and 30°C.

In step (III) the organic phase A) is given to the aqueous phase B) so that an emulsion of A) in B) is obtained. For the preparation of the emulsion one may use the typical emulsifier apparatus utilized for this purpose, for instance a rotor-stator mixer, or a jetstream. Step (III) of the process according to the invention takes place generally at temperature between 10°C and 80°C, preferably between 0°C and 50°C, particularly preferably between 2°C and 40°C, most particularly preferably between 2°C and 30°C. The preparation of the emulsion can be made batchwise or continuously.

In step (IV), the emulsion prepared in step (III) is optionally treated with a cross linker g).

In step (V) the mixture obtained in step (III), or optionally in step (IV), is stirred for some time to ensure a full reaction, and efficient formation of the capsules. Generally, step (V) take between 0 to 24 hours, preferably between 0.5 to 8 hours. Step (V) of the process according to the invention takes place generally at temperature between 5°C and 80°C, preferably between 10°C and 75°C, most preferably between 20°C and 70°C.

In step (VI), after the capsule formation reactions are finished, the capsule suspension obtained in step (V) is cooled to room temperature, and subsequently treated with a rheological agent e). If not already done in step (II), a pH buffer i), an antifoam j), biocides k), and an antifreeze L) are added to the obtained capsule suspension.

The according to the present invention process is run under atmospheric pressure.

Based on the quantity of capsule wall forming isocyanate f) and cross linker g), and the obtained particle size of the capsules, it is theoretically possible to calculate the thickness of the capsule wall. This calculated wall thickness of the

capsules of the according to the invention obtained capsule suspension lies between 0.001 μm and 4 μm, preferred between 0.01μm and 2μm, and most preferred between 0.01 μm and 1 μm.

The adjuvant/adjuvant mixture CS formulation examples are used to prepare ZC formulations according to the invention by mixing the adjuvant/adjuvant mixture CS formulation with a suitable amount of a pyrethroid SC formulation. The adjuvant/adjuvant mixture CS formulation examples prepared according to the invention are listed in Table 4.

**Table 4- Adjuvant/Adjuvant mixture CS Formulations**

| Experime nt | Wate r | Adjuvant/Adjuv ant mixture | Emulsifie r | Isocyanate | Cross linker | Rheolog y Control Agent | Antifoa m | Biocide | Antifreeze/Antioxida nt |
|---|---|---|---|---|---|---|---|---|---|
| | %w/ w | %w/w | %w/w | %w/w | %w/w | %w/w | %w/w | %w/w | %w/w |
| 2-1 | Rest | Disflamol TOF | POVAL 26-88 | Desmodur T 80 + Baymidur K 88 | - | Rhodop ol 23 | Silcolap se 426R | Kathon CG/ICP + Proxel GXL | - |
| | | 45.0 | 0.46 | 0.51+0.41 | - | 0.16 | 0.01 | 0.08+0. 09 | - |
| 2-2 | Rest | Disflamol TOF + Phytorob 926.65 | POVAL 26-88 | Desmodur T 80 + Baymidur K 88 | - | Rhodop ol 23 | Silcolap se 426R | Kathon CG/ICP Proxel GXL | - |
| | | 15.0+15.0 | 0.59 | 0.53+0.43 | - | 0.20 | 0.02 | 0.09+0. 13 | - |
| 2-3 | Rest | Disflamol TOF + Phytorob 926.65 | POVAL 26-88 | Desmodur T 80 + Baymidur K 88 | - | Rhodop ol 23 | Sileolap se 426R | Kathon CG/ICP Proxel GXL | Propylene Glycol |
| | | 23.68+23.68 | 0.36 | 0.53+0.43 | - | 0.20 | 0.01 | 0.09+0. 13 | 5.00 |
| 2-4 | Rest | Disflamol TOF + Phytorob 926.65 | POVAL 26-88 | Desmodur T 80 + Baymidur K 88 | - | Rhodop ol 23 | Silcolap se 426R | Kathon CG/ICP Proxel GXL | Propylene Glycol |
| | | 4.79+43.08 | 0.36 | 0.53+0.43 | - | 0.20 | 0.01 | 0.09+0. 13 | 5.00 |
| 2-5 | Rest | Disflamol TOF + Ethyl oleate | POVAL 26-88 | Baymidur K 88 | - | Rhodop ol 23 | SAG157 2 | Kathon CG/ICP Proxel GXL | - |
| | | 23.6 + 23.6 | 0.46 | 1.0 | - | 0.20 | 0.1 | 0.08+0. 12 | - |
| 2-6 | Rest | Disflamol TOF + Phytorob 926.65 | POVAL 26-88 | Baymidur K 88 | Hexamethylene diamine | Rhodop ol 23 | SAG157 2 | Kathon CG/ICP Proxel GXL | - |
| | | 23.6 + 23.6 | 0.41 | 1.0 | 0.2 | 0.40 | 0.1 | 0.08+0. 12 | - |
| 2-7 | Rest | Disflamol TOF + Phytorob 926.65 | POVAL 26-88 | Desmodur T80 | Hexamethylene diamine | Rhodop ol 23 | SAG157 2 | Kathon CG/ICP Proxel GXL | - |
| | | 23.6 + 23.6 | 0.41 | 1.0 | 0.2 | 0.40 | 0.1 | 0.08+0. 12 | - |

(continued)

| Experime nt | Wate r | Adjuvant/Adjuv ant mixture | Emulsifie r | Isocyanate | Cross linker | Rheolog y Control Agent | Antifoa m | Biocide | Antifreeze/Antioxida nt |
|---|---|---|---|---|---|---|---|---|---|
| | %w/ w | %w/w | %w/w | %w/w | %w/w | %w/w | %w/w | %w/w | %w/w |
| 2-8 | Rest | Disflamol TOF + Phytorob 926.65 | POVAL 26-88 | Desmodur T80+Baymid ur K88 | Hexamethylene diamine | Rhodop ol 23 | SAG157 2 | Kathon CG/ICP Proxel GXL | - |
| | | 23.6 + 23.6 | 0.41 | 0.53+0.42 | 0.4 | 0.40 | 0.1 | 0.08+0. 12 | - |
| 2-9 | Rest | Disflamol TOF + Phytorob 926.65 | Kraftsper se 25M | Desmodur T80+Baymid ur K88 | Hexamethylene diamine | Rhodop ol 23 | SAG157 2 | Kathon CG/ICP Proxel GXL | - |
| | | 23.6 + 23.6 | 1.0 | 0.53+0.42 | 0.2 | 0.40 | 0.1 | 0.08+0. 12 | - |
| 2-10 | Rest | Disflamol TOF + Phytorob 926.65 | Reax 910 | Desmodur T80+Baymid ur K88 | Hexamethylene diamine | Rhodop ol 23 | SAG157 2 | Kathon CG/ICP Proxel GXL | - |
| | | 23.6 + 23.6 | 1.0 | 0.53+0.42 | 0.2 | 0.40 | 0.1 | 0.09+0. 12 | - |
| 2-11 | Rest | Disflamol TOF + Phytorob 926.65 | POVAL 26/88 | Desmodur T80+Baymid ur K88 | Hexamethylene diamine | Rhodop ol 23 | SAG157 2 | Kathon CG/ICP Proxel GXL | - |
| | | 23.6 + 23.6 | 0.31 | 0.60+0.30 | 0.2 | 0.40 | 0.1 | 0.08+0. 12 | - |
| 2-12 | Rest | Disflamol TOF + Phytorob 926.65 | POVAL 26/88 | Desmodur T80+Baymid ur K88 | Hexamethylene diamine | Rhodop ol 23 | SAG157 2 | Kathon CG/ICP Proxel GXL | - |
| | | 4.73 + 42.54 | 0.41 | 0.53+0.42 | 0.2 | 0.40 | 0.1 | 0.08+0. 12 | - |
| 2-13 | Rest | Disflamol TOF + Phytorob 926.65 | Reax 910 | Baymidur K88 | Hexamethylene diamine | Rhodop ol 23 | SAG157 2 | Kathon CG/ICP Proxel GXL | - |
| | | 4.73 + 42.54 | 1.0 | 1.0 | 0.2 | 0.40 | 0.1 | 0.09+0. 12 | - |
| 2-14 | Rest | Disflamol TOF + Phytorob 926.65 | Reax 910 | Baymidur K88 | Hexamethylene diamine | Rhodop ol 23 | SAG157 2 | Kathon CG/ICP Proxel GXL | - |
| | | 4.73 + 42.54 | 1.0 | 1.0 | 0.4 | 0.40 | 0.1 | 0.08+0. 12 | - |

(continued)

| Experime nt | Wate r | Adjuvant/Adjuv ant mixture | Emulsifie r | Isocyanate | Cross linker | Rheolog y Control Agent | Antifoa m | Biocide | Antifreeze/Antioxida nt |
|---|---|---|---|---|---|---|---|---|---|
| | %w/ w | %w/w | %w/w | %w/w | %w/w | %w/w | %w/w | %w/w | %w/w |
| 2-15 | Rest | Disflamol TOF + Phytorob 926.65 | Reax 910 | Baymidur K88 | - | Rhodop ol 23 | SAG157 2 | Kathon CG/ICP Proxel GXL | - |
| | | 4.73 + 42.54 | 1.0 | 1.0 | - | 0.40 | 0.1 | 0.08+0. 12 | - |
| 2-16 | Rest | Disflamol TOF + Phytorob 926.65 | Reax 910 | Desmodur T80 | Hexamethylene diamine | Rhodop ol 23 | SAG157 2 | Kathon CG/ICP Proxel GXL | - |
| | | 4.73 + 42.54 | 1.0 | 1.0 | 0.2 | 0.40 | 0.1 | 0.08+0. 12 | - |
| 2-17 | Rest | Disflamol TOF + Phytorob 926.65 | Reax 910 | Baymidur K88 | Hexamethylene diamine | Rhodop ol 23 | SAG157 2 | Kathon CG/ICP Proxel GXL | - |
| | | 23.63 + 23.63 | 1.0 | 1.0 | 0.2 | 0.40 | 0.1 | 0.08+0. 12 | - |
| 2-18 | Rest | Disflamol TOF + Phytorob 926.65 | POVAL 26-88 | Desmodur T80 + Baymidur K88 | - | Rhodop ol 23 | SAG157 2 | Kathon CG/ICP Proxel GXL | Propylene Glycol |
| | | 11.84 + 35.53 | 0.36 | 0.53 + 0.43 | - | 0.20 | 0.1 | 0.09+0. 13 | 5.00 |
| 2-19 | Rest | Disflamol TOF + Phytorob 926.65 | Reax 910 | Baymidur K88 | Hexamethylene diamine | Rhodop ol 23 | SAG157 2 | Kathon CG/ICP Proxel GXL | - |
| | | 11.82 + 35.45 | 1.00 | 1.00 | 0.2 | 0.20 | 0.1 | 0.09+0. 13 | - |
| 2-20 | Rest | Disflamol TOF | POVAL 26-88 | Desmodur T80 + Baymidur K88 | Diethylene triamine | Rhodop ol 23 | SAG157 2 | Kathon CG/ICP Proxel GXL | - |
| | | 46.88 | 0.43 | 0.53 + 0.42 | 0.2 | 0.4 | 0.1 | 0.10+0. 14 | - |
| 2-21 | Rest | Disflamol TOF | POVAL 26-88 | Desmodur T80 + Baymi-dur K88 | Hexamethylene dia-mine | Rhodop ol 23 | SAG157 2 | Kathon CG/ICP Proxel GXL | - |
| | | 46.88 | 0.43 | 0.53 + 0.42 | 0.2 | 0.4 | 0.1 | 0.10+0 14 | - |

(continued)

| Experiment | Water | Adjuvant/Adjuvant mixture | Emulsifier | Isocyanate | Cross linker | Rheology Control Agent | Antifoam | Biocide | Antifreeze/Antioxidant |
|---|---|---|---|---|---|---|---|---|---|
| | %w/w | %w/w | %w/w | %w/w | %w/w | %w/w | %w/w | %w/w | %w/w |
| 2-22 | Rest | Disflamol TOF | POVAL 26-88 | Desmodur T80 + Baymidur K88 | Bis(hexamethylene) tria mine | Rhodop ol 23 | SAG157 2 | Kathon CG/ICP Proxel GXL | - |
| | | 46.88 | 0.43 | 0.53 + 0.42 | 0.2 | 0.4 | 0.1 | 0.10+0 14 | - |
| 2-23 | Rest | Disflamol TOF | Synperon ic PE/F127 | Desmodur T80 + Baymidur K88 | - | Rhodop ol 23 | SAG157 2 | Kathon CG/ICP Proxel GXL | - |
| | | 46.88 | 0.50 | 0.53 + 0.42 | - | 0.4 | 0.1 | 0.10+0 14 | - |
| 2-24 | Rest | Disflamol TOF | Morwet D-425 | Desmodur T80 + Baymidur K88 | - | Rhodop ol 23 | SAG157 2 | Kathon CG/ICP Proxel GXL | - |
| | | 46.88 | 0.50 | 0.53 + 0.42 | - | 0.4 | 0.1 | 0.10+0. 14 | - |
| 2-25 | Rest | Disflamol TOF | Reax 105M | Desmodur T80 + Baymidur K88 | - | Rhodop ol 23 | SAG157 2 | Kathon CG/ICP Proxel GXL | - |
| | | 46.88 | 0.50 | 0.53 + 0.42 | - | 0.4 | 0.1 | 0.10+0. 14 | - |
| 2-26 | Rest | Disflamol TOF | Reax 88B | Desmodur T80 + Baymidur K88 | - | Rhodop ol 23 | SAG157 2 | Kathon CG/ICP Proxel GXL | - |
| | | 46.88 | 0.50 | 0.53 + 0.42 | - | 0.4 | 0.1 | 0.10+0. 14 | - |
| 2-27 | Rest | Disflamol TOF | Reax 88B | Desmodur N 3300 | - | Rhodop ol 23 | SAG157 2 | Kathon CG/ICP Proxel GXL | - |
| | | 46.88 | 0.50 | 0.53 | - | 0.4 | 0.1 | 0.10+0. 14 | - |
| 2-28 | Rest | Disflamol TOF + Phytorob 926.65 | POVAL 26-88 | Desmodur T80 + Baymi-dur K88 | Hexamethylene dia-mine | Rhodop ol 23 | Silcolap se 426 R | Kathon CG/ICP Proxel GXL | - |
| | | 23.43 + 23.43 | 0.41 | 0.53 + 0.43 | 0.2 | 0.2 | 0.01 | 0.09+0. 13 | - |

(continued)

| Experiment | Water | Adjuvant/Adjuvant mixture | Emulsifier | Isocyanate | Cross linker | Rheology Control Agent | Antifoam | Biocide | Antifreeze/Antioxidant |
|---|---|---|---|---|---|---|---|---|---|
| | %w/w | %w/w | %w/w | %w/w | %w/w | %w/w | %w/w | %w/w | %w/w |
| 2-29 | Rest | Disflamol TOF + Phytorob 926.65 | Reax 88B | Desmodur T80 + Baymidur K88 | Hexamethylene diamine | Rhodop ol 23 | SAG 1572 | Kathon CG/ICP Proxel GXL | - |
| | | 23.63 + 23.63 | 1.00 | 0.53 + 0.43 | 0.2 | 0.2 | 0.10 | 0.09+0. 13 | - |
| 2-30 | Rest | Disflamol TOF + Phytorob 926.65 | Reax 88B | Desmodur T80 + Baymidur K88 | Hexamethylene diamine | Rhodop ol 23 | SAG 1572 | Kathon CG/ICP Proxel GXL | - |
| | | 4.50 + 40.50 | 1.00 | 0.53 + 0.43 | 0.2 | 0.2 | 0.10 | 0.09+0. 13 | - |
| 2-31 | Rest | Disflamol TOF + Phytorob 926.65 | POVAL 26-88 | Desmodur T80 + Desmodur VL | - | Rhodopol 23 | Silcolapse 426 R | Kathon CG/ICP Proxel GXL | Propylene Glycol |
| | | 23.6+23.6 | 0.4 | 0.5 + 1.0 | - | 0.2 | 0.1 | 0.08+0.12 | 5.0 |
| 2-32 | Rest | Disflamol TOF + Phytorob 926.65 | POVAL 26-88 | Desmodur T80 + Desmodur VL | - | Rhodopol 23 | Silcolapse 426 R | Kathon CG/ICP Proxel GXL | Propylene Glycol |
| | | 23.6+23.6 | 0.4 | 1.0+0.5 | - | 0.2 | 0.1 | 0.08+0.12 | 5.0 |
| 2-33 | Rest | Disflamol TOF + Phytorob 926.65 | POVAL 26-88 | Desmodur T80 + Desmodur VL | - | Rhodopol 23 | Silcolapse 426 R | Kathon CG/ICP Proxel GXL | Propylene Glycol |
| | | 23.6+23.6 | 0.4 | 0.5 + 0.8 | - | 0.2 | 0.1 | 0.08+0.12 | 5.0 |
| 2-34 | Rest | Disflamol TOF + Phytorob 926.65 | POVAL 26-88 | Desmodur T80 + Desmodur VL | - | Rhodopol 23 | Silcolapse 426 R | Kathon CG/ICP Proxel GXL | Propylene Glycol |
| | | 23.6+23.6 | 0.4 | 0.2 + 0.2 | - | 0.2 | 0.1 | 0.08+0.12 | 5.0 |
| 2-35 | Rest | Disflamol TOF + Phytorob 926.55 | POVAL 26-88 | Desmodur T80 + Desmodur VL | - | Rhodopol 23 | SAG 1572 | Kathon CG/ICP Proxel GXL | Propylene Glycol |
| | | 11.9+35.6 | 0.4 | 0.5 + 1.0 | - | 0.2 | 0.1 | 0.08+0.12 | 5.0 |

(continued)

| Experiment | Water | Adjuvant/Adjuvant mixture | Emulsifier | Isocyanate | Cross linker | Rheology Control Agent | Antifoam | Biocide | Antifreeze/Antioxidant |
|---|---|---|---|---|---|---|---|---|---|
| | %w/w | %w/w | %w/w | %w/w | %w/w | %w/w | %w/w | %w/w | %w/w |
| 2-36 | Rest | Disflamol TOF + Phytorob 926.65 | POVAL 26-88 | Desmodur T80 + Desmodur VL | - | Rhodopol 23 | SAG 1572 | Kathon CG/ICP Proxel GXL | Propylene Glycol |
| | | 11.9+35.6 | 0.4 | 1.0 + 0.5 | - | 0.2 | 0.1 | 0.08+0.12 | 5.0 |
| 2-37 | Rest | Disflamol TOF + Phytorob 926.55 | POVAL 26-88 | Desmodur T80 + Desmodur VL | - | Rhodopol 23 | SAG 1572 | Kathon CG/ICP Proxel GXL | Propylene Glycol |
| | | 11.9+35.6 | 0.4 | 0.5 + 0.8 | - | 0.2 | 0.1 | 0.08+0.12 | 5.0 |
| 2-38 | Rest | Disflamol TOF + Phytorob 926.65 | POVAL 26-88 | Desmodur T80 + Desmodur VL | - | Rhodopol 23 | SAG 1572 | Kathon CG/ICP Proxel GXL | Propylene Glycol |
| | | 11.9+35.6 | 0.4 | 0.2 + 0.2 | - | 0.2 | 0.1 | 0.08+0.12 | 5.0 |
| 2-39 | Rest | Disflamol TOF + Phytorob 926.65 | POVAL 26-88 | Desmodur T80 + Desmodur VL | - | Rhodopol 23 | SAG 1572 | Kathon CG/ICP Proxel GXL | Propylene Glycol |
| | | 23.6+23.6 | 0.2 | 0.5+0.4 | - | 0.2 | 0.1 | 0.08+0.12 | 5.0 |
| 2-40 | Rest | Disflamol TOF + Phytorob 926.65 | POVAL 26-88 | Desmodur T80 + Desmodur VL | - | Rhodopol 23 | SAG 1572 | Kathon CG/ICP Proxel GXL | Propylene Glycol |
| | | 11.9+35.6 | 0.2 | 0.5+0.4 | - | 0.2 | 0.1 | 0.08+0.12 | 5.0 |
| 2-41 | Rest | Disflamol TOF + Phytorob 926.65 | POVAL 26-88 | Desmodur T80 + Desmodur VL | - | Rhodopol 23 | SAG 1572 | Kathon CG/ICP Proxel GXL | Propylene Glycol |
| | | 23.6+23.6 | 0.8 | 0.5+0.4 | - | 0.2 | 0.1 | 0.08+0.12 | 5.0 |
| 2-42 | Rest | Disflamol TOF + Phytorob 926.65 | POVAL 26-88 | Desmodur T80 + Desmodur VL | - | Rhodopol 23 | SAG 1572 | Kathon CG/ICP Proxel GXL | Propylene Glycol |
| | | 11.9+35.6 | 0.8 | 0.5+0.4 | - | 0.2 | 0.1 | 0.08+0.12 | 5.0 |

(continued)

| Experime nt | Wate r | Adjuvant/Adjuv ant mixture | Emulsifie r | Isocyanate | Cross linker | Rheolog y Control Agent | Antifoa m | Biocide | Antifreeze/Antioxida nt |
|---|---|---|---|---|---|---|---|---|---|
| | %w/ w | %w/w | %w/w | %w/w | %w/w | %w/w | %w/w | %w/w | %w/w |
| 2-43 | Rest | Disflamol TOF + Phytorob 926.65 | POVAL 26-88 | Desmodur T80 + Desmodur VL | - | Rhodopol 23 | SAG 1572 | Kathon CG/ICP Proxel GXL | Propylene Glycol/Butylhydroxytolu ene |
| | | 23.6+23.6 | 0.4 | 0.5+0.4 | - | 0.2 | 0.1 | 0.08+0.12 | 5.0/0.1 (BHT is dissolved in the organic phase) |

**Technical Characterization and Storage Stability**

The adjuvant CS formulations are stable over time, and show no particle size degradation, capsule instability (Table 5).

**Table 5- Adjuvant CS Formulations Storage Stability**

| Formulation Ex. | Particle Size (d90/d50, μm) | | | Syneresis (% Sediment) | | | pH Formulation (100%) | | | Adjuvant Concentration Disflamol TOF/ Phytorob 926.65 (%w/w) | | |
|---|---|---|---|---|---|---|---|---|---|---|---|---|
| | Start | 2WRT | 2W54 | Start | 2WRT | 2W54 | Start | 2WRT | 2W54 | Start | 2WRT | 2W54 |
| 2-1 | 19/10 | - | - | 100% | - | - | 6.0 | - | - | - | - | - |
| 2-2 | 36/19 | 36/19 | 36/19 | 100% | 100% | 100% | 5.8 | 6.3 | 5.5 | 14.9/15.0 | 15.2/15.1 | 15.2/15.1 |
| 2-3 | 32/18 | 32/18 | 32/18 | 100% | 100% | 100% | - | - | - | 23.7/23.9 | 23.6/23.8 (4WRT) | 23.5/24.0 (4WRT) |
| 2-4 | 32/18 | 32/18 | 32/18 | 100% | 100% | 100% | 6.1 | 6.3 | 6.5 | 4.4/38.9 | 4.4/38.9 (12WRT) | 4.3/37.7 (12W40) |
| 2-5 | 25/13 | 25/13 | 24/13 | 100% | 100% | 100% | - | - | - | - | - | - |
| 2-9 | 15/7 | 15/9 | 15/9 | 100% | 98% | 95% | - | - | - | - | - | - |
| 2-12 | 11/5 | 11/5 | 11/5 | 100% | 100% | 100% | - | - | - | - | - | - |
| 2-13 | 28/17 | 28/17 | 28/17 | 100% | 98% | 95% | - | - | - | - | - | - |
| 2-17 | 15/9 | 15/8 | 15/9 | 100% | 100% | 98% | - | - | - | - | - | - |
| 2-18 | 13/6 | 13/7 | 13/6 | 100% | 100% | 100% | - | - | - | - | - | - |
| 2-19 | 13/6 | 15/9 | 15/9 | 100% | 100% | 98% | - | - | - | - | - | - |
| 2-28 | 16/8 | 16/8 | 19/9 | 100% | 100% | 95% | - | - | - | - | - | - |
| 2-29 | 12/7 | 12/7 | 15/8 | 100% | 100% | 98% | - | - | - | - | - | - |
| 2-30 | 12/7 | 12/7 | 14/8 | 100% | 100% | 100% | | | | - | - | - |
| 2-43 | 18/9 | 18/9 | 18/9 (run @45°C) | 0% | 0% | 0% (run @45°C) | - | - | - | - | - | - |

Alternatively, the adjuvant/adjuvant mixture (b) can also be formulated as emulsions in water (EW).

**Adjuvant, emulsifier, water** and optionally **polyvinyl pyrrolidone** are stirred together until a homogeneous white solution has been obtained. This is then homogenized further with a stator-rotor emulsifier (e.g. Ultra-Turrax®) at 10,000-25,000 rpm until a white homogeneous emulsion is obtained. The particle size of the resulting emulsion lies between d50 0.5-1μm, d90 1-5 μm (emulsifier = Pluronic PE 10500) or between d50 5-9μm, d90 15-20 μm (emulsifier = Aerosil R816). The remaining components are added to the emulsion **(biocide, antifoam, antifreeze).** Examples of Adjuvant EW Formulations are listed in Table 6.

**Table 6- Adjuvant EW Formulations**

| Experiment | Water | Adjuvant | Emulsifier | Antifoam | Biocide | Polyvinyl Pyrrolidone | Antifreeze |
|---|---|---|---|---|---|---|---|
| | %w/w | %w/w | %w/w | %w/w | %w/w | %w/w | %w/w |
| 4-1 | Rest | Disflamol TOF | Pluronic PE 10500 | SAG 1572 | Kathon CG/ICP + Proxel GXL | - | 1,2-Propylene glycol |
| | | 50.0 | 5.5 | 0.01 | 0.08+0.18 | - | 10.0 |
| 4-2 | Rest | Disflamol TOF | Aerosil R816 | SAG 1572 | Kathon CG/ICP Proxel GXL | - | 1,2-Propylene glycol |
| | | 40.0 | 2.0 | 0.01 | 0.08+0.18 | - | 10.0 |
| 4-3 | Rest | Disflamol TOF + **Phytorob 926.65** | Synperonic PE/F127 | - | Kathon CG/ICP Proxel GXL | Sokalan K 90 | Glycerin |
| | | 200 + 20.0 | 7.5 | - | 0.08+0.18 | 1.0 | 5.0 |

The technical properties of the EW formulations are shown in Table 7.

**Table 7- Adjuvant EW Formulations Technical Properties**

| Formulation Ex. | Particle Size (d90/d50, μm) | Syneresis/Phase Separation (% Sediment) | pH Formulation (100%) |
|---|---|---|---|
| 4-2 | 22/13 | 100% | - |
| 4-3 | 0.6/0.5 | 100% | 7.6 |

**Example 5→ Preparation and Characterization of In-Can Adjuvanted ZC Pyrethroid Formulations**

For the purposes of testing the formulability of pyrethroids as in-can adjuvanted ZC formulations, pyrethroid SC formulations are stirred together with the adjuvant CS formulations at room temperature, until a homogeneous mixture is obtained. The pyrethroid SC formulations may be isolated and stored for further use or prepared *in situ* before mixing with the corresponding adjuvant CS formulations in order to produce ZC formulations according to the invention (Table *8). In situ* preparation of the pyrethroid SC formulation means that the water content of the SC pyrethroid formulation was not filled to 100% as described in Table 2, but rather the water content was reduced to accommodate the concentration of the CS formulation with which the SC formulation is to be mixed to produce a ZC formulation according to the invention.

Alternatively, it is also possible to mix a pyrethroid SC formulations with an adjuvant/adjuvant mixture CS formulation, and to mix the resulting preliminary ZC formulation with any additional formulation components, or water filler to a final composition of 100%, or to the necessary volume.

Examples of ZC Formulations according to the invention are described in Table 8.

**Table 8-Pyrethroid ZC Formulations According to the Invention**

| Num. | Pyrethroid SC Formulation Example Table 2 %w/w | ZC Final Composition | | | | | | | | | | | | |
|---|---|---|---|---|---|---|---|---|---|---|---|---|---|---|
| | Adjuvant/Adjuvant Mixture CS Formulation Example Table 4 %w/w | Water | Pyrethroid | Adjuvant/Adjuvant Mixture | Dispersant in Pyrethroid SC Formulation Example | Emulsifier in Adjuvant/Adjuvant Mixture CS Formulation Example* | Wetting Agent | Rheology Control Agent | pH Buffer | Antifoam | Biocide | Isocyanate* | Cross linker* | Antifreeze/Antioxidant |
| | | %w/w | %w/w | %w/w | %w/w | | %w/w | %w/w | %w/w | %w/w | %w/w | %w/w | %w/w | %w/w |
| 6-1 | 1-3 (77.78) | Rest | Deltamethrin | Disflamol TOF | Atlox 4913 + Morwet D-425 | POVAL 26-88 | - | Rhodopol 23 | Citric acid | Silcolapse 426 R | Kathon CG/ICP Proxel GXL | Desmodur T 80 + Baymidur K 88 | - | Propylene Glycol |
| | 2-1 (22.22%) | | 1.00 | 10.00 | 2.00 + 1.00 | 0.10 | - | 0.33 | 0.02 | 0.004 | 0.1+0.14 | 0.11+0.09 | - | 10 |
| 6-2 | 1-3 (55.56 % w/w) | Rest | Deltamethrin | Disflamol TOF | Atlox 4913 + Morwet D-425 | POVAL 26-88 | - | Rhodopol 23 | Citric acid | Silcolapse 426 R | Kathon CG/ICP Proxel GXL | Desmodur T 80 + Bavmidur K 88 | - | Propylene Glycol |
| | 2-1 (44.44%) | | 1.00 | 20.00 | 2.00 + 1.00 | 0.20 | - | 037 | 0.02 | 0.01 | 0.12+0.15 | 0.23+0.18 | - | 10 |
| 6-3 | 1-3 (33.34 % w/w) | Rest | Deltamethrin | Disflamol TOF | Atlox 4913 + Morwet D-425 | POVAL 26-88 | - | Rhodopol 23 | Citric acid | Silcolapse 426 R | Kathon CG/ICP Proxel GXL | Desmodur T 80 + Bavmidur K 88 | - | Propylene Glycol |
| | 2-1 (66.66%) | | 1.00 | 30.00 | 2.00 + 1.00 | 0.30 | - | 0.41 | 0.02 | 0.01 | 0.14+0.17 | 0.34+0.27 | - | 10 |
| 6-4 | 1-3 (77.78) | Rest | Deltamethrin | Disflamol TOF | Atlox 4913 + Morwet D-425 + Pluronic PE 6400 | POVAL 26-88 | Silwet HS312 | Rhodopol 23 | Citric acid | SAG 1572 | Kathon CG/ICP Proxel GXL | Desmodur T 80 + Baymidur K 88 | - | Propylene Glycol |
| | 2-1 (22.22%) | | 1.0 | 10.00 | 2.0 + 1.0+10.0 | 0.10 | 10.0 | 0.7 | 0.1 | 0.1 | 0.1+0.14 | 0.11+0.09 | - | 5.00 |

(continued)

| Num. | Pyrethroid SC Formulation Example Table 2 %w/w | ZC Final Composition | | | | | | | | | | | | |
|---|---|---|---|---|---|---|---|---|---|---|---|---|---|---|
| | Adjuvant/Adjuvant Mixture CS Formulation Example Table 4 %w/w | Water | Pyrethroid | Adjuvant/Adjuvant Mixture | Dispersant in Pyrethroid SC Formulation Example | Emulsifier in Adjuvant/Adjuvant Mixture CS Formulation Example* | Wetting Agent | Rheology Control Agent | pH Buffer | Antifoam | Biocide | Isocyanate* | Cross linker* | Antifreeze/Antioxidant |
| | | %w/w | %w/w | %w/w | %w/w | | %w/w | %w/w | %w/w | %w/w | %w/w | %w/w | %w/w | %w/w |
| 6-5 | 1-3 (88.90) | Rest | Deltamethrin | Disflamol TOF | Atlox 4913 + Morwet D-425 + Pluronic PE 6400 | POVAL 26-88 | Silwet HS312 | Rhodopol 23 | Citric acid | SAG 1572 | Kathon CG/ICP Proxel GXL | Desmodur T 80 + Baymidur K 88 | - | Propylene Glycol |
| | 2-1 (11.10%) | | 1.0 | 5.00 | 2.0 + 1.0+10.0 | 0.10 | 10.0 | 0.4 | 0.1 | 0.1 | 0.08+0.13 | 0.06+0.04 | - | 5.00 |
| 6-6 | 1-12 (95.0%) | Rest | Deltamethrin | Disflamol TOF | Atlox 4913 + Morwet D-425 + Pluronic PE 6400 | POVAL 26-88 | Silwet HS312 | Rhodopol 23 | Citric acid | SAG 1572 | Kathon CG/ICP Proxel GXL | Desmodur T 80 + Baymidur K 88 | - | Propylene Glycol |
| | 2-1 (5.0%) | | 2.4 | 2.25 | 2.0 + 1.0+10.0 | 0.02 | 10.0 | 0.4 | 0.1 | 0.1 | 0.08+0.12 | 0.02+0.02 | - | 5.00 |
| 6-7 | 1-12 (90.0%) | Rest | Deltamethrin | Disflamol TOF | Atlox 4913 + Morwet D-425 + Pluronic PE 6400 | POVAL 26-88 | Silwet HS312 | Rhodopol 23 | Citric acid | SAG 1572 | Kathon CG/ICP Proxel GXL | Desmodur T 80 + Bavmidur K 88 | - | Propylene Glycol |
| | 2-1 (10.0%) | | 2.4 | 4.5 | 2.0 + 1.0+10.0 | 0.04 | 10.0 | 0.4 | 0.1 | 0.1 | 0.09+0.13 | 0.05+0.04 | - | 5.00 |

(continued)

| Num. | Pyrethroid SC Formulation Example Table 2 %w/w | ZC Final Composition | | | | | | | | | | | | |
|---|---|---|---|---|---|---|---|---|---|---|---|---|---|---|
| | Adjuvant/Adjuvant Mixture CS Formulation Example Table 4 %w/w | Water | Pyrethroid | Adjuvant/Adjuvant Mixture | Dispersant in Pyrethroid SC Formulation Example | Emulsifier in Adjuvant/Adjuvant Mixture CS Formulation Example* | Wetting Agent | Rheology Control Agent | pH Buffer | Antifoam | Biocide | Isocyanate* | Cross linker* | Antifreeze/Antioxidant |
| | | %w/w | %w/w | %w/w | %w/w | | %w/w | %w/w | %w/w | %w/w | %w/w | %w/w | %w/w | %w/w |
| 6-8 | 1-5 (77.78) | Rest | Deltamethrin | Disflamol TOF | Atlox 4913 + Morwet D-425 | POVAL 26-88 | - | Rhodopol 23 | Citric acid | Silcolapse 426 R | Kathon CG/ICP Proxel GXL | Desmodur T 80 + Bavmidur K 88 | - | Propylene Glycol |
| | 2-1 **(22.22%)** | | 5.00 | 10.00 | 2.00 + 1.00 | 0.10 | - | 0.4 | 0.2 | 0.004 | 0.08+0.12 | 0.11+0.09 | - | 10 |
| 6-9 | 1-5 (33.34 % w/w) | Rest | Deltamethrin | Disflamol TOF | Atlox 4913 + Morwet D-425 | POVAL 26-88 | - | Rhodopol 23 | Citric acid | Silcolapse 426 R | Kathon CG/ICP Proxel GXL | Desmodur T 80 + Bavmidur K 88 | - | Propylene Glycol |
| | 2-1 (66.66%) | | 5.00 | 30.00 | 2.00 + 1.00 | 0.31 | - | 0.41 | 0.2 | 0.11 | 0.13+0.18 | 0.34+0.27 | - | 10 |
| 6-10 | 1-6 (60.0 % w/w) | Rest | Deltamethrin | Disflamol TOF | Atlox 4913 + Morwet D-425 | POVAL 26-88 | - | Rhodopol 23 | Citric acid | Silcolapse 426 R | Kathon CG/ICP Proxel GXL | Desmodur T 80 + Bavmidur K 88 | - | Propylene Glycol |
| | 2-1 (400%) | | 7.50 | 18.09 | 2.00 + 1.00 | 0.18 | - | 0.4 | 0.2 | 0.01 | 0.11+0.15 | 0.20+0.16 | - | 10 |
| 6-11 | 1-6 (40.0%w/w) | Rest | Deltamethrin | Disflamol TOF | Atlox 4913 + Morwet D-425 | POVAL 26-88 | - | Rhodopol 23 | Citric acid | Silcolapse 426 R | Kathon CG/ICP Proxel GXL | Desmodur T 80 + Bavmidur K 88 | - | Propylene Glycol |
| | 2-1 (60.0%) | | 7.50 | 27.09 | 2.00 + 1.00 | 0.28 | - | 0.41 | 0.2 | 0.11 | 0.13+0.18 | 0.31+0.27 | - | 10 |

(continued)

| Num. | Pyrethroid SC Formulation Example Table 2 %w/w / Adjuvant/Adjuvant Mixture CS Formulation Example Table 4 %w/w | ZC Final Composition | | | | | | | | | | | | |
|---|---|---|---|---|---|---|---|---|---|---|---|---|---|---|
| | | Water | Pyrethroid | Adjuvant/Adjuvant Mixture | Dispersant in Pyrethroid SC Formulation Example | Emulsifier in Adjuvant/Adjuvant Mixture CS Formulation Example* | Wetting Agent | Rheology Control Agent | pH Buffer | Antifoam | Biocide | Isocyanate* | Cross linker* | Antifreeze/Antioxidant |
| | | %w/w | %w/w | %w/w | %w/w | | %w/w | %w/w | %w/w | %w/w | %w/w | %w/w | %w/w | %w/w |
| 6-12 | 1-7 (77.78) | Rest | Deltamethrin | Disflamol TOF | Atlox 4913 + Morwet D-425 | POVAL 26-88 | - | Rhodopol 23 | Citric acid | Silcolapse 426 R | Kathon CG/ICP Proxel GXL | Desmodur T 80 + Bavmidur K 88 | - | Propylene Glycol |
| | 2-1 (22.22%) | | 10.00 | 10.00 | 2.00 + 1.00 | 0.10 | - | 0.13 | 0.2 | 0.1 | 0.10+0.14 | 0.11+0.09 | - | 10 |
| 6-13 | 1-7 (55.56 % w/w) | Rest | Deltamethrin | Disflamol TOF | Atlox 4913 + Morwet D-425 | POVAL 26-88 | - | Rhodopol 23 | Citric acid | Silcolapse 426 R | Kathon CG/ICP Proxel GXL | Desmodur T 80 + Bavmidur K 88 | - | Propylene Glycol |
| | 2-1 (44.44%) | | 10.00 | 20.00 | 2.00 + 1.00 | 0.20 | - | 0.44 | 0.2 | 0.1 | 0.12+0.16 | 0.22+0.18 | - | 10 |
| 6-14 | 1-7 (33.34 % w/w) | Rest | Deltamethrin | Disflamol TOF | Atlox 4913 + Morwet D-425 | POVAL 26-88 | - | Rhodopol 23 | Citric acid | Silcolapse 426 R | Kathon CG/ICP Proxel GXL | Desmodur T 80 + Bavmidur K 88 | - | Propylene Glycol |
| | 2-1 (66.66%) | | 10.00 | 30.00 | 2.00 + 1.00 | 0.29 | - | 0.40 | 0.2 | 0.11 | 0.15+0.20 | 0.35+0.28 | - | 10 |
| 6-15 | 1-2 (30.00 % w/w) | Rest | Deltamethrin | Disflamol TOF + Phytorob 926.65 | Atlox 4913 + Morwet D-425 | POVAL 26-88 | - | Rhodopol 23 | Citric acid | Silcolapse 426 R | Kathon CG/ICP Proxel GXL | Desmodur T 80 + Bavmidur K 88 | - | Propylene Glycol |
| | 2-2 (70.00%) | | 1.00 | 10.50 + 10.50 | 2.00 + 1.00 | 0.41 | - | 0.54 | 0.20 | 0.11 | 0.14+0.21 | 0.37+0.30 | - | 10 |

(continued)

| Num. | Pyrethroid SC Formulation Example Table 2 %w/w | ZC Final Composition | | | | | | | | | | | | |
|---|---|---|---|---|---|---|---|---|---|---|---|---|---|---|
| | Adjuvant/Adjuvant Mixture CS Formulation Example Table 4 %w/w | Water | Pyrethroid | Adjuvant/Adjuvant Mixture | Dispersant in Pyrethroid SC Formulation Example | Emulsifier in Adjuvant/Adjuvant Mixture CS Formulation Example* | Wetting Agent | Rheology Control Agent | pH Buffer | Antifoam | Biocide | Isocyanate* | Cross linker* | Antifreeze/Antioxidant |
| | | %w/w | %w/w | %w/w | %w/w | | %w/w | %w/w | %w/w | %w/w | %w/w | %w/w | %w/w | %w/w |
| 6-16 | 1-5 (30.00 % w/w) | Rest | Deltamethrin | Disflamol TOF + Phvtorob 926.65 | Atlox 4913 + Morwet D-425 | POVAL 26-88 | - | Rhodopol 23 | Citric acid | Silcolapse 426 R | Kathon CG/ICP + Proxel GXL | Desmodur T 80 + Bavmidur K 88 | - | Propylene Glycol |
| | 2-2 (70.00%) | | 5.00 | 10.50 + 10.50 | 2.00 + 1.00 | 0.41 | - | 0.54 | 0.2 | 0.11 | 0.14+0.21 | 0.37+0.30 | - | 10 |
| 6-17 | 1-7 (30.00 % w/w) | Rest | Deltamethrin | Disflamol TOF + Phytorob 926.65 | Atlox 4913 + Morwet D-425 | POVAL 26-88 | - | Rhodopol 23 | Citric acid | Silcolapse 426 R | Kathon CG/ICP Proxel GXL | Desmodur T 80 + Bavmidur K 88 | - | Propylene Glycol |
| | 2-2 (70.00%) | | 10.00 | 10.50 + 10.50 | 2.00 + 1.00 | 0.41 | - | 0.54 | 0.2 | 0.11 | 0.14+0.21 | 0.37+0.30 | - | 10 |
| 6-18 | 1-7 (65.00 % w/w) | Rest | Deltamethrin | Disflamol TOF + Phytorob 926.65 | Atlox 4913 + Morwet D-425 | POVAL 26-88 | - | Rhodopol 23 | Citric acid | Silcolapse 426 R | Kathon CG/ICP Proxel GXL | Desmodur T 80 + Bavmidur K 88 | - | Propylene Glycol |
| | 2-2 (35.00%) | | 10.00 | 5.25 + 5.25 | 2.00 + 1.00 | 0.20 | - | 047 | 02 | 0.10 | 0.11+0.17 | 0.18+0.15 | - | 10 |
| 6-19 | 1-6 (77.80%) | Rest | Deltamethrin | Disflamol TOF + Phytorob 926.65 | Atlox 4913 + Morwet D-425 | POVAL 26-88 | - | Rhodopol 23 | Citric acid | Silcolapse 426 R | Kathon CG/ICP Proxel GXL | Desmodur T 80 + Baymidur K 88 | - | Propylene Glycol |
| | 2-3 (22.20) | | 7.5 | 5.16 + 5.16 | 2.00 + 1.00 | 0.09 | - | 0.44 | 0.2 | 0.10 | 0.10+0.15 | 0.12+0.09 | - | 10 |

(continued)

| Num. | Pyrethroid SC Formulation Example Table 2 %w/w | ZC Final Composition | | | | | | | | | | | | |
|---|---|---|---|---|---|---|---|---|---|---|---|---|---|---|
| | Adjuvant/Adjuvant Mixture CS Formulation Example Table 4 %w/w | Water | Pyrethroid | Adjuvant/Adjuvant Mixture | Dispersant in Pyrethroid SC Formulation Example | Emulsifier in Adjuvant/Adjuvant Mixture CS Formulation Example* | Wetting Agent | Rheology Control Agent | pH Buffer | Antifoam | Biocide | Isocyanate* | Cross linker* | Antifreeze/Antioxidant |
| | | %w/w | %w/w | %w/w | %w/w | | %w/w | %w/w | %w/w | %w/w | %w/w | %w/w | %w/w | %w/w |
| 6-20 | 1-6 (65.60%) | Rest | Deltamethrin | Disflamol TOF + Phytorob 926.65 | Atlox 4913 + Morwet D-425 | POVAL 26-88 | - | Rhodopol 23 | Citric acid | Silcolapse 426 R | Kathon CG/ICP Proxel GXL | Desmodur T 80 + Bavmidur K 88 | - | Propylene Glycol |
| | 2-4 (44.40%) | | 7.50 | 2.00 + 18.00 | 2.00 + 1.00 | 0.19 | - | 0.49 | 0.2 | 0.10 | 0.12+0.18 | 0.23+0.19 | - | 10 |
| 6-21 | 1-4 (32.66 % w/w) | Rest | Deltamethrin | Disflamol TOF | Atlox 4913 + Morwet D-425 | POVAL 26-88 | - | Rhodopol 23 | Citric acid | SAG 1572 | Kathon CG/ICP Proxel GXL | Desmodur T 80 + Bavmidur K 88 | - | Propylene Glycol |
| | 2-1 (67.34%) | | 2.00 | 30.30 | 200 + 100 | 0.31 | - | 0.50 | 0.02 | 0.1 | 0.14+0.17 | 0.34+0.27 | - | 10.00 |
| 6-22 | 1-6 (78%) | Rest | Deltamethrin | Disflamol TOF | Atlox 4913 + Morwet D-425 | POVAL 26-88 | - | Rhodopol 23 | Citric acid | SAG 1572 | Kathon CG/ICP Proxel GXL | Desmodur T 80 + Baymidur K 88 | - | Propylene Glycol |
| | 2-1 (22%) | | 7.50 | 10.00 | 2.00 + 1.00 | 0.10 | - | 0.43 | 0.2 | 0.1 | 0.14+0.17 | 0.11+0.09 | - | 10.00 |
| 6-23 | 1-6 (79%) | Rest | Deltamethrin | Disflamol TOF + Phytorob 926.65 | Atlox 4913 + Morwet D-425 | POVAL 26-88 | - | Rhodopol 23 | Citric acid | Silcolapse 26R | Kathon CG/ICP Proxel GXL | Desmodur T 80 + Bavmidur K 88 | - | Propylene Glycol |
| | 2-3 (21%) | | 7.30 | 4.87 + 4.87 | 2.00 + 1.00 | 0.08 | - | 0.44 | 0.20 | 0.10 | 0.10+0.15 | 0.11+0.09 | - | 10.00 |

(continued)

| Num. | Pyrethroid SC Formulation Example Table 2 %w/w | ZC Final Composition | | | | | | | | | | | | |
|---|---|---|---|---|---|---|---|---|---|---|---|---|---|---|
| | Adjuvant/Adjuvant Mixture CS Formulation Example Table 4 %w/w | Water | Pyrethroid | Adjuvant/Adjuvant Mixture | Dispersant in Pyrethroid SC Formulation Example | Emulsifier in Adjuvant/Adjuvant Mixture CS Formulation Example* | Wetting Agent | Rheology Control Agent | pH Buffer | Antifoam | Biocide | Isocyanate* | Cross linker* | Antifreeze/Antioxidant |
| | | %w/w | %w/w | %w/w | %w/w | | %w/w | %w/w | %w/w | %w/w | %w/w | %w/w | %w/w | %w/w |
| 6-24 | 1-5 (78%) | Rest | Deltamethrin | Disflamol TOF + Phytorob 926.65 | Atlox 4913 + Morwet D-425 | POVAL 26-88 | - | Rhodopol 23 | Citric acid | Silcolapse 26R | Kathon CG/ICP Proxel GXL | Desmodur T 80 + Bavmidur K 88 | - | Propylene Glycol |
| | 2-3 (22%) | | 5.00 | 5.16 + 5.16 | 2.00 + 1.00 | 0.09 | - | 0.44 | 0.20 | 0.10 | 0.10+0.15 | 0.11+0.09 | - | 10.00 |
| 6-25 | 1-17 (79%) | Rest | Deltamethrin | Disflamol TOF + Phytorob 926.65 | Alcoguard 7100/Agrilan 777 + Morwet D-425 | POVAL 26-88 | - | Rhodopol 23 | Citric acid | Silcolapse 26R | Kathon CG/ICP Proxel GXL | Desmodur T 80 + Baymidur K 88 | - | Propylene Glycol |
| | 2-3 (21%) | | 7.28 | 5.00 + 5.00 | 4.00 + 1.00 | 0.09 | - | 0.44 | 0.10 | 0.10 | 0.10+0.15 | 0.11+0.09 | - | 10.00 |
| 6-26 | 1-18 (79%) | Rest | Deltamethrin | Disflamol TOF + Phytorob 926.65 | Alcoguard 7100/Agrilan 777 + Morwet D-425 | POVAL 26-88 | - | Rhodopol 23 | Citric acid | Silcolapse 26R | Kathon CG/ICP Proxel GXL | Desmodur T 80 + Baymidur K 88 | - | Propylene Glycol |
| | 2-3 (21%) | | 8.49 | 5.00 + 5.00 | 4.00 + 1.00 | 0.09 | - | 0.44 | 0.10 | 0.10 | 0.10+0.15 | 0.11+0.09 | - | 10.00 |
| 6-27 | 1-17 (78%) | Rest | Deltamethrin | Disflamol TOF + Phytorob 926.65 | Alcoguard 7100/Agrilan 777 + Morwet D-425 | Reax 910 | - | Rhodopol 23 | Citric acid | Silcolapse 426R + SAG1572 | Kathon CG/ICP Proxel GXL | Baymidur K 88 | Hexamethylene diamine | Propylene Glycol |
| | 2-17 (22%) | | 7.28 | 5.09 + 5.09 | 4.00 + 1.00 | 0.21 | - | 0.44 | 0.10 | 0.10+0.02 | 0.10+0.15 | 0.21 | 0.04 | 10.00 |

(continued)

| Num. | Pyrethroid SC Formulation Example Table 2 %w/w | ZC Final Composition | | | | | | | | | | | | |
|---|---|---|---|---|---|---|---|---|---|---|---|---|---|---|
| | Adjuvant/Adjuvant Mixture CS Formulation Example Table 4 %w/w | Water | Pyrethroid | Adjuvant/Adjuvant Mixture | Dispersant in Pyrethroid SC Formulation Example | Emulsifier in Adjuvant/Adjuvant Mixture CS Formulation Example* | Wetting Agent | Rheology Control Agent | pH Buffer | Antifoam | Biocide | Isocyanate* | Cross linker* | Antifreeze/Antioxidant |
| | | %w/w | %w/w | %w/w | %w/w | | %w/w | %w/w | %w/w | %w/w | %w/w | %w/w | %w/w | %w/w |
| 6-28 | 1-18 (78%) | Rest | Deltamethrin | Disflamol TOF + Phytorob 926.65 | Alcoguard 7100/Agrilan 777 + Morwet D-425 | Reax 910 | - | Rhodopol 23 | Citric acid | Silcolapse 426R + SAG1572 | Kathon CG/ICP Proxel GXL | Baymidur K 88 | Hexamethylene diamine | Propylene Glycol |
| | 2-17 (22%) | | 8.50 | 5.09 + 5.09 | 4.00 + 1.00 | 0.21 | - | 0.44 | 0.10 | 0.10+0.02 | 0.10+0.15 | 0.21 | 0.04 | 10.00 |
| 6-29 | 1-19 (78%) | Rest | Deltamethrin | Disflamol TOF + Phytorob 926.65 | Alcoguard 7100/Agrilan 777 + Morwet D-425 | Reax 910 | - | Rhodopol 23 | Citric acid | Silcolapse 426R + SAG1572 | Kathon CG/ICP Proxel GXL | Baymidur K 88 | Hexamethylene diamine | Propylene Glycol |
| | 2-17 (22%) | | 9.71 | 5.09 + 5.09 | 4.00 + 1.00 | 0.21 | - | 0.44 | 0.10 | 0.10+0.02 | 0.10+0.15 | 0.21 | 0.04 | 10.00 |
| 6-30 | 1-17 (78%) | Rest | Deltamethrin | Disflamol TOF + Phytorob 926.65 | Alcoguard 7100/Agrilan 777 + Morwet D-425 | Reax 910 | - | Rhodopol 23 | Citric acid | Silcolapse 426R | Kathon CG/ICP Proxel GXL | Desmodur T 80 + Baymidur K 88 | Hexamethylene diamine | Propylene Glycol |
| | 2-10 (22%) | | 7.28 | 5.09 + 5.09 | 4.00 + 1.00 | 0.21 | - | 0.44 | 0.10 | 0.10 | 0.10+0.15 | 0.11 + 0.09 | 0.04 | 10.00 |
| 6-31 | 1-18 (78%) | Rest | Deltamethrin | Disflamol TOF + Phytorob 926.65 | Alcoguard 7100/Agrilan 777 + Morwet D-425 | Reax 910 | - | Rhodopol 23 | Citric acid | Silcolapse 426R | Kathon CG/ICP Proxel GXL | Desmodur T 80 + Baymidur K 88 | Hexamethylene diamine | Propylene Glycol |
| | 2-10 (22%) | | 8.49 | 5.09 + 5.09 | 4.00 + 1.00 | 0.21 | - | 0.44 | 0.10 | 0.10 | 0.10+0.15 | 0.11 +0.09 | 0.04 | 10.00 |

(continued)

| Num. | Pyrethroid SC Formulation Example Table 2 %w/w | ZC Final Composition | | | | | | | | | | | | |
|---|---|---|---|---|---|---|---|---|---|---|---|---|---|---|
| | Adjuvant/Adjuvant Mixture CS Formulation Example Table 4 %w/w | Water | Pyrethroid | Adjuvant/Adjuvant Mixture | Dispersant in Pyrethroid SC Formulation Example | Emulsifier in Adjuvant/Adjuvant Mixture CS Formulation Example* | Wetting Agent | Rheology Control Agent | pH Buffer | Antifoam | Biocide | Isocyanate* | Cross linker* | Antifreeze/Antioxidant |
| | | %w/w | %w/w | %w/w | %w/w | | %w/w | %w/w | %w/w | %w/w | %w/w | %w/w | %w/w | %w/w |
| 6-32 | 1-19 (78%) | Rest | Deltamethrin | Disflamol TOF + Phytorob 926.65 | Alcoguard 7100/Agrilan 777 + Morwet D-425 | Reax 910 | - | Rhodopol 23 | Citric acid | Silcolapse 426R | Kathon CG/ICP Proxel GXL | Desmodur T 80 + Baymidur K 88 | Hexamethylene diamine | Propylene Glycol |
| | 2-10 (22%) | | 9.71 | 5.09 + 5.09 | 4.00 + 1.00 | 0.21 | - | 0.44 | 0.10 | 0.10 | 0.10+0.15 | 0.11 + 0.09 | 0.04 | 10.00 |
| 6-33 | 1-17 (78%) | Rest | Deltamethrin | Disflamol TOF + Phytorob 926.65 | Alcoguard 7100/Agrilan 777 + Morwet D-425 | POVAL 26-88 | - | Rhodopol 23 | Citric acid | Silcolapse 426R + SAG1572 | Kathon CG/ICP Proxel GXL | Desmodur T 80 + Baymidur K 88 | - | Propylene Glycol |
| | 2-18 (22%) | | 7.28 | 2.57 + 7.71 | 4.00 + 1.00 | 0.09 | - | 0.44 | 0.10 | 0.10 + 0.02 | 0.10+0.15 | 0.11 +0.09 | - | 10.00 |
| 6-34 | 1-18 (78%) | Rest | Deltamethrin | Disflamol TOF + Phytorob 926.65 | Alcoguard 7100/Agrilan 777 + Morwet D-425 | POVAL 26-88 | - | Rhodopol 23 | Citric acid | Silcolapse 426R + SAG1572 | Kathon CG/ICP Proxel GXL | Desmodur T 80 + Baymidur K 88 | - | Propylene Glycol |
| | 2-18 (22%) | | 8.50 | 2.57 + 7.71 | 4.00 + 1.00 | 0.09 | - | 0.44 | 0.10 | 0.10 + 0.02 | 0.10+0.15 | 0.11 +0.09 | - | 10.00 |
| 6-35 | 1-19 (78%) | Rest | Deltamethrin | Disflamol TOF + Phytorob 926.65 | Alcoguard 7100/Agrilan 777 + Morwet D-425 | POVAL 26-88 | - | Rhodopol 23 | Citric acid | Silcolapse 426R + SAG1572 | Kathon CG/ICP Proxel GXL | Desmodur T 80 + Baymidur K 88 | - | Propylene Glycol |
| | 2-18 (22%) | | 9.71 | 2.57 + | 4.00 + 1.00 | 0.09 | - | 0.44 | 0.10 | 0.10 + 0.02 | 0.10+0.15 | 0.11 + 0.09 | - | 10.00 |

(continued)

| Num. | Pyrethroid SC Formulation Example Table 2 %w/w | ZC Final Composition | | | | | | | | | | | | |
|---|---|---|---|---|---|---|---|---|---|---|---|---|---|---|
| | Adjuvant/Adjuvant Mixture CS Formulation Example Table 4 %w/w | Water | Pyrethroid | Adjuvant/Adjuvant Mixture | Dispersant in Pyrethroid SC Formulation Example | Emulsifier in Adjuvant/Adjuvant Mixture CS Formulation Example* | Wetting Agent | Rheology Control Agent | pH Buffer | Antifoam | Biocide | Isocyanate* | Cross linker* | Antifreeze/Antioxidant |
| | | %w/w | %w/w | %w/w | %w/w | | %w/w | %w/w | %w/w | %w/w | %w/w | %w/w | %w/w | %w/w |
| 6-36 | 1-17 (78%) | Rest | Deltamethrin | 7.71 Disflamol TOF + Phytorob 926.65 | Alcoguard 7100/Agrilan 777 + Morwet D-425 | Reax 910 | - | Rhodopol 23 | Citric acid | Silcolapse 426R + SAC1572 | Kathon CG/ICP Proxel GXL | Baymidur K 88 | Hexamethylene diamine | Propylene Glycol |
| | 2-19 (22%) | | 7.28 | 2.55 + 7.64 | 4.00 + 1.00 | 0.22 | - | 0.44 | 0.10 | 0.10 + 0.02 | 0.10+0.15 | 0.21 | 0.04 | 10.00 |
| 6-37 | 1-18 (78%) | Rest | Deltamethrin | Disflamol TOF + Phytorob 926.65 | Alcoguard 7100/Agrilan 777 + Morwet D-425 | Reax 910 | - | Rhodopol 23 | Citric acid | Silcolapse 426R + SAG1572 | Kathon CG/ICP Proxel GXL | Baymidur K 88 | Hexamethylene diamine | Propylene Glycol |
| | 2-19 (22%) | | 8.50 | 2.55 + 7.64 | 4.00 + 1.00 | 0.22 | - | 0.44 | 0.10 | 0.10 + 0.02 | 0.10+0.15 | 0.21 | 0.04 | 10.00 |
| 6-38 | 1-19 (78%) | Rest | Deltamethrin | Disflamol TOF + Phytorob 926.65 | Alcoguard 7100/Agrilan 777 + Morwet D-425 | Reax 910 | - | Rhodopol 23 | Citric acid | Silcolapse 426R + SAG1572 | Kathon CG/ICP Proxel GXL | Baymidur K 88 | Hexamethylene diamine | Propylene Glycol |
| | 2-19 (22%) | | 9.71 | 2.55 + 7.64 | 4.00 + 1.00 | 0.22 | - | 0.44 | 0.10 | 0.10 + 0.02 | 0.10+0.15 | 0.21 | 0.04 | 10.00 |
| 6-39 | 1-17 (78%) | Rest | Deltamethrin | Disflamol TOF + Phytorob 926.65 | Alcoguard 7100/Agrilan 777 + Morwet D-425 | POVAL 26-88 | - | Rhodopol 23 | Citric acid | Silcolapse 426 R | Kathon CG/ICP Proxel GXL | Desmodur T 80 + Baymidur K 88 | - | Propylene Glycol |
| | 2-4 (22%) | | 7.28 | 1.03 + 9.29 | 4.00 + 1.00 | 0.09 | - | 0.44 | 0.10 | 0.10 | 0.10+0.15 | 0.23+0.19 | - | 10 |

(continued)

| Num. | Pyrethroid SC Formulation Example Table 2 %w/w | ZC Final Composition | | | | | | | | | | | | |
|---|---|---|---|---|---|---|---|---|---|---|---|---|---|---|
| | Adjuvant/Adjuvant Mixture CS Formulation Example Table 4 %w/w | Water | Pyrethroid | Adjuvant/Adjuvant Mixture | Dispersant in Pyrethroid SC Formulation Example | Emulsifier in Adjuvant/Adjuvant Mixture CS Formulation Example* | Wetting Agent | Rheology Control Agent | pH Buffer | Antifoam | Biocide | Isocyanate* | Cross linker* | Antifreeze/Antioxidant |
| | | %w/w | %w/w | %w/w | %w/w | | %w/w | %w/w | %w/w | %w/w | %w/w | %w/w | %w/w | %w/w |
| 6-40 | 1-18 (78%) | Rest | Deltamethrin | Disflamol TOF + Phytorob 926.65 | Alcoguard 7100/Agrilan 777 + Morwet D-425 | POVAL 26-88 | - | Rhodopol 23 | Citric acid | Silcolapse 426 R | Kathon CG/ICP Proxel GXL | Desmodur T 80 + Baymidur K 88 | - | Propylene Glycol |
| | 2-4 (22%) | | 8.50 | 1.03 + 9.29 | 4.00 + 1.00 | 0.09 | - | 0.44 | 0.10 | 0.10 | 0.10+0.15 | 0.23+0.19 | - | 10 |
| 6-41 | 1-19 (78%) | Rest | Deltamethrin | Disflamol TOF + Phytorob 926.65 | Alcoguard 7100/Agrilan 777 + Morwet D-425 | POVAL 26-88 | - | Rhodopol 23 | Citric acid | Silcolapse 426 R | Kathon CG/ICP Proxel GXL | Desmodur T 80 + Baymidur K 88 | - | Propylene Glycol |
| | 2-4 (22%) | | 9.71 | 1.03 + 9.29 | 4.00 + 1.00 | 0.09 | - | 0.44 | 0.10 | 0.10 | 0.10+0.15 | 0.23+0.19 | - | 10 |
| 6-42 | 1-18 (78%) | Rest | Deltamethrin | Disflamol TOF + Phytorob 926.65 | Alcoguard 7100/Agrilan 777 + Morwet D-425 | Reax 910 | - | Rhodopol 23 | Citric acid | Silcolapse 426R + SAG1572 | Kathon CG/ICP Proxel GXL | Baymidur K 88 | Hexamethylene diamine | Propylene Glycol |
| | 2-13 (22%) | | 8.49 | 1.02 + 9.17 | 4.00 + 1.00 | 0.22 | - | 0.44 | 0.10 | 0.10 + 0.02 | 0.10+0.15 | 0.22 | 0.04 | 10.00 |
| 6-43 | 1-19 (78%) | Rest | Deltamethrin | Disflamol TOF + Phytorob 926.65 | Alcoguard 7100/Agrilan 777 + Morwet D-425 | Reax 910 | - | Rhodopol 23 | Citric acid | Silcolapse 426R + SAG1572 | Kathon CG/ICP Proxel GXL | Baymidur K 88 | Hexamethylene diamine | Propylene Glycol |
| | 2-13 (22%) | | 9.71 | 1.02 + 9.17 | 4.00 + 1.00 | 0.22 | - | 0.44 | 0.10 | 0.10 + 0.02 | 0.10+0.15 | 0.22 | 0.04 | 10.00 |

(continued)

| Num. | Pyrethroid SC Formulation Example Table 2 %w/w | ZC Final Composition | | | | | | | | | | | | |
|---|---|---|---|---|---|---|---|---|---|---|---|---|---|---|
| | Adjuvant/Adjuvant Mixture CS Formulation Example Table 4 %w/w | Water | Pyrethroid | Adjuvant/Adjuvant Mixture | Dispersant in Pyrethroid SC Formulation Example | Emulsifier in Adjuvant/Adjuvant Mixture CS Formulation Example* | Wetting Agent | Rheology Control Agent | pH Buffer | Antifoam | Biocide | Isocyanate* | Cross linker* | Antifreeze/Antioxidant |
| | | %w/w | %w/w | %w/w | %w/w | | %w/w | %w/w | %w/w | %w/w | %w/w | %w/w | %w/w | %w/w |
| 6-44 | 1-20 (78%) | Rest | Deltamethrin | Disflamol TOF + Phytorob 926.65 | Alcoguard 7100/Agrilan 777 + Geropon DOS | POVAL 26-88 | - | Rhodopol 23 | Citric acid | Silcolapse 426 R | Kathon CG/ICP Proxel GXL | Desmodur T 80 + Baymidur K 88 | - | Propylene Glycol |
| | 2-4 (22%) | | 7.28 | 1.03 + 9.29 | 4.00 + 1.00 | 0.08 | - | 0.44 | 0.02 | 0.10 | 0.10+0.15 | 0.11+0.09 | - | 10.00 |
| 6-45 | 1-20 (78%) | Rest | Deltamethrin | Disflamol TOF + Phytorob 926.65 | Alcoguard 7100/Agrilan 777 + Geropon DOS | POVAL 26-88 | - | Rhodopol 23 | Citric acid | Silcolapse 426R + SAG1572 | Kathon CG/ICP Proxel GXL | Desmodur T 80 + Baymidur K 88 | - | Propylene Glycol |
| | 2-18 (22%) | | 7.28 | 2.57 + 7.71 | 4.00 + 1.00 | 0.08 | - | 0.44 | 0.02 | 0.10 +0.02 | 0.10+0.15 | 0.11 +0.09 | - | 11.08 |
| 6-46 | 1-21 (78%) | Rest | Deltamethrin | Disflamol TOF + Phytorob 926.65 | Alcoguard 7100/Agrilan 777 + REAX 105M | POVAL 26-88 | - | Rhodopol 23 | Citric acid | Silcolapse 426 R | Kathon CG/ICP Proxel GXL | Desmodur T 80 + Baymidur K 88 | - | Propylene Glycol |
| | 2-4 (22%) | | 7.28 | 1.03 + 9.29 | 4.00 + 1.00 | 0.08 | - | 0.44 | 0.02 | 0.10 | 0.10+0.15 | 0.11+0.09 | - | 11.08 |
| 6-47 | 1-21 (78%) | Rest | Deltamethrin | Disflamol TOF + Phytorob 926.65 | Alcoguard 7100/Agrilan 777 + REAX 105M | POVAL 26-88 | - | Rhodopol 23 | Citric acid | Silcolapse 426R + SAG1572 | Kathon CG/ICP Proxel GXL | Desmodur T 80 + Baymidur K 88 | - | Propylene Glycol |
| | 2-18 (22%) | | 7.28 | 2.57 + 7.71 | 4.00 + 1.00 | 0.08 | - | 0.44 | 0.02 | 0.10 + 0.02 | 0.10+0.15 | 0.11 +0.09 | - | 11.08 |

(continued)

| Num. | Pyrethroid SC Formulation Example Table 2 %w/w | ZC Final Composition | | | | | | | | | | | | |
|---|---|---|---|---|---|---|---|---|---|---|---|---|---|---|
| | Adjuvant/Adjuvant Mixture CS Formulation Example Table 4 %w/w | Water | Pyrethroid | Adjuvant/Adjuvant Mixture | Dispersant in Pyrethroid SC Formulation Example | Emulsifier in Adjuvant/Adjuvant Mixture CS Formulation Example* | Wetting Agent | Rheology Control Agent | pH Buffer | Antifoam | Biocide | Isocyanate* | Cross linker* | Antifreeze/Antioxidant |
| | | %w/w | %w/w | %w/w | %w/w | | %w/w | %w/w | %w/w | %w/w | %w/w | %w/w | %w/w | %w/w |
| 6-48 | 1-22 (78%) | Rest | Deltamethrin | Disflamol TOF + Phytorob 926.65 | Geropon DOS + REAX 105M | POVAL 26-88 | - | Rhodopol 23 | Citric acid | Silcolapse 426 R | Kathon CG/ICP Proxel GXL | Desmodur T 80 + Bavmidur K 88 | - | Propylene Glycol |
| | 2-4 (22%) | | 8.50 | 1.03 + 9.29 | 2.00 + 1.00 | 0.08 | - | 0.44 | 0.02 | 0.10 | 0.10+0.15 | 0.11+0.09 | - | 11.08 |
| 6-49 | 1-23 (78%) | Rest | Deltamethrin | Disflamol TOF + Phytorob 926.65 | Geropon DOS + REAX 105M | POVAL 26-88 | - | Rhodopol 23 | Citric acid | Silcolapse 426R + SAG1572 | Kathon CG/ICP Proxel GXL | Desmodur T 80 + Baymidur K 88 | - | Propylene Glycol |
| | 2-18 (22%) | | 7.28 | 2.57 + 7.71 | 2.00 + 1.00 | 0.08 | - | 0.44 | 0.02 | 0.10 + 0.02 | 0.10+0.15 | 0.11 +0.09 | - | 11.08 |
| 6-50 | 1-24 (78%) | Rest | Deltamethrin | Disflamol TOF + Phytorob 926.65 | Geropon DOS + Narlex D72 | POVAL 26-88 | - | Rhodopol 23 | Citric acid | Silcolapse 426 R | Kathon CG/ICP Proxel GXL | Desmodur T 80 + Baymidur K 88 | - | Propylene Glycol |
| | 2-4 (22%) | | 7.28 | 1.03 + 9.29 | 1.00 + 4.00 | 0.08 | - | 0.44 | 0.02 | 0.10 | 0.10+0.15 | 0.11+0.09 | - | 11.08 |
| 6-51 | 1-24 (78%) | Rest | Deltamethrin | Disflamol TOF + Phytorob 926.65 | Geropon DOS + REAX 105M | POVAL 26-88 | - | Rhodopol 23 | Citric acid | Silcolapse 426R + SAG1572 | Kathon CG/ICP Proxel GXL | Desmodur T 80 + Baymidur K 88 | - | Propylene Glycol |
| | 2-18 (22%) | | 7.28 | 2.57 + 7.71 | 2.00 +1.00 | 0.08 | - | 0.44 | 0.02 | 0.10 +0.02 | 0.10+0.15 | 0.11 +0.09 | - | 11.08 |

(continued)

| Num. | Pyrethroid SC Formulation Example Table 2 %w/w | ZC Final Composition | | | | | | | | | | | | |
|---|---|---|---|---|---|---|---|---|---|---|---|---|---|---|
| | Adjuvant/Adjuvant Mixture CS Formulation Example Table 4 %w/w | Water | Pyrethroid | Adjuvant/Adjuvant Mixture | Dispersant in Pyrethroid SC Formulation Example | Emulsifier in Adjuvant/Adjuvant Mixture CS Formulation Example* | Wetting Agent | Rheology Control Agent | pH Buffer | Antifoam | Biocide | Isocyanate* | Cross linker* | Antifreeze/Antioxidant |
| | | %w/w | %w/w | %w/w | %w/w | | %w/w | %w/w | %w/w | %w/w | %w/w | %w/w | %w/w | %w/w |
| 6-52 | 1-25 (78%) | Rest | Deltamethrin | Disflamol TOF + Phvtorob 926.65 | Reax 105M + Narlex D72 | POVAL 26-88 | - | Rhodopol 23 | Citric acid | Silcolapse 426 R | Kathon CG/ICP Proxel GXL | Desmodur T 80 + Bavmidur K 88 | - | Propylene Glycol |
| | 2-4 (22%) | | 7.28 | 1.03 + 9.29 | 1.00 + 2.00 | 0.08 | - | 0.44 | 0.02 | 0.10 | 0.10+0.15 | 0.11+0.09 | - | 11.08 |
| 6-53 | 1-26 (78%) | Rest | Deltamethrin | Disflamol TOF + Phytorob 926.65 | Morwet D-425 + Narlex D72 | POVAL 26-88 | - | Rhodopol 23 | Citric acid | Silcolapse 426R + SAG1572 | Kathon CG/ICP Proxel GXL | Desmodur T 80 + Baymidur K 88 | - | Propylene Glycol |
| | 2-18 (22%) | | 7.28 | 2.57 + 7.71 | 1.00 + 2.00 | 0.08 | - | 0.44 | 0.1 | 0.10 +0.02 | 0.10+0.15 | 0.11 + 0.09 | - | 11.08 |
| 6-54 | 1-26 (78%) | Rest | Deltamethrin | Disflamol TOF + Phytorob 926.65 | Morwet D-425 + Narlex D72 | POVAL 26-88 | - | Rhodopol 23 | Citric acid | Silcolapse 26R | Kathon CG/ICP Proxel GXL | Desmodur T 80 + Bavmidur K 88 | - | Propylene Glycol |
| | 2-3 (22%) | | 7.28 | 5.10 + 5.10 | 0.50 +2.00 | 0.08 | - | 0.44 | 0.10 | 0.10 | 0.10+0.15 | 0.11+0.09 | - | 11.08 |
| 6-55 | 1-27 (78%) | Rest | Deltamethrin | Disflamol TOF + Phytorob 926.65 | Alcoguard 7100/Agrilan 777 + Geropon DOS | POVAL 26-88 | - | Rhodopol 23 | Citric acid | Silcolapse 426R + SAG1572 | Kathon CG/ICP Proxel GXL | Desmodur T 80 + Baymidur K 88 | - | Propylene Glycol |
| | 2-18 (22%) | | 7.28 | 2.57 + 7.71 | 2.50 +0.25 | 0.08 | - | 0.44 | 0.1 | 0.10 + 0.02 | 0.10+0.15 | 0.11+0.09 | - | 11.08 |

(continued)

| Num. | Pyrethroid SC Formulation Example Table 2 %w/w | ZC Final Composition | | | | | | | | | | | | |
|---|---|---|---|---|---|---|---|---|---|---|---|---|---|---|
| | Adjuvant/Adjuvant Mixture CS Formulation Example Table 4 %w/w | Water | Pyrethroid | Adjuvant/Adjuvant Mixture | Dispersant in Pyrethroid SC Formulation Example | Emulsifier in Adjuvant/Adjuvant Mixture CS Formulation Example* | Wetting Agent | Rheology Control Agent | pH Buffer | Antifoam | Biocide | Isocyanate* | Cross linker* | Antifreeze/Antioxidant |
| | | %w/w | %w/w | %w/w | %w/w | | %w/w | %w/w | %w/w | %w/w | %w/w | %w/w | %w/w | %w/w |
| 6-56 | 1-27 (78%) | Rest | Deltamethrin | Disflamol TOF + Phytorob 926.65 | Alcoguard 7100/Agrilan 777 + Geropon DOS | POVAL 26-88 | - | Rhodopol 23 | Citric acid | Silcolapse 26R | Kathon CG/ICP Proxel GXL | Desmodur T 80 + Baymidur K 88 | - | Propylene Glycol |
| | 2-3 (22%) | | 7.28 | 5.10 + 5.10 | 2.50 + 0.25 | 0.08 | - | 0.44 | 0.10 | 0.10 | 0.10+0.15 | 0.11+0.09 | - | 11.08 |
| 6-57 | 1-28 (78%) | Rest | Deltamethrin | Disflamol TOF + Phytorob 926.65 | Borresperse NA + Reax 105M | POVAL 26-88 | - | Rhodopol 23 | Citric acid | Silcolapse 426R + SAG1572 | Kathon CG/ICP Proxel GXL | Desmodur T 80 + Baymidur K 88 | - | Propylene Glycol |
| | 2-18 (22%) | | 7.28 | 2.57 + 7.71 | 0.50 + 3.00 | 0.08 | - | 0.44 | 0.1 | 0.10 +0.02 | 0.10+0.15 | 0.11 +0.09 | - | 11.08 |
| 6-58 | 1-28 (78%) | Rest | Deltamethrin | Disflamol TOF + Phytorob 926.65 | Borresperse NA + Reax 105M | POVAL 26-88 | - | Rhodopol 23 | Citric acid | Silcolapse 26R | Kathon CG/ICP Proxel GXL | Desmodur T 80 + Baymidur K 88 | - | Propylene Glycol |
| | 2-3 (22%) | | 7.28 | 5.10 + 5.10 | 0.50 + 3.00 | 0.08 | - | 0.44 | 0.10 | 0.10 | 0.10+0.15 | 0.11+0.09 | - | 11.08 |
| 6-59 | 1-29 (78%) | Rest | Deltamethrin | Disflamol TOF + Phytorob 926.65 | Morwet D-425 + Agnique SLES 370 | POVAL 26-88 | - | Rhodopol 23 | Citric acid | Silcolapse 426R + SAG1572 | Kathon CG/ICP Proxel GXL | Desmodur T 80 + Baymidur K 88 | - | Propylene Glycol |
| | 2-18 (22%) | | 7.28 | 2.57 + 7.71 | 0.50 + 1.00 | 0.08 | - | 0.44 | 0.1 | 0.10 + 0.02 | 0.10+0.15 | 0.11 + 0.09 | - | 11.08 |

(continued)

| Num. | Pyrethroid SC Formulation Example Table 2 %w/w | ZC Final Composition | | | | | | | | | | | | |
|---|---|---|---|---|---|---|---|---|---|---|---|---|---|---|
| | Adjuvant/Adjuvant Mixture CS Formulation Example Table 4 %w/w | Water | Pyrethroid | Adjuvant/Adjuvant Mixture | Dispersant in Pyrethroid SC Formulation Example | Emulsifier in Adjuvant/Adjuvant Mixture CS Formulation Example* | Wetting Agent | Rheology Control Agent | pH Buffer | Antifoam | Biocide | Isocyanate* | Cross linker* | Antifreeze/Antioxidant |
| | | %w/w | %w/w | %w/w | %w/w | | %w/w | %w/w | %w/w | %w/w | %w/w | %w/w | %w/w | %w/w |
| 6-60 | 1-29 (78%) | Rest | Deltamethrin | Disflamol TOF + Phytorob 926.65 | Morwet D-425 + Agnique SLES 370 | POVAL 26-88 | - | Rhodopol 23 | Citric acid | Silcolapse 26R | Kathon CG/ICP Proxel GXL | Desmodur T 80 + Baymidur K 88 | - | Propylene Glycol |
| | 2-3 (22%) | | 7.28 | 5.10 + 5.10 | 0.50 + 1.00 | 0.08 | - | 0.44 | 0.10 | 0.10 | 0.10+0.15 | 0.11+0.09 | - | 11.08 |
| 6-61 | 1-30 (78%) | Rest | Deltamethrin | Disflamol TOF + Phytorob 926.65 | Geropon DOS + Narlex D72 | POVAL 26-88 | - | Rhodopol 23 | Citric acid | Silcolapse 426R + SAG1572 | Kathon CG/ICP Proxel GXL | Desmodur T 80 + Baymidur K 88 | - | Propylene Glycol |
| | 2-18 (22%) | | 7.28 | 2.57 + 7.71 | 0.25 + 1.00 | 0.08 | - | 0.44 | 0.1 | 0.10 + 0.02 | 0.10+0.15 | 0.11 + 0.09 | - | 11.08 |
| 6-62 | 1-30 (78%) | Rest | Deltamethrin | Disflamol TOF + Phvtorob 926.65 | Geropon DOS + Narlex D72 | POVAL 26-88 | - | Rhodopol 23 | Citric acid | Silcolapse 26R | Kathon CG/ICP Proxel GXL | Desmodur T 80 + Bavmidur K 88 | - | Propylene Glycol |
| | 2-3 (22%) | | 7.28 | 5.10 + 5.10 | 0.25 + 1.00 | 0.08 | - | 0.44 | 0.10 | 0.10 | 0.10+0.15 | 0.11+0.09 | - | 11.08 |
| 6-63 | 1-31 (84%) | Rest | Deltamethrin | Disflamol TOF + Phytorob 926.65 | Alcoguard 7100/Agrilan 777 + Morwet D425 | POVAL 26-88 | - | Rhodopol 23 | Citric acid | Silcolapse 426R | Kathon CG/ICP Proxel GXL | Desmodur T 80 + Baymidur K 88 | - | Propylene Glycol |
| | 2-3 (16%) | | 7.21 | 3.87 + 3.87 | 4.00 + 1.00 | 0.06 | - | 0.43 | 0.10 | 0.10 | 0.09+0.14 | 0.09+0.07 | - | 10.82 |

(continued)

| Num. | Pyrethroid SC Formulation Example Table 2 %w/w | ZC Final Composition | | | | | | | | | | | | |
|---|---|---|---|---|---|---|---|---|---|---|---|---|---|---|
| | Adjuvant/Adjuvant Mixture CS Formulation Example Table 4 %w/w | Water | Pyrethroid | Adjuvant/Adjuvant Mixture | Dispersant in Pyrethroid SC Formulation Example | Emulsifier in Adjuvant/Adjuvant Mixture CS Formulation Example* | Wetting Agent | Rheology Control Agent | pH Buffer | Antifoam | Biocide | Isocyanate* | Cross linker* | Antifreeze/Antioxidant |
| | | %w/w | %w/w | %w/w | %w/w | | %w/w | %w/w | %w/w | %w/w | %w/w | %w/w | %w/w | %w/w |
| 6-64 | 1-32 (84%) | Rest | Deltamethrin | Disflamol TOF + Phytorob 926.65 | Alcoguard 7100/Agrilan 777 + Morwet D425 | POVAL 26-88 | - | Rhodopol 23 | Citric acid | Silcolapse 426R + SAG1572 | Kathon CG/ICP Proxel GXL | Desmodur T 80 + Baymidur K 88 | - | Propylene Glycol |
| | 2-18 (16%) | | 7.21 | 1.95 + 5.85 | 4.00 + 1.00 | 0.06 | - | 0.43 | 0.10 | 0.10 + 0.02 | 0.09+0.14 | 0.09+0.07 | - | 10.82 |
| 6-65 | 1-32 (88%) | Rest | Deltamethrin | Disflamol TOF + Phytorob 926.65 | Alcoguard 7100/Agrilan 777 + Morwet D425 | POVAL 26-88 | - | Rhodopol 23 | Citric acid | Silcolapse 426R | Kathon CG/ICP Proxel GXL | Desmodur T 80 + Baymidur K 88 | - | Propylene Glycol |
| | 2-3 (12%) | | 7.21 | 2.96 + 2.96 | 4.00 + 1.00 | 0.05 | - | 0.43 | 0.10 | 0.10 | 0.09+0.14 | 0.07+0.05 | - | 10.62 |
| 6-66 | 1-32 (88%) | Rest | Deltamethrin | Disflamol TOF + Phytorob 926.65 | Alcoguard 7100/Agrilan 777 + Morwet D425 | POVAL 26-88 | - | Rhodopol 23 | Citric acid | Silcolapse 426R + SAG1572 | Kathon CG/ICP Proxel GXL | Desmodur T 80 + Baymidur K 88 | - | Propylene Glycol |
| | 2-18 (12%) | | 7.21 | 1.49 + 4.47 | 4.00 + 1.00 | 0.05 | - | 0.43 | 0.10 | 0.10 + 0.02 | 0.09+0.14 | 0.07+0.05 | - | 10.62 |
| 6-67 | 1-33 (84%) | To 100 % | Deltamethrin | Disflamol TOF + Phytorob 926.65 | Alcoguard 7100/Agrilan 777 + Morwet D425 | POVAL 26-88 | - | Rhodop ol 23 | Citric acid | Silcolapse 426R | Kathon CG/ICP Proxel GXL | Desmodur T 80 + Desmodur VL | - | Propylene Glycol |
| | 2-3 (16%) | | 7.2 | 3.9+3.9 | 2.0 + 0.5 | 0.1 | - | 0.4 | 0.1 | 0.1 | 0.1+0.14 | 0.1+0.1 | - | 9.6 |
| 6-68 | 1-34 (84%) | To 100 % | Deltamethrin | Disflamol TOF + Phytorob 926.65 | Alcoguard 7100/Agrilan 777 + Morwet D425 | POVAL 26-88 | - | Rhodop ol 23 | Citric acid | Silcolapse 426R | Kathon CG/ICP Proxel GXL | Desmodur T 80 + Desmodur VL | - | Propylene Glycol |

(continued)

| Num. | Pyrethroid SC Formulation Example Table 2 %w/w | ZC Final Composition | | | | | | | | | | | | |
|---|---|---|---|---|---|---|---|---|---|---|---|---|---|---|
| | Adjuvant/Adjuvant Mixture CS Formulation Example Table 4 %w/w | Water | Pyrethroid | Adjuvant/Adjuvant Mixture | Dispersant in Pyrethroid SC Formulation Example | Emulsifier in Adjuvant/Adjuvant Mixture CS Formulation Example* | Wetting Agent | Rheology Control Agent | pH Buffer | Antifoam | Biocide | Isocyanate* | Cross linker* | Antifreeze/Antioxidant |
| | | %w/w | %w/w | %w/w | %w/w | | %w/w | %w/w | %w/w | %w/w | %w/w | %w/w | %w/w | %w/w |
| | 2-3 (16%) | | 7.2 | 3.9+3.9 | 3.0 + 0.5 | 0.1 | - | 0.4 | 0.1 | 0.1 | 0.1+0.14 | 0.1+0.1 | - | 9.6 |
| 6-69 | 1-35 (84%) | To 100 % | Deltamethrin | Disflamol TOF + Phytorob 926.65 | Alcoguard 7100/Agrilan 777 + Morwet D425 | POVAL 26-88 | - | Rhodop ol 23 | Citric acid | Silcolapse 426R | Kathon CG/ICP Proxel GXL | Desmodur T 80 + Desmodur VL | - | Propylene Glycol |
| | 2-3 (16%) | | 7.2 | 3.9+3.9 | 4.0 + 0.5 | 0.1 | - | 0.4 | 0.1 | 0.1 | 0.1+0.14 | 0.1+0.1 | - | 9.6 |
| 6-70 | 1-36 (84%) | To 100 % | Deltamethrin | Disflamol TOF + Phytorob 926.65 | Alcoguard 7100/Agrilan 777 + Morwet D425 | POVAL 26-88 | - | Rhodop ol 23 | Citric acid | Silcolapse 426R | Kathon CG/ICP Proxel GXL | Desmodur T 80 + Desmodur VL | - | Propylene Glycol |
| | 2-3 (16%) | | 7.2 | 3.9+3.9 | 2.0 + 1.0 | 0.1 | - | 0.4 | 0.1 | 0.1 | 0.1+0.14 | 0.1+0.1 | - | 9.6 |
| 6-71 | 1-37 (84%) | To 100 % | Deltamethrin | Disflamol TOF + Phytorob 926.65 | Alcoguard 7100/Agrilan 777 + Morwet D425 | POVAL 26-88 | - | Rhodop ol 23 | Citric acid | Silcolapse 426R | Kathon CG/ICP Proxel GXL | Desmodur T 80 + Desmodur VL | - | Propylene Glycol |
| | 2-3 (16%) | | 7.2 | 3.9+3.9 | 3.0 + 1.0 | 0.1 | - | 0.4 | 0.1 | 0.1 | 0.1+0.14 | 0.1+0.1 | - | 9.6 |
| 6-72 | 1-38 (84%) | To 100 % | Deltamethrin | Disflamol TOF + Phytorob 926.65 | Alcoguard 7100/Agrilan 777 + Morwet D425 | POVAL 26-88 | - | Rhodop ol 23 | Citric acid | Silcolapse 426R | Kathon CG/ICP Proxel GXL | Desmodur T 80 + Desmodur VL | - | Propylene Glycol/BHT |
| | 2-3 (16%) | | 7.3 | 3.9+3.9 | 4.0 + 1.0 | 0.1 | - | 0.4 | 0.1 | 0.1 | 0.1+0.14 | 0.1+0.1 | - | 9.6/0.02 |

* In the ZC formulations, the materials making up the capsule membranes (isocyanate, emulsifier, cross-linker) are not present as individual components, but they have rather reacted to form a polymeric membrane surrounding the adjuvant(s).

**Example 6→ Preparation and Characterization of In-Can Adjuvanted SE Pyrethroid Formulations**

For the purposes of testing the formulability of pyrethroids as in-can adjuvanted SE formulations, pyrethroid SC formulations (Table 2) are stirred together with the adjuvant/adjuvant mixtures EW formulations (Table 6) at room temperature, until a homogeneous mixture is obtained. If necessary, water is added to 100%. SE pyrethroid formulations serve as comparative examples against ZC pyrethroid formulations because the adjuvants added to the pyrethroid SC formulation are not encapsulated and can contribute to crystal growth processes during storage.

The pyrethroid SC formulations may be isolated and stored for further use or prepared in situ shortly before mixing with the corresponding adjuvant EW formulations in order to produce SE formulations (Table 9). In situ preparation of the pyrethroid SC formulation means that the water content of the SC pyrethroid formulation was not filled to 100% as described in Table 2, but rather the water content was reduced to accommodate the concentration of the EW formulation with which the SC formulation is to be mixed to produce an SE formulation.

Comparative examples of SE Formulations are described in Table 9.

**Table 9- Pyrethroid SE Formulations Comparative Examples**

| Formulation Example | Pyrethroid SC Formulation Example Table 2 (%w/w)* / Adjuvant/Adjuvant Mixture EW Formulation Example Table 6 (%w/w)* | SE Final Composition | | | | | | | | |
|---|---|---|---|---|---|---|---|---|---|---|
| | | Water | Pyrethroid | Adjuvant/Adjuvant Mixture | Dispersant + Emulsifier | Rheology Control Agent | pH Buffer | Antifoam | Biocide | Antifreeze |
| | | | Final %w/w | Final %w/w | Final %w/w | Final % w/w | Final %w/w | Final %w/w | Final %w/w | Final %w/w |
| 7-1 | 1-1 (50%) | To 100% | Deltamethrin | Disflamol TOF | Soprophor FLK + Pluronic PE 10500 | Rhodopol 23 + Van Gel B | Citric acid | Silcolapse 416+Silcolapse 426R | Kathon CG/ICP Proxel GXL/Preserval P | Propylene Glycol |
| | 4-1 (50%) | | 9.2 | 25.0 | 1.8+2.8 | 0.1 + 0.2 | 0.1 | 0.14+0.01 | 0.04+0.1+0.05 | 5.0 |
| 7-2 | 1-3 (12.5%) | To 100% | Deltamethrin | Disflamol TOF | Soprophor FLK + Aerosil R 816 | Rhodopol 23 + Van Gel B | Citric acid | Silcolapse 416 | Kathon CG/ICP Proxel GXL/Preserval P | Propylene Glycol |
| | 4-2 (25.0%) | | 2.3 | 10.0 | 0.5+0.5 | 0.03 + 0.1 | 0.02 | 0.03 | 0.02+0.04+0.01 | 2.5 |
| 7-3 | 4-1 (25 %w/w) | To 100% | Deltamethrin | Disflamol TOF | Soprophor FLK + Aerosil R 816 | Rhodopol 23 + Van Gel B | - | Silcolapse 416+Silcolapse 426R | Kathon CG/ICP Proxel GXL/Preserval P | Propylene Glycol |
| | 4-2 (50%) | | 4.6 | 20.0 | 0.9+1.0 | 0.3 + 0.1 | - | 0.07+0.01 | 0.05+0.1+0.02 | 5.0 |
| 7-4 | 1-1 (50%) | To 100% | Deltamethrin | Disflamol TOF + Phytorob 926.65 | Soprophor FLK + Synperonic PE/F127 | Rhodopol 23 + Van Gel B + Sokalan K90 | Citric acid | Silcolapse 416+Silcolapse 426R | Kathon CG/ICP Proxel GXL/Preserval P | Glycerin |
| | 4-3 (50%) | | 9.2 | 10.0+10.0 | 1.8+3.8 | 0.1 + 0.2 + 0.5 | 0.01 | 0.14+0.01 | 0.04+0.1+0.05 | 2.5 |

*When the sum of the mixed SC/EW %w/w formulation examples is lower than 100%, the formulation is accordingly filled with water to a 100%.

**Example 7 → Technical Characterization and Storage Stability of ZC Formulations and SE Formulations**

The ZC formulations according to the invention are in general stable during storage, and only slightly lose some of their technical properties (Tables 10-12). On the other hand, the comparative SE formulations are not stable during storage being susceptible to crystal growth or to phase separation of the formulations.

**Table 10: Particle Size evolution during storage**

| Formulation Example | Particle Size Laser Diffraction (d90/d50, μm) | | | | | | | | |
|---|---|---|---|---|---|---|---|---|---|
| According to the Invention and containing POVAL as emulsifier | Start | 2 Weeks RT | 2 Weeks 30°C | 2 Weeks 40°C | 2 Weeks 45°C | 4 Weeks RT | 4 Weeks 30°C | 4 Weeks 40°C | 4 Weeks 45°C |
| 6-1 | 16/8 | 16/6 | 16/7 | 16/8 | - | - | - | - | - |
| 6-3 | 16/8 | 16/8 | 16/8 | 16/7 | - | - | - | - | - |
| 6-7 | 11/2 | 12/4 | 12/4 | - | - | - | - | - | - |
| 6-8 | 13/4 | - | - | - | - | 12/3 | 12/4 | 12/4 | - |
| 6-9 | 14/6 | - | - | - | - | 14/6 | 14/7 | 14/7 | - |
| 6-10 | 13/5 | - | - | - | - | 13/5 | 13/5 | 13/5 | - |
| 6-11 | 13/6 | - | - | - | - | 14/6 | 12/6 | 14/6 | - |
| 6-12 | 16/2 | 16/2 | 16/2 | 15/2 | - | 15/1 | 15/ | 14/1 | - |
| 6-14 | 13/4 | - | - | - | - | 13/5 | 13/5 | 13/5 | - |
| 6-15 | 20/10 | - | - | - | - | 20/10 | 20/10 | 20/10 | - |
| 6-17 | 17/6 | - | - | - | - | 17/6 | 17/6 | 17/6 | - |
| 6-19 | 25/4 | 26/6 | 26/4 | 27/8 | - | - | - | - | - |
| 6-20 | 21/9 | 22/9 | 22/9 | 22/9 | - | - | - | - | - |
| 6-63 | 10/2 | 10/2 | - | - | 10/2 | 10/2 | - | - | 10/2 |
| 6-64 | 8/1 | 9/2 | - | - | 9/2 | 9/2 | - | - | 9/2 |
| 6-65 | 10/2 | 8/1 | - | - | 10/2 | 9/1 | - | - | 9/1 |
| 6-66 | 8/1 | 9/2 | - | - | 9/2 | 8/1 | - | - | 8/1 |
| 6-67 | 15/2 | 15/2 | - | - | 17/3 | 16/2 | - | - | 17/2 |
| 6-68 | 15/3 | 15/3 | - | - | 15/4 | 16/2 | - | - | 17/4 |
| 6-69 | 14/2 | 16/3 | - | - | 17/3 | 15/2 | - | - | 17/3 |
| 6-70 | 16/3 | 15/2 | - | - | 18/4 | 16/2 | - | - | 18/3 |
| 6-71 | 14/2 | 14/2 | - | - | 18/3 | 15/2 | - | - | 14/2 |
| According to the Invention and containing emulsifiers other than POVAL | Start | 2 Weeks RT | 2 Weeks 30°C | 2 Weeks 40°C | 2 Weeks 45°C | 4 Weeks RT | 4 Weeks 30°C | 4 Weeks 40°C | 4 Weeks 45°C |
| 6-27 | 12/4 | 13/5 | 12/4 | 12/4 | - | 12/4 | 12/4 | 13/5 | - |
| 6-28 | 14/4 | 14/3 | 12/3 | 15/4 | - | 14/3 | 12/3 | 14/3 | - |

(continued)

| According to the Invention and containing emulsifiers other than POVAL | Start | 2 Weeks RT | 2 Weeks 30°C | 2 Weeks 40°C | 2 Weeks 45°C | 4 Weeks RT | 4 Weeks 30°C | 4 Weeks 40°C | 4 Weeks 45°C |
|---|---|---|---|---|---|---|---|---|---|
| 6-29 | 13/3 | 14/3 | 11/3 | 14/2 | - | 14/3 | 11/3 | 14/3 | - |
| 6-30 | 11/4 | - | - | - | 11/4 | - | - | - | 11/4 |
| 6-31 | 13/3 | 13/3 | 1/3 | 13/3 | - | 13/3 | 10/3 | 13/3 | - |
| 6-32 | 10/2 | 10/2 | 10/2 | 10/2 | - | 10/2 | 10/2 | 10/2 | - |
| 6-37 | 14/3 | 14/4 | 13/3 | 14/3 | - | 13/4 | 14/3 | 14/3 | - |
| 6-38 | 13/3 | 15/3 | 11/3 | 13/2 | - | 14/3 | 11/2 | 13/2 | - |
| 6-41 | 14/3 | 13/4 | 11/3 | 13/3 | - | 12/3 | 11/3 | 13/3 | - |
| Comparative Example | Start | 2 Weeks RT | 2 Weeks 30°C | 2 Weeks 54°C | 2 Weeks 45°C | 4 Weeks RT | 4 Weeks 30°C | 4 Weeks 40°C | 4 Weeks 45°C |
| 7-1 | 1.2/0.7 | 1.6/0.8 | 1.5/0.9 | - | - | 1.6/0.9 | 2/1 | - | - |
| 7-3 | 14.1/7.9 | 14.1/7.8 | 14.1/7.9 | - | - | 13.9/8.0 | 14.4/8.2 | - | - |
| 7-4 | 0.9/0.5 | 1.0/0.6 | 1.2/0.6 | 6.6/0.8 | - | 1.4/0.7 | 1.7/0.7 | - | - |

**Comments to results in Table 10**

The formulations according to the invention do not show particle size growth, or if any, very limited. This is in contrast to the comparative SE formulations, which always show particle size growth due to the fact that in the SE formulations, the adjuvants are not encapsulated and as such they are directly available to contact the pyrethroid active ingredient. Upon contact with the pyrethroid, the adjuvants can dissolve the pyrethroid and start an Oswald ripening process which leads to the eventual particle size growth of the pyrethroid and a destabilization of the SE formulation, leading to potential settling down of the grown particles. This process is particularly visible for comparative examples 7-1 and 7-4, and less so for comparative example 7-3.

In contrast, most of the examples according to the invention are free of crystal growth, and those examples showing some growth, do this to a very small degree. The improved stabilization of the ZC formulations with respect to crystal growth can be attributed to the fact that the adjuvant in the ZC formulations is covered by the capsule's polymeric membrane. This prevents a direct physical contact between the adjuvant and the pyrethroid. This is not possible for the SE formulations, because the adjuvant is emulsified, covered by surfactants, and these emulsifiers do not pose a sufficiently strong barrier to the establishment of physical contacts between the adjuvant and the pyrethroid.

**Table 11: Separation evolution during storage**

| Formulation Ex. | Separation Percentage | | | | | | | | |
|---|---|---|---|---|---|---|---|---|---|
| According to the Invention | Start | 2 Weeks RT | 2 Weeks 30°C | 2 Weeks 40°C | 4 Weeks RT | 4 Weeks 30°C | 4 Weeks 40°C | 8 Weeks RT | 8 Weeks 45 |
| 6-1 | 0% | 0% | 0% | 0% | - | - | - | - | - |
| 6-3 | 0% | 0% | 0% | 0% | - | - | - | - | - |
| 6-7 | 0% | 4% | 8% | - | - | - | - | - | - |
| 6-8 | 0% | - | - | - | 0% | 0% | 0% | - | - |
| 6-9 | 0% | - | - | - | 0% | 0% | 0% | - | - |

(continued)

| Formulation Ex. | Separation Percentage | | | | | | | | |
|---|---|---|---|---|---|---|---|---|---|
| According to the Invention | Start | 2 Weeks RT | 2 Weeks 30°C | 2 Weeks 40°C | 4 Weeks RT | 4 Weeks 30°C | 4 Weeks 40°C | 8 Weeks RT | 8 Weeks 45 |
| 6-10 | 0% | - | - | - | 0% | 0% | 0% | - | - |
| 6-11 | 0% | - | - | - | 0% | 0% | 0% | - | - |
| 6-14 | 0% | - | - | - | 0% | 0% | 0% | - | - |
| 6-15 | 0% | - | - | - | 0% | 0% | 0% | - | - |
| 6-17 | 0% | - | - | - | 0% | 0% | 0% | - | - |
| 6-19 | 0% | 4% | 7% | 15% | - | - | - | - | - |
| 6-20 | 0% | 0% | 0% | 0% | - | - | - | - | - |
| 6-63 | 0% | 0% | 0% | 0% | 0% | - | - | 0% | 0% |
| 6-64 | 0% | - | - | - | - | - | - | 0% | 0% |
| 6-65 | 0% | - | - | - | 0% | - | - | 0% | 10% |
| 6-66 | 0% | - | - | - | 0% | - | - | 0% | 10% |
| 6-67 | 0% | 2% | 5% | - | 2% | 22% | - | - | - |
| 6-68 | 0% | 2% | 10% | - | 6% | 24% | - | - | - |
| 6-69 | 0% | 2% | 12% | - | 3% | 25% | - | - | - |
| 6-70 | 0% | 5% | 12% | - | 9% | 30% | - | - | - |
| 6-71 | 0% | 2% | 10% | - | 5% | 13% | - | - | - |
| 6-72 | 0% | 0% | - | - | - | - | - | - | - |
| Comparative Example | Start | 2 Weeks RT | 2 Weeks 30°C | 2 Weeks 54°C | - | - | | | |
| 7-1 | 0% | 0% | 0% | - | - | - | - | - | - |
| 7-3 | 0% | 0% | 0% | 96% | - | - | - | - | - |
| 7-4 | 0% | 0% | 0% | 93% | - | - | - | - | - |

**Table 12: Pyrethroid concentration evolution during storage**

| Formulation Example | Pyrethroid Content (% w/w) | | | | | | | | | | |
|---|---|---|---|---|---|---|---|---|---|---|---|
| According to the Invention | Start | 2 Weeks RT | 2 Weeks 30°C | 2 Weeks 40°C | 2 Weeks 45°C | 4 Weeks RT | 4 Weeks 30°C | 4 Weeks 40°C | 4 Weeks 45°C | 8 Weeks RT | 8 Weeks 45°C |
| 6-1 | 1.02% | 1.02% | 1.02% | 1.02% | - | - | - | - | - | - | - |
| 6-3 | 1.01% | 1.01% | 1.01% | 1.01% | - | - | - | - | - | - | - |
| 6-7 | 2.4% | 2.4% | 2.4% | - | - | - | - | - | - | - | - |
| 6-8 | 5.2% | - | - | - | - | 5.2% | 5.2% | 5.2% | - | - | - |
| 6-9 | 5.1% | - | - | - | - | 5.2% | 5.2% | 5.2% | - | - | - |
| 6-10 | 7.7% | - | - | - | - | 7.6% | 7.6% | 7.6% | - | - | - |
| 6-11 | 7.5% | - | - | - | - | 7.4% | 7.4% | 7.4% | - | - | - |
| 6-12 | 10.1% | - | - | - | - | 10.1% | 10.2% | 10.2% | - | - | - |

(continued)

| Formulation Example | Pyrethroid Content (% w/w) | | | | | | | | | | |
|---|---|---|---|---|---|---|---|---|---|---|---|
| According to the Invention | Start | 2 Weeks RT | 2 Weeks 30°C | 2 Weeks 40°C | 2 Weeks 45°C | 4 Weeks RT | 4 Weeks 30°C | 4 Weeks 40°C | 4 Weeks 45°C | 8 Weeks RT | 8 Weeks 45°C |
| 6-14 | 10.2% | - | - | - | - | 10.2% | 10.2% | 10.2% | - | - | - |
| 6-15 | 1.06% | - | - | - | - | 1.05% | 1.06% | 1.05% | - | - | - |
| 6-17 | 10.6% | - | - | - | - | 10.2% | 10.2% | 10.2% | - | - | - |
| 6-63 | 7.0% | - | - | - | - | 7.0% | - | - | 7.0% | 7.0% | 7.0% |
| 6-64 | - | - | - | - | - | 7.4% | - | - | 7.4% | - | - |
| 6-65 | - | - | - | - | - | - | - | - | - | 7.4% | 7.4% |
| 6-67 | 7.0% | 7.0% | 7.0% | - | 7.0% | - | - | - | - | - | - |
| 6-68 | 7.2% | 7.2% | 7.2% | - | 7.2% | - | - | - | - | - | - |
| 6-69 | 7.1% | 7.0% | 7.1% | - | 7.1% | - | - | - | - | - | - |
| 6-70 | 7.2% | 7.1% | 7.2% | - | 7.1% | - | - | - | - | - | - |
| 6-71 | 7.2% | 7.2% | 7.2% | - | 7.2% | - | - | - | - | - | - |
| 6-72 | 7.0% | 7.0% | - | - | 7.1% | 7.0% | - | - | 7.1% | - | - |
| Comparative Example | Start | 2WRT | 2W30 | 2W40 | - | 4WRT | 4W30 | 4W40 | - | | |
| 7-1 | 9.6% | 9.6% | 9.6% | - | - | 9.7% | 9.6% | - | - | - | - |

**Comments to results in Table 11 and Table 12**

Both comparative and according to the invention formulation examples show good to acceptable stability towards separation during storage and maintain a satisfactory homogeneity over time, as can be seen from the low to acceptable separation percentage. Only after 2 weeks at 54°C do the comparative examples show unacceptable separation.

Also, no significant changes in pyrethroid concentration can be detected during storage for either the comparative or the according to the invention formulation examples.

**Example 8 → Greenhouse Biological Activity of Formulations According to the Invention**

***Myzus persicae* - spray test**

Pepper plants (*Capsicum annuum*) or cabbage plants (*Brassica oleracea*) which are heavily infested by the green peach aphid (*Myzus persicae*) are treated by being sprayed with the formulation of the desired concentration.

After 7 days mortality in % is determined. 100 % means all the aphids have been killed; 0 % means none of the aphids have been killed.

***Aphis gossypii* - *spray test***

Cotton plants (Gossypium hirsutum) which are heavily infested by the cotton aphid (Aphis gossypii) are treated by being sprayed with the formulation diluted in water to the desired concentration of active ingredient.

After 7 days mortality in % is determined. 100 % means all the aphids have been killed; 0 % means none of the aphids have been killed.

***Leptinotarsa decemlineata* - spray test**

Potato leaves (*Solanum tuberosum*) are treated by being sprayed with the formulation of the desired concentration and are artificially infested with colorado potato beetles (*Leptinotarsa decemlineata*).

After 2 and 6 days mortality in % is determined. 100 % means all the beetles have been killed and 0 % means none of the beetles have been killed.

Tables 13-17 show that the ZC formulations according to the invention are substantially more active than the comparative SC Formulations, in spite of the fact that both formulations are made of colloidal solid particles of the pyrethroid.

Plutella xylostella - spray test

Cabbage leaves (Brassica oleracea) are treated by being sprayed with the formulation diluted in water to the desired concentration and are infested with larvae of the diamondback moth (Plutella xylostella).

After 2 days, mortality in % is determined. 100 % means all the caterpillars have been killed and 0 % means none of the caterpillars have been killed.

**Table 13 - Biological efficacy of pyrethroid EC, SC, ZC formulations against Myzus persicae**

| FL. Ex. | Formulation | Concentration Deltamethrin | Concentration of Adjuvant | MYZUPE/Pepper % Mortality 7 days after application | MYZUPE/cabbage % Mortality 7 days after application |
|---|---|---|---|---|---|
| 1-40 Comparative Example | Deltamethrin EC 100 | 4.8 g ai/ha | n/a | 100 | 96 |
| 1-16 Comparative Example | Deltamethrin SC 025 | 4.8 g ai/ha | n/a | 20 | 10 |
| 6-1 According to the invention | Deltamethrin ZC 010 | 4.8 g ai/ha | 48 g Disflamol TOF/ha | 92 | 83 |
| 6-21 According to the invention | Deltamethrin ZC 020 | 4.8 g ai/ha | 72 g Disflamol TOF/ha | 67 | 63 |

**Table 14- Biological efficacy of pyrethroid EC, SC, ZC formulations against Myzus persicae -**

| FL. Ex. | Formulation | Concentration Deltamethrin | Concentration of Adjuvant | MYZUPE/Pepper % Mortality 7 days after application | MYZUPE/cabbage % Mortality 7 days after application |
|---|---|---|---|---|---|
| 1-39 Comparative Example | Deltamethrin EC 025 | 0.96 g ai/ha | n/a | 100 | 95 |
| 1-16 Comparative Example | Deltamethrin SC 025 | 0.96 g ai/ha | n/a | 3 | 10 |
| 6-7 According to the invention | Deltamethrin ZC 025 | 0.96 g ai/ha | 1.8 g Disflamol TOF/ha | 53 | 50 |

**Table 15- Biological efficacy of pyrethroid EC, SC, ZC formulations against Leptinotarsa decemlineata**

| FL. Ex. | Formulation | Concentration Deltamethrin | Concentration of Adjuvant | LPTNDE/Potato % Mortality 2 days after application | LPTNDE/Potato % Mortality 6 days after application |
|---|---|---|---|---|---|
| 1-39 Comparative Example | Deltamethrin EC 025 | 0.6 g ai/ha | n/a | 53 | 100 |

(continued)

| FL. Ex. | Formulation | Concentration Deltamethrin | Concentration of Adjuvant | LPTNDE/Potato % Mortality 2 days after application | LPTNDE/Potato % Mortality 6 days after application |
|---|---|---|---|---|---|
| 1-16 Comparative Example | Deltamethrin SC 025 | 0.6 g ai/ha | n/a | 20 | 67 |
| 6-7 According to the invention | Deltamethrin ZC 025 | 0.6 g ai/ha | 1.1 g Disflamol TOF/ha | 40 | 87 |

**Table 16- Biological efficacy of pyrethroid EC, SC, ZC formulations against Myzus persicae/Aphis gossypii/Plutella xylostella**

| FL. Ex. | Formulation | Concentration Deltamethrin | Concentration of Adjuvant | MYZUPE/Pepper % Mortality 7 days after application | APHIGO/Cotton % Mortality 7 days after application | PLUTMA/Cabbage % Mortality 2 days after application |
|---|---|---|---|---|---|---|
| 1-40 Comparative Example | Deltamethrin EC 100 | 4.8 g ai/ha | n/a | 96 | 96 | 89 |
| 1-16 Comparative Example | Deltamethrin SC 025 | 4.8 g ai/ha | n/a | 33 | 20 | 33 |
| 6-8 According to the invention | Deltamethrin ZC 050 | 4.8 g ai/ha | 9.6 g Disflamol TOF/ha | 95 | 95 | 85 |
| 6-9 According to the invention | Deltamethrin ZC 050 | 4.8 g ai/ha | 28.8 g Disflamol TOF/ha | 95 | 75 | 100 |
| 6-12 According to the invention | Deltamethrin ZC 100 | 4.8 g ai/ha | 4.8 g Disflamol TOF/ha | 93 | 92 | 96 |
| 6-14 According to the invention | Deltamethrin ZC 100 | 4.8 g ai/ha | 14.4 g Disflamol TOF/ha | 97 | 97 | 96 |

**Table 17- Biological efficacy of pyrethroid EC, SC, ZC formulations against Myzus persicae/Aphis gossypii/**

| FL. Ex. | Formulation | Concentration Deltamethrin | Concentration of Adjuvant | MYZUPE/Pepper % Mortality 7 days after application | MYZUPE/cabbage % Mortality 7 days after application | APHIGO/Cotton % Mortality 7 days after application |
|---|---|---|---|---|---|---|
| 1-40 Comparative Example | Deltamethrin EC 100 | 4.8 g ai/ha | n/a | 100 | 98 | 100 |
| 1-16 Comparative Example | Deltamethrin SC 025 | 4.8 g ai/ha | n/a | 37 | 37 | 40 |
| 6-10 According to the invention | Deltamethrin ZC 075 | 4.8 g ai/ha | 11.6 g Disflamol TOF/ha | 99 | 86 | 90 |
| 6-11 According to the invention | Deltamethrin ZC 075 | 4.8 g ai/ha | 17.3 g Disflamol TOF/ha | 99 | 77 | 90 |

**Comments to results in Table 13-17**

As stated earlier, the pyrethroid biological activity is substantially dominated by the form in which the pyrethroid is formulated. Formulations containing dissolved pyrethroid are more biological active than those in which the active is presents in a colloidal solid form. As such, Deltamethrin EC formulation examples (emulsion concentrate, pyrethroid dissolved) show in Tables 13-17 always a higher biological efficacy (higher %mortality) than the comparative Deltamethrin SC (suspension concentrate, pyrethroid suspended as a solid in water) formulation example.

Surprisingly, the ZC formulation examples according to the invention are substantially more active than the comparative SC Formulations, even though both formulations are made of colloidal solid particles of the pyrethroid. The improved performance of the ZC formulations can be attributed to the presence in the formulation of the encapsulated adjuvant. The encapsulated adjuvant is released out of the capsules upon spraying of the formulation spray broth on the target plant/pest. The released adjuvant can then dissolve the solid particles of pyrethroid, thus turning the solid low active pyrethroid into a dissolved highly active pyrethroid. Crucially, this dissolving process occurs only when the formulation is applied on a biological system, and not during storage of the formulation. Otherwise, a substantial amount of crystal growth would be visible during storage of the formulation, and this is not the case (Table 10)

**Example 9 → Field Trial Biological Activity of Formulations According to the Invention**

The biological efficacy of the formulations according to the invention was evaluated under field testing conditions. In some cases, the formulations according to the invention showed a higher efficacy than the comparative example DLT EC 100 (Formulation Example 1-18, Table 18).

**Table 18- Field Trial testing of pyrethroid EC, ZC Formulations.**

| FL. Ex. | Formulation | Concentration DLT | Concentration of Adjuvant | Corn, *Ostrinia Nubialis,* GER, 2018 % Abbott 55 days after application | Corn, *Spodoptera frugiperda,* FRA, 2018 % Abbott 85 days after application | Corn, *Laphygma frugiperda,* FRA, 2018 % Abbott 68 days after application | Lettuce, *Nasonovia ribisnigri,* GER, 2018 % Abbott 7 days after 1st application | Dwarf Bean, *Aphis fabae,* FRA, 2018 % Abbott 7 days after 3rd application | Watermelon, *Aphis gossypii,* ESP, 2018 % Abbott 7 days after 1st application | Potato, *Leptinotarsa decemlineata,* GER, 2018 % Abbott 14 days after application |
|---|---|---|---|---|---|---|---|---|---|---|
| 1-40 Comparat ive Example | DLT EC 100 | 12.5 g ai/ha | - | 34 | 65 | 13 | 27 | 77 | 38 | 76 |
| 6-1 Accordin g to the invention | DLT ZC 010 | 12.5 g ai/ha | 180 g Disflamol TOF/ha | 75 | 69 | 60 | 92 | 92 | 36 | 87 |
| 6-2 Accordin g to the invention | DLT ZC 010 | 12.5 g ai/ha | 360 g Disflamol TOF/ha /ha | 53 | 69 | 13 | 88 | 42 | 36 | 87 |
| 6-3 Accordin g to the invention | DLT ZC 010 | 12.5 g ai/ha | 540 g Disflamol TOF/ha | 62 | 65 | 20 | 99 | 96 | 15 | 76 |
| 6-4 Accordin g to the invention | DLT ZC 020 | 12.5 g ai/ha | 188 g Disflamol TOF/ha | 84 | 63 | 20 | 96 | 69 | 40 | 82 |

**Comments to Results in Table 18**

In some cases, the formulations according to the invention showed a higher efficacy than the comparative example DLT EC 100 (Formulation Example 1-18, Table 18). This is surprising given that the comparative example contains highly biologically active dissolved pyrethroid, and the examples according to the invention contain low active suspended pyrethroid. The encapsulated adjuvant in the ZC according to the invention formulation examples is able to dissolve the pyrethroid after it has been applied on the target pest/plant

**Example 10 → Toxicological Properties of Formulations According to the Invention**

The detailed toxicity evaluation of formulation Deltamethrin ZC 025 (formulation example 6-7) is presented in this document. As can be seen in Table 19, the toxicological properties of the according to the invention ZC pyrethroid formulation are milder than those of the comparative EC/SC formulations. This is shown by the lower acute oral toxicity compared to the comparative EC 025 formulation (FL Example 1-17), and the absence of eye/skin irritation compared to the EC/SC pyrethroid comparative formulations in the screening assays.

The screening battery was conducted with Deltamethrin ZC 025 (formulation example 6-7)

- **Acute Oral Screening Toxicity Test** performed in male and female rats (n=3/sex) at 3 doses using corn oil as vehicle. All animals were observed individually during 6 hours after dosing and once daily for 14 days thereafter or until death. The acute oral median lethal dose (LD50) of SC was found to be greater than 520 mg/kg bw in Crl:WI Wistar rats based on the results of 6 treated animals. It is a non-GLP study, but it follows OECD No. 423.

- **In vitro skin irritation screening test in the reconstructed human epidermis EPISKIN model** (non-GLP study, but it follows OECD No. 439). Test item treated and negative control treated epidermis units (2 units/group) were exposed during 15 min. 42 hours later cell proliferation and viability were measured. Following exposure with Deltamethrin ZC 025, the mean cell viability was 79.7% compared to the negative control. This is above the threshold of 50%, therefore the test item was considered as being non-irritant to skin.

- **In Vitro Eye Irritation Screening Test in Isolated Chicken Eyes** (non-GLP study). The irritation effects were evaluated according to the OECD No.: 438 but with a reduced number of eyes (n= 2/group). Corneal thickness and corneal opacity were measured pre-treatment and at approximately 30, 75, 120, 180 and 240 minutes after test item application onto the centre of the cornea during 10 sec before PBS rinse. Fluorescein retention was measured on two occasions, at base line (t=0) and approximately 30 minutes after the posttreatment rinse. Following exposure with Deltamethrin ZC 025, it was noted no significant corneal swelling during the four-hour observation period, no significant corneal opacity change (severity 0.5) and no significant fluorescein retention change (0.5). Based on this in vitro eye irritation in the isolated chicken eyes test, the test item is non-irritant to the eye.

**Table 19 - Toxicological endpoints**

| FL. Ex. | Formulation | Acute Oral LD50 | Eye Irritation | *In vitro* Skin Irritation |
|---|---|---|---|---|
| 1-39 (Comparative) | Deltamethrin EC 025 (MSDS 102*2563) | 416 mg/kg bw | Severe eye irritant (in vivo test) | Irritating to skin |
| 1-40 (Comparative) | Deltamethrin EC 100 (MSDS, 102*2876) | 633 mg/kg bw | Severe eye irritant (in vivo test) | Non irritant |
| 1-1 (Comparative) | Deltamethrin SC 200 (MSDS, 102*5509) | >3000 mg/kg bw | Non irritant (in vivo test) | Slight irritant |
| 6-7 (According to the invention) | Deltamethrin ZC 025 (102*34755) | >520 mg/kg bw (non-GLP) | Non irritant (Non-GLP) | Non-irritant (non-GLP) |

**Comments to Results in Table 19**

As can be seen in Table 19, the toxicological properties of the according to the invention ZC pyrethroid formulation are milder than those of the comparative EC/SC formulations. This is shown by the lower acute oral toxicity compared to the comparative EC 025 formulation (comparative formulation Example 1-39), and the absence of eye/skin irritation compared to the EC/SC pyrethroid comparative formulations in the screening assays.

Importantly, the improved toxicological profile of the according to the invention ZC formulation example 6-7 does not come at the expense of lower technical stability, as can be seen by the absence of crystal growth during storage (Table 10).

Also, the milder toxicological profile does not correlate with lower biological efficacy (Tables 13-18): in the contrary, in Table 18, the formulation examples according to the invention are more often more biologically active than EC formulation comparative examples, which have a higher acute toxicity than the according to the invention ZC formulation examples.

In summary, we have now surprisingly found that ZC formulations made up of milled colloidal pyrethroids and encapsulated adjuvant/adjuvant mixtures are surprisingly capable of selectively enhancing the insecticidal efficacy of pyrethroid suspension concentrates against insects, without increasing the mammalian toxicity of the formulation. That is, according to the invention, pyrethroid ZC formulations behave like a pyrethroid EC formulation against agricultural relevant pests (results in Tables 13-18) but show a significant improvement in mammalian toxicology than the comparable pyrethroid EC formulations (results in Table 19).

**Results of acute toxicity testing for comparative DLT formulations**

| Type of study | Results | References |
|---|---|---|
| **Deltamethrin EC 100 specification no. 102000002876** | | |
| Acute oral toxicity, rat | $LD_{50}$ = 633 mg/kg - Cat 4 | M-152537-01-1<br>OECD 401, GLP |
| Skin irritation, rabbit | Non irritant | M-152535-01-1<br>OECD 404, GLP |
| Eye irritation, rabbit | Severe eye irritation - Cat 1 | M-152536-01-1<br>OECD 405, GLP |
| **Deltamethrin EC 025, specification no. 102000002563** | | |
| Acute oral toxicity, rat | $LD_{50}$ = 431 mg/kg - Cat 4 | M-134175-01-1<br>USEPA (=EPA): 81-1 , GLP |
| Skin irritation, rabbit | Irritating to skin | M-149674-01-1<br>USEPA (=EPA): 81-5, GLP |
| **Type of study** | **Results** | **References** |
| Eye irritation, rabbit | Severe eye irritation - Cat 1 | M-149683-01-1<br>USEPA (=EPA): 81-4, GLP |
| **DELTAMETHRIN SC 200, Specification no. .102000011049** | | |
| Acute oral toxicity, rat | LD50 > 3.000 mg/kg | M-194347-01-1<br>Non-GLP; No Guideline study |
| Skin irritation, rabbit | Slight irritant effect - does not require labelling | M-194343-01-1<br>Non-GLP; Not stated in report, but is in agreement with OECD 404, 1992 |
| Eye irritation, rabbit | No eye irritation | M-194342-01-1<br>Non-GLP; Not stated in report, but is in agreement with OECD 405, 1987 |

**DELTAMETHRIN ZC 025, SPECIFICATION NO. 102000034755.**

**Table 20- Results of acute toxicity testing on Deltamethrin ZC 025, specification no. 102000034755-01.**

| Type of study | Results | References |
|---|---|---|
| Acute oral screening toxicity, rat | No mortality at 520 mg/kg bw<br>50% mortality at 2000 mg/kg bw | M-600506-01-1<br>Non-GLP |
| In vitro skin irritation screening test in the EPISKIN (SM) model | Non-irritant | M-603114-02-1<br>Non-GLP |
| In vitro eye irritation screening test in isolated chicken eyes | Non-irritant | M-603105-02-1<br>Non-GLP |

## Claims

1. Capsule suspension concentrate comprising

    A) a particulate disperse Phase comprising

        a) a capsule obtained by reaction of an isocyanate optionally reacted with a crosslinker,
        b) the capsule comprising an adjuvant or adjuvant mixture, wherein the adjuvant or adjuvant mixture is selected from the group consisting of "trialkyl phosphate" according to Figure 1, where R1, R2 and R3 can be equal or different. R1, R2, R3 can be any C1-C10 alkyl fragment

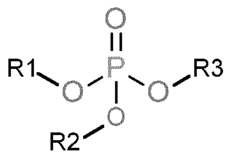

Figure 1

        or from a mixture of trialkyl phosphates according to Figure 1 mixed with vegetable oil alkyl esters.

    B) an aqueous Phase comprising a finely dispersed pyrethroid.

2. Capsule suspension concentrate according to claim 1 wherein the trialkyl phosphate is Tris(2-ethylhexyl) phosphate.

3. Capsule suspension concentrate according to claim 1, wherein the mixture is a mixture of Tris(2-ethylhexyl) phosphate and rape seed oil methyl ester.

4. Capsule suspension concentrate according to any of the preceding claims, wherein the pyrethroid is selected from the group consisting of Acrinathrin, Allethrin, d-cis-trans Allethrin, d-trans Allethrin, Bifenthrin, Bioallethrin, Bioallethrin S-cyclopentenyl, Bioresmethrin, Cycloprothrin, Cyfluthrin, beta-Cyfluthrin, Cyhalothrin, lambda-Cyhalothrin, gamma-Cyhalothrin, Cypermethrin, alpha-Cypermethrin, beta-Cypermethrin, theta-Cypermethrin, zeta-Cypermethrin, Cyphenothrin [(1R)-trans- isomers], Deltamethrin, Empenthrin [(EZ)- (1R)- isomers], Esfenvalerate, Etofenprox, Fenpropathrin, Fenvalerate, Flucythrinate, Flumethrin, tau-Fluvalinate, Kadathrin, Pyrethrins (pyrethrum), Halfenprox, Phenothrin [(1R)-trans- isomer], Prallethrin, Resmethrin, Silafluofen, Tefluthrin, Tetramethrin, Tetramethrin [(1R)-isomers], Tralomethrin, Transfluthrin, Permethrin.

5. Capsule suspension concentrate according to any of the preceding claims, further comprising in the aqueous phase

    c) one or more dispersants,
    d) optionally one or more wetting agents,
    e) one or more rheological modifiers,
    f) one or more isocyanates
    g) optionally one or more cross linkers
    h) one or more emulsifiers.

6. Capsule suspension concentrate according to any of the preceding claims, further comprising in the aqueous phase

c) one or more dispersants,
d) optionally one or more wetting agents,
e) one or more rheological modifiers,f) one or more isocyanates
g) optionally one or more cross linkers
h) one or more emulsifier, and
optionally further components selected from i) pH-Buffers, j) antifoams, k) biocides and l) antifreeze adjuvants and l) antioxidants.

**7.** Capsule suspension concentrate according to any of the preceding claims, further comprising in the aqueous phase

c) one or more dispersants,
d) one or more wetting agents,
e) one or more rheological modifiers,
f) one or more isocyanates
g) one or more cross linkers
h) one or more emulsifier, and
optionally further components selected from i) pH-Buffers, j) antifoams, k) biocides and l) antifreeze adjuvants.

**8.** Capsule suspension concentrate according to any of the preceding claims, wherein the dispersed pyrethroid is present in 0.5 % w/w to 20 % w/w based on the total weight of the formulation, preferably in the range of 0.75-15 % w/w, and most preferred in the range of 1-10% w/w.

**9.** Capsule suspension concentrate according to any of the preceding claims 1-8 comprising the components:

the adjuvant/adjuvant mixture in the concentration range of 1-60 %w/w,
the dispersant in the concentration range of 0.5-10 % w/w,
the wetting agent in the concentration range of 0-10 %w/w, preferably from 1-10% w/w,
the isocyanate in the concentration range of 0.01-2.0% w/w,
the emulsifier in the concentration range of 0.001-0.5% w/w,
the rheology control agent in the concentration range of 0.01%-0.8% w/w,
and water to 100% w/w.

**10.** Capsule suspension concentrate according to any of the preceding claims 1-8 comprising the components:

the adjuvant/adjuvant mixture in the concentration range of 1-60 %w/w,
the dispersant in the concentration range of 1-30 % w/w,
the wetting agent in the concentration range of 0-10 %w/w, preferably from 1-10% w/w
the isocyanate in the concentration range of 0.01-2.0% w/w,
the emulsifier in the concentration range of 0.001-0.5% w/w,
the rheology control agent in the concentration range of 0.01%-0.8% w/w,
and water to 100% w/w.

**11.** Capsule suspension concentrate according to any of the preceding claims 1-8 comprising the components:

the adjuvant/adjuvant mixture in the concentration range of 1-60 %w/w,
the dispersant in the concentration range of 1-30 % w/w,
the wetting agent in the concentration range of 0-10 %w/w, preferably from 1-10% w/w
the isocyanate in the concentration range of 0.1-2.0% w/w,
the emulsifier in the concentration range of 0.001-0.5% w/w,
the rheology control agent in the concentration range of 0.01%-0.8% w/w,
and water to 100% w/w.

**12.** Capsule suspension concentrate according to any of the preceding claims 1-8 comprising the components:

the adjuvant/adjuvant mixture in the concentration range of 1-60 %w/w,
the dispersant in the concentration range of 1-30 % w/w,
the wetting agent in the concentration range of 0-10 %w/w, preferably from 1-10% w/w

the isocyanate in the concentration range of 0.1-2.0% w/w,
the emulsifier in the concentration range of 0.001-0.5% w/w,
the rheology control agent in the concentration range of 0.01%-0.8% w/w,
the pH buffer agent in the concentration range of 0-1% w/w,
the antifoam as in the concentration range of 0.01-0.1 % w/w.
the biocide as in the concentration range of 0.01-0.2% w/w.
the antifreeze as in the concentration range of 1-10% w/w.
the antioxidant as in the concentration range of 0.01-0.1% w/w
and water as filler to 100% w/w.

**13.** Capsule suspenscion concentrate according to any of claims 9 - 12 additionally comprising a cross linker in the concentration range of 0.05-2.0% w/w.

**14.** Process for production of a capsule suspension concentrate according to claims 1 - 7, **characterized in that** a pyrethroid suspension concentrate SC is mixed with an adjuvant capsule suspension CS.

**15.** Capsule suspension concentrate obtained by a process according to claim 14, **characterized in that** the ratio of SC:CS is from 90:10% w/w to a 30:70% w/w.

**Patentansprüche**

**1.** Kapselsuspensionskonzentrat, umfassend

A) eine teilchenförmige disperse Phase umfassend

a) eine Kapsel, erhalten durch Reaktion eines Isocyanats, das gegebenenfalls mit einem Vernetzer umgesetzt wurde,
b) die Kapsel umfasst ein Adjuvans oder Adjuvansgemisch, wobei das Adjuvans oder Adjuvansgemisch aus der Gruppe bestehend aus "Trialkylphosphat" gemäß Abbildung 1 ausgewählt ist, wobei R1, R2 und R3 gleich oder verschieden sein können und R1, R2, R3 beliebige C1-C10-Alkylfragmente sein können

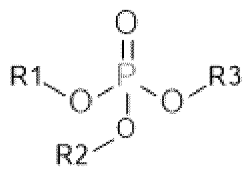

**Abbildung 1**

oder aus einer Mischung von Trialkylphosphaten gemäß Abbildung 1 gemischt mit Pflanzenölalkylestern,

B) eine wässrige Phase, die ein fein dispergiertes Pyrethroid umfasst.

**2.** Kapselsuspensionskonzentrat nach Anspruch 1, wobei das Trialkylphosphat Tris(2-ethylhexyl)phosphat ist.

**3.** Kapselsuspensionskonzentrat nach Anspruch 1, wobei das Gemisch ein Gemisch aus Tris(2-ethylhexyl)phosphat und Rapsölmethylester ist.

**4.** Kapselsuspensionskonzentrat nach einem der vorhergehenden Ansprüche, wobei das Pyrethroid ausgewählt ist aus der Gruppe bestehend aus Acrinathrin, Allethrin, d-cis-trans Allethrin, d-trans Allethrin, Bifenthrin, Bioallethrin, Bioallethrin S-cyclopentenyl, Bioresmethrin, Cycloprothrin, Cyfluthrin, beta-Cyfluthrin, Cyhalothrin, lambda-Cyhalothrin, gamma-Cyhalothrin, Cypermethrin, alpha-Cypermethrin, beta-Cypermethrin, theta-Cypermethrin, zeta-Cypermethrin, Cyphenothrin [(1R)-trans- Isomere], Deltamethrin, Empenthrin [(EZ)- (1R)-Isomere], Esfenvalerat, Etofenprox, Fenpropathrin, Fenvalerat, Flucythrinat, Flumethrin, tau-Fluvalinat, Kadathrin, Pyrethrine (Pyrethrum), Halfenprox, Phenothrin [(1R)-trans- Isomer], Prallethrin, Resmethrin, Silafluofen, Tefluthrin, Tetramethrin, Tetramethrin [(1R)- Isomere], Tralomethrin, Transfluthrin, Permethrin.

**5.** Kapselsuspensionskonzentrat nach einem der vorhergehenden Ansprüche, umfassend in der wässrigen Phase

ferner

c) ein oder mehrere Dispergiermittel,
d) gegebenenfalls ein oder mehrere Benetzungsmittel,
e) ein oder mehrere Rheologiemodifizierer,
f) ein oder mehrere Isocyanate
g) gegebenenfalls ein oder mehrere Vernetzer
h) ein oder mehrere Emulgatoren.

**6.** Kapselsuspensionskonzentrat nach einem der vorhergehenden Ansprüche, umfassend in der wässrigen Phase ferner

c) ein oder mehrere Dispergiermittel,
d) gegebenenfalls ein oder mehrere Benetzungsmittel,
e) ein oder mehrere Rheologiemodifizierer,
f) ein oder mehrere Isocyanate
g) gegebenenfalls ein oder mehrere Vernetzer
h) ein oder mehreren Emulgatoren, und
gegebenenfalls weitere Komponenten, ausgewählt aus i) pH-Puffern, j) Entschäumern, k) Bioziden und l) Frostschutzmitteln und l) Antioxidantien.

**7.** Kapselsuspensionskonzentrat nach einem der vorhergehenden Ansprüche, umfassend in der wässrigen Phase ferner

c) ein oder mehrere Dispergiermittel,
d) ein oder mehrere Benetzungsmittel,
e) ein oder mehrere Rheologiemodifizierer,
f) ein oder mehrere Isocyanate
g) ein oder mehrere Vernetzer
h) ein oder mehreren Emulgatoren, und
gegebenenfalls weitere Komponenten, ausgewählt aus i) pH-Puffern, j) Entschäumungsmitteln, k) Bioziden und l) Frostschutzmitteln.

**8.** Kapselsuspensionskonzentrat nach einem der vorhergehenden Ansprüche, wobei das dispergierte Pyrethroid in einer Menge von 0,5 Gew.-% bis 20 Gew.-%, bezogen auf das Gesamtgewicht der Formulierung, vorliegt, bevorzugt im Bereich von 0,75-15 Gew.-% und am meisten bevorzugt im Bereich von 1-10 Gew.-%.

**9.** Kapselsuspensionskonzentrat nach einem der vorhergehenden Ansprüche 1-8 umfassend die Komponenten:

das Adjuvans/Adjuvans-Gemisch im Konzentrationsbereich von 1-60 Gew.-%,
das Dispergiermittel im Konzentrationsbereich von 0,5-10 Gew.-%,
das Benetzungsmittel im Konzentrationsbereich von 0-10 Gew.-%, vorzugsweise von 1-10 % Gew.-%,
das Isocyanat im Konzentrationsbereich von 0,01-2,0 Gew.-%,
den Emulgator im Konzentrationsbereich von 0,001-0,5 Gew.-%,
den Rheologiemodifizierer im Konzentrationsbereich von 0,01-0,8 Gew.-%,
und Wasser bis 100 Gew.-%.

**10.** Kapselsuspensionskonzentrat nach einem der vorhergehenden Ansprüche 1-8 umfassend die Komponenten:

das Adjuvans/Adjuvans-Gemisch im Konzentrationsbereich von 1-60 % Gew.-%,
das Dispergiermittel im Konzentrationsbereich von 1-30 % Gew.-%,
das Benetzungsmittel im Konzentrationsbereich von 0-10 Gew.-%, vorzugsweise von 1-10 Gew.-%,
das Isocyanat im Konzentrationsbereich von 0,01-2,0 Gew.-%,
der Emulgator im Konzentrationsbereich von 0,001-0,5 Gew.-%,
den Rheologiemodifizierer im Konzentrationsbereich von 0,01-0,8 Gew.-%,
und Wasser bis 100 Gew.-%.

**11.** Kapselsuspensionskonzentrat nach einem der vorhergehenden Ansprüche 1-8 umfassend die Komponenten:

das Adjuvans/Adjuvans-Gemisch im Konzentrationsbereich von 1-60 Gew.-%,
das Dispergiermittel im Konzentrationsbereich von 1-30 Gew.-%,
das Benetzungsmittel im Konzentrationsbereich von 0-10 Gew.-%, vorzugsweise von 1-10 Gew.-%,
das Isocyanat im Konzentrationsbereich von 0,1-2,0 Gew.-%,
der Emulgator im Konzentrationsbereich von 0,001-0,5 Gew.-%,
den Rheologiemodifizierer im Konzentrationsbereich von 0,01-0,8 Gew.-%,
und Wasser bis 100 Gew.-%.

**12.** Kapselsuspensionskonzentrat nach einem der vorhergehenden Ansprüche 1-8 umfassend die Komponenten:

das Adjuvans/Adjuvans-Gemisch im Konzentrationsbereich von 1-60 Gew.-%,
das Dispergiermittel im Konzentrationsbereich von 1-30 Gew.-%,
das Benetzungsmittel im Konzentrationsbereich von 0-10 Gew.-%, vorzugsweise von 1-10 Gew.-%,
das Isocyanat im Konzentrationsbereich von 0,1-2,0 Gew.-%,
der Emulgator im Konzentrationsbereich von 0,001-0,5 Gew.-%,
den Rheologiemodifizierer im Konzentrationsbereich von 0,01-0,8 Gew.-%,
den pH-Puffer im Konzentrationsbereich von 0-1 Gew.-%,
das Antischaummittel im Konzentrationsbereich von 0,01-0,1 Gew.-%,
das Biozid im Konzentrationsbereich von 0,01-0,2 Gew.-%,
das Frostschutzmittel im Konzentrationsbereich von 1-10 Gew.-%,
das Antioxidationsmittel im Konzentrationsbereich von 0,01-0,1 Gew.-%,
und Wasser als Füllstoff bis 100 Gew.-%.

**13.** Kapselsuspensionskonzentrat nach einem der Ansprüche 9 - 12, das zusätzlich einen Vernetzer im Konzentrationsbereich von 0,05-2,0 Gew.-% umfasst.

**14.** Verfahren zur Herstellung eines Kapselsuspensionskonzentrats nach den Ansprüchen 1 - 7, **dadurch gekennzeichnet, dass** ein Pyrethroid-Suspensionskonzentrat SC mit einer Adjuvans-Kapselsuspension CS gemischt wird.

**15.** Kapselsuspensionskonzentrat, erhalten durch ein Verfahren nach Anspruch 14, **dadurch gekennzeichnet, dass** das Gewichtsverhältnis SC:CS von 90:10 bis 30:70 beträgt.

**Revendications**

**1.** Suspension concentrée en capsule comprenant

A) une Phase de dispersion de particules comprenant

a) une capsule obtenue par réaction d'un isocyanate optionnellement réagi avec un réticulant,
b) la capsule comprenant un adjuvant ou un mélange d'adjuvants, dans lequel l'adjuvant ou le mélange d'adjuvants est choisi dans le groupe constitué de "phosphate de trialkyle" selon la figure 1, où R1, R2 et R3 peuvent être égaux ou différents. R1, R2, R3 peuvent être des fragments d'alkyle en C1-C10.

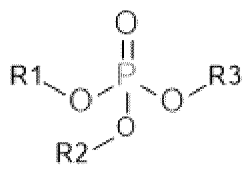

**Figure 1**

ou d'un mélange de trialkyl phosphates selon la figure 1 mélangé à des esters d'alkyle d'huile végétale.

B) une Phase aqueuse comprenant un pyréthrinoïde finement dispersé.

**2.** Suspension concentrée en capsule selon la revendication 1, dans laquelle le phosphate de trialkyle est le phosphate

de tris(2-éthylhexyle).

3. Suspension concentrée en capsule selon la revendication 1, caratérisée en ce que le mélange est un mélange de phosphate de Tris(2-éthylhexyle) et d'ester méthylique d'huile de colza.

4. Suspension concentrée en capsule selon l'une quelconque des revendications précédentes, dans laquelle le pyréthroïde est constitué par l'Acrinathrine, l'Alléthrine, l'Alléthrine d-cis-trans, l'Alléthrine d-trans, la Bifenthrine, la Bioalléthrine, la Bioalléthrine S-cyclopentényle, la Bioresméthrine, la Cycloprothrine, la Cyfluthrine, la beta-Cyfluthrine, la Cyhalothrine, la lambda-Cyhalothrine, la gamma-Cyhalothrine, la Cyperméthrine, l'alpha-Cyperméthrine, la beta-Cyperméthrine, la thêta-Cyperméthrine, la zêta-Cyperméthrine, les Cyphénothrine [(1R)-trans-isomères], la Deltaméthrine, les Empenthrine [(EZ)- (1R)- isomères], l'Esfenvalérate, l'Etofenprox, la Fenpropathrine, la Fenvalérate, la Flucythrinate, la Fluméthrine, la tau-Fluvalinate, la Kadathrine, les Pyréthrines (pyrèthre), l'Halfenprox, la Phénothrine [(1R)-transisomère], la Pralléthrine, la Resméthrine, la Silafluofen, la Téfluthrine, la Tétraméthrine, les Tétraméthrine [(1R)-isomères], la Tralométhrine, la Transfluthrine, la Perméthrine.

5. Suspension concentrée en capsule selon l'une quelconque des revendications précédentes, comprenant en outre dans la phase aqueuse

   c) un ou plusieurs dispersants,
   d) optionnellement un ou plusieurs agents mouillants,
   e) un ou plusieurs modificateurs rhéologiques,
   f) un ou plusieurs isocyanates
   g) optionnellement un ou plusieurs réticulants
   h) un ou plusieurs émulsifiants.

6. Suspension concentrée en capsule selon l'une quelconque des revendications précédentes, comprenant en outre dans la phase aqueuse

   c) un ou plusieurs dispersants,
   d) optionnellement un ou plusieurs agents mouillants,
   e) un ou plusieurs modificateurs rhéologiques,
   f) un ou plusieurs isocyanates
   g) optionnellement un ou plusieurs réticulants
   h) un ou plusieurs émulsifiants, et
   éventuellement d'autres composants choisis parmi i) les tampons pH, j) les antimousses, k) les biocides et l) les adjuvants antigel et l) les antioxydants.

7. Suspension concentrée en capsule selon l'une quelconque des revendications précédentes, comprenant en outre dans la phase aqueuse

   c) un ou plusieurs dispersants,
   d) un ou plusieurs agents mouillants,
   e) un ou plusieurs modificateurs rhéologiques,
   f) un ou plusieurs isocyanates
   g) un ou plusieurs réticulants
   h) un ou plusieurs émulsifiants, et
   éventuellement d'autres composants choisis parmi i) les tampons pH, j) les antimousses, k) les biocides et l) les adjuvants antigel.

8. Suspension concentrée en capsule selon l'une quelconque des revendications précédentes, dans laquelle le pyréthroïde dispersé est présent à raison de 0,5 % p/p à 20 % p/p par rapport au poids total de la formulation, de préférence entre 0,75 à 15 % p/p, et de manière plus préférée entre 1 à 10 % p/p.

9. Suspension concentrée en capsuleselon l'une quelconque des revendications précédentes 1 à 8 comprenant les composants :

   le mélange adjuvant/adjuvant dont la concentration est comprise entre 1-60 % p/p,
   le dispersant dont la concentration est comprise entre 0,5 et 10 % p/p,

l'agent mouillant dont la concentration est comprise entre 0-10 % p/p, de préférence entre 1-10 % p/p,
l'isocyanate dont la concentration est comprise entre 0,01 à 2,0 % p/p,
l'émulsifiant dont la concentration est comprise entre 0,001-0,5 % p/p,
l'agent de contrôle de la rhéologie dont la concentration est comprise entre 0,01%-0,8% p/p,
et de l'eau jusqu'à 100 % p/p.

**10.** Suspension concentrée en capsule selon l'une quelconque des revendications précédentes 1 à 8 comprenant les composants :

le mélange adjuvant/adjuvant dont la concentration est comprise entre 1 à 60 % p/p,
le dispersant dont la concentration est comprise entre 1 et 30 % p/p,
l'agent mouillant dont la concentration est comprise entre 0-10 % p/p, de préférence entre 1-10 % p/p
l'isocyanate dont la concentration est comprise entre 0,01-2,0 % p/p,
l'émulsifiant dont la concentration est comprise entre 0,001 et 0,5 % p/p,
l'agent de contrôle de la rhéologie dont la concentration est comprise entre 0,01 %-0,8 % p/p,
et de l'eau jusqu'à 100 % p/p.

**11.** Suspension concentrée en capsule selon l'une quelconque des revendications précédentes 1 à 8 comprenant les composants :

le mélange adjuvant/adjuvant dont la concentration est comprise entre 1 à 60 % p/p,
le dispersant dont la concentration est comprise entre 1 et 30 % p/p,
l'agent mouillant dont la concentration est comprise entre 0-10 % p/p, de préférence entre 1-10 % p/p
l'isocyanate dont la concentration est comprise entre 0,1 à 2,0 % p/p,
l'émulsifiant dont la concentration est comprise entre 0,001 et 0,5 % p/p,
l'agent de contrôle de la rhéologie dont la concentration est comprise entre 0,01 %-0,8 % p/p,
et de l'eau jusqu'à 100 % p/p.

**12.** Suspension concentrée en capsule selon l'une quelconque des revendications précédentes 1 à 8 comprenant les composants :

le mélange adjuvant/adjuvant dont la concentration est comprise entre 1 à 60 % p/p,
le dispersant dont la concentration est comprise entre 1 et 30 % p/p,
l'agent mouillant dont la concentration est comprise entre 0-10 % p/p, de préférence entre 1-10 % p/p
l'isocyanate dont la concentration est comprise entre 0,1 à 2,0 % p/p,
l'émulsifiant dont la concentration est comprise entre 0,001 et 0,5 % p/p,
l'agent de contrôle de la rhéologie dont la concentration est comprise entre 0,01 % à 0,8 % p/p,
l'agent tampon de pH dont la concentration est comprise entre 0-1% p/p,
l'antimousse dont la concentration est comprise entre 0,01 à 0,1 % p/p.
le biocide dont la concentration est comprise entre 0,01-0,2 % p/p.
l'antigel dont la concentration est comprise entre 1 à 10 % p/p.
l'antioxydant dont la concentration est comprise entre 0,01-0,1 % p/p.
et l'eau comme agent de remplissage jusqu'à 100 % p/p.

**13.** Suspension concentrée en capsule selon l'une des revendications 9 à 12 comprenant en outre un réticulant dont la concentration est comprise entre 0,05 à 2,0 % p/p.

**14.** Procédé de fabrication d'une suspension concentrée en capsule selon les revendications 1 à 7, **caractérisé en ce qu'**une suspension concentrée en pyréthroïde SC est mélangée à une suspension en capsule adjuvante CS.

**15.** Suspension concentrée en capsule obtenue par un procédé selon la revendication 14, **caractérisée en ce que** le rapport SC:CS est de 90:10 % p/p à 30:70 % p/p.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2012055810 A
- WO 9712515 A
- WO 03099005 A
- EP 1531667 A


### Non-patent literature cited in the description


- Toxicology and Mode of Action of Pyrethroid Insecticides. Hayes' Handbook of Pesticide Toxicology;. Elsevier, 2010
- *Progress in Plant Protection*, 1996, vol. 36 (2), 105-107
- **IAN- D. MORRISON** ; **SYDNEY ROSS;**. Colloidal Dispersions. Suspensions, Emulsions and Foams;. Wiley-Interscience, 2002
- **D. FENNELL EVANS** ; **HÅKAN WENNERSTRÖM;**. The Colloidal Domain: Where Physics, Chemistry, Biology, and Technology Meet;. Wiley-VCH, 1999
- **W. OSTWALD**. Über die vermeintliche Isomerie des roten und gelben Quecksilberoxyds und die Oberflächenspannung fester Körper. *Zeitschrift fir Physikalische Chemie-Leipzig*, 1900, vol. 34, 495-503
- *CHEMICAL ABSTRACTS*, 67762-38-3
- Chemistry and Technology of Surfactants. Blackwell, 2006